# EUROPEAN PATENT SPECIFICATION

(11) **EP 3 687 222 B1**
(45) Date of publication and mention of the grant of the patent: **19.07.2023**
(21) Application number: 18869521.7
(22) Date of filing: 22.10.2018
(51) Int. Cl.: H04W 48/10, H04W 88/04, H04W 84/04, H04W 40/22, H04W 40/24, H04B 7/15

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(30) Priority: 27.10.2017 CN 201711023741
(43) Date of publication of application: 29.07.2020
(73) Proprietor: Huawei Technologies Co., Ltd., Longgang District Shenzhen, Guangdong 518129 (CN)
(72) Inventor: SHI, Xiaoli, Shenzhen Guangdong 518129 (CN); LIU, Jing, Shenzhen Guangdong 518129 (CN); DAI, Mingzeng, Shenzhen Guangdong 518129 (CN); WANG, Rui, Shenzhen Guangdong 518129 (CN); ZHU, Yuanping, Shenzhen Guangdong 518129 (CN)
(74) Representative: Epping - Hermann - Fischer
(86) International application number: PCT/CN2018/111234
(87) International publication number: WO 2019/080800

(56) References cited:
- EP-A1- 2 426 960
- CN-A- 101 483 886
- CN-A- 106 604 315
- CN-A- 107 113 916
- US-A1- 2011 044 233
- US-A1- 2011 268 016
- US-A1- 2012 220 214
- US-A1- 2015 365 876
- TEXAS INSTRUMENTS: "On the design of relay node for LTE-advanced", 3GPP DRAFT; R1-090593, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318480, [retrieved on 2009-02-03]
- QUALCOMM Incorporated: "Considerations on 5G relay requirements", 3GPP TSG RAN ad hoc RPa160054, 29 January 2016 (2016-01-29), pages 1-4, XP055594370,
- CATT: "Wireless relay in 5G NR", 3GPP TSG RAN3 #91bis R3-160778, 15 April 2016 (2016-04-15), XP051083036,
- NOKIA: "On the wireless relay operation in NR", 3GPP TSG-RAN WG1 Meeting #85 Rl-165031, 27 May 2016 (2016-05-27), XP051090124,

## Description

### TECHNICAL FIELD

This application relates to the field of wireless communications technologies, and in particular, to an information transmission method and device.

### BACKGROUND

A fifth-generation mobile communications system (fifth-generation mobile communication system, 5G) has a stricter requirement on network performance indicators than a fourth-generation mobile communications system (The fourth generation mobile communication system, 4G). For example, the fifth-generation mobile communications system requires a capacity index to be increased by 1000 times, has a wider coverage requirement, and requires ultra-high reliability, an ultra-low latency, and the like. In one aspect, because there are abundant high-frequency carrier frequency resources, in a hotspot area, to meet an ultra-high capacity requirement of 5G, high-frequency small cell networking is generally used. To resolve a problem that a high frequency carrier is characterized by relatively poor propagation, is severely attenuated due to blocking, and has a small coverage area, generally, a large quantity of dense small cells need to be deployed. However, if the large quantity of dense small cells are deployed, high fiber backhaul costs and a high construction difficulty are caused. Therefore, an economical and convenient backhaul solution is required. In another aspect, from a perspective of a requirement for wide coverage, if network coverage is to be provided in some remote areas, fiber deployment is difficult and expensive, and a flexible and convenient access solution and backhaul solution also need to be designed. Therefore, to resolve the foregoing problem, in a wireless relay (Relay) technology, a wireless transmission solution is used for both an access link (Access Link) and a backhaul link (Backhaul Link), to avoid optical fiber deployment.

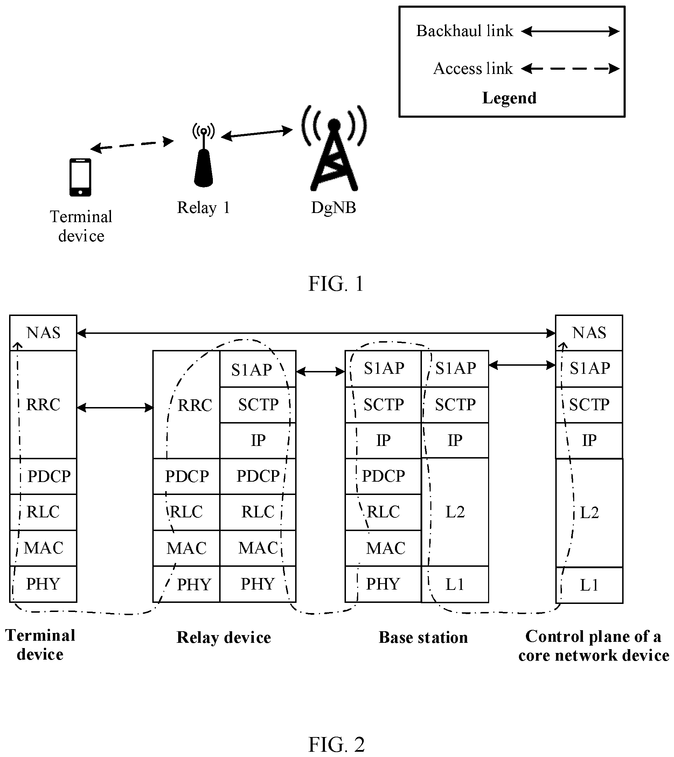

A relay technology is introduced in long term evolution (Long Term Evolution, LTE) R10. In an L3 protocol stack architecture shown in FIG. 1, a relay node (Relay Node, RN) is introduced between a donor eNodeB (Donor eNB, DeNB) and a terminal device in a conventional network structure, and the newly added RN and the DeNB are wirelessly connected. Specifically, as shown in FIG. 1, the RN accesses the DeNB by using a backhaul link, and the RN communicates with the terminal device by using an access link. The terminal device may use a relay cell as an accessible independent cell, the RN may directly schedule a terminal device in the relay cell, and a terminal device within coverage of the DeNB may directly access a donor cell.

However, an R10 relay supports only a simple deployment scenario of a single-hop RN, and only a network access process of a single-hop RN in an L3 protocol stack architecture (L3 architecture for short below) is described. A network access process of an RN in another protocol stack architecture (for example, an L2 protocol stack architecture (L2 architecture for short below) and an L2-L3 hybrid protocol stack architecture (hybrid protocol stack architecture for short below)) and a multi-hop RN scenario are not involved. Consequently, more diversified requirements for a future network cannot be met.

US 2015/365876 A1 discloses a method for generating routing paths in a multi-hop network. The multi-hop network includes a base station, at least one relay station, and at least one non-relay mobile station. The routing paths are paths between the base station and the at least one non-relay mobile station via the at least one relay station. The base station broadcasts a path discovery message (PDM) including a path list with a starting point of the path list being the base station. Each of the relay stations receives the PDM and updates the PDM by adding their own respective node identifier to the path list and broadcasting the updated PDM. The PDMs eventually reach the non-relay mobile station. The non-relay mobile stations reply to the base station by sending the base station the updated path list between the base station and the non-relay mobile station. In some embodiments the base station or the at least one non-relay mobile station acting as a source node sends a dynamic service (DSx) message including an end-to-end path list to an end of path destination. The relay stations use the path list to forward the message between the source node and the end of path destination. In some implementations the multi-hop network operates in a manner that is consistent with any one of: IEEE 802.16, IEEE 802.16d, and IEEE 802.16e.

US 2011/044233 A1 discloses a method for efficiently updating system information of a base station at a relay station of a broadband wireless access system and an apparatus for performing the method. The method for updating system information of an advanced base station (ABS) at an advanced relay station (ARS) of a broadband wireless access system comprises receiving a first message, which includes changed information of the system information of the base station, from the base station; transmitting a second message for acknowledgment of the first message to the base station; and performing application for the changed information.

US 2011/268016 A1 discloses a frame structure supporting a relay and a method of transmitting control information for supporting a relay system. The method of transmitting control information for supporting a relay system comprises configuring a frame to which the relay system is applied; and transmitting a first message to one or more of a mobile station and relay stations, the first message including offset information indicating a beginning time of the frame and zone allocation information indicating configuration of the frame. In this case, a downlink zone of the frame includes a downlink transmit zone and a downlink access zone.

EP 2426960 A1 discloses a paging method that can reduce signaling overhead during system paging and save system paging resources. The method includes: a base station receives a paging message, which carries a tracking area (TA) identification; if the TA identification in the paging message is the TA identification of the base station, the base station pages terminals; and if the TA identification in the paging message is the TA identification of a relay station managed by the base station, the base station instructs the relay station to page the terminals. Also disclosed is a location update method, which can reduce signaling load caused by location updating. The method includes: the relay station generates a system message, which includes the TA identification of the relay station; the relay station broadcasts the system message, and prompts the terminal entering a cell managed by the relay station to initiate a location update request.

US 2012/220214 A1 discloses a method and apparatus for the provision of paging messages in a wireless network which includes relays. The method comprises that a base station receives a paging message and transmits the paging message to at least one relay node with or without processing, and the at least one relay node transmits the paging message to a user equipment with or without modification.

The paper "On the design of relay node for LTE-advanced" (R1-090593) from the 3GPP TSG RAN WG1 #56 Meeting discusses relay nodes and classification thereof in LTE-A design. According to said document, a Master Information Block (MIB) is transmitted on physical broadcast channel (PBCH) in the first subframe of each radio frame. SIB1 is transmitted on PDSCH in the sixth subframe of each even numbered radio frame. In order for a Rel-8 UE to connect to a relay, RN shall transmit MIB and SIBs in the same approach. In the case eNB and RN broadcast identical system information, donor eNB can update the contents of BCCH, which shall be relayed to the UE. In one approach, relay listens to PBCH and the PDSCH containing SIBs transmitted by the eNB. Due to the inherent processing delays, RN cannot transmit the updated system information in the same subframe as eNB.

### SUMMARY

This application provides an information transmission method, an apparatus and a computer-readable storage medium according to the attached claims, to resolve a problem in the prior art that a requirement for a future network cannot be met because only network access of a single-hop RN is supported. In the following, parts of the description and drawings referring to embodiments which are not covered by the claims are not presented as embodiments of the invention, but as examples useful for understanding the invention

To resolve the foregoing technical problem, the following technical solutions are used in this application:
According to a first aspect, an embodiment of this application provides an information transmission method, including: receiving, by a first device, a first message that is sent by a base station and that includes first indication information and system information, where the first indication information is used to indicate whether the first device broadcasts the system information; broadcasting, by the first device, the system information if the first device determines, according to the first indication information, that the system information needs to be broadcast; allocating, by the first device, a first identifier (for example, the first identifier may be a CRNTI) of a target device to the target device in a random access process of the target device, where the first identifier is used to identify the target device in a first cell, and the first cell is a cell accessed by the first device in the random access process; sending, by the first device, the first identifier to the base station, and forwarding a second message sent by the target device, where the second message is used to request to set up a radio resource control RRC connection between the base station and the target device; receiving, by the first device, a third message sent by the base station, where the third message includes resource configuration information and second indication information used to determine a target device to which the resource configuration information is to be transmitted; and sending, by the first device, the resource configuration information to the target device if the first device determines, according to the second indication information, that the target device is not the first device.

This application provides an information transmission method. The base station sends the first message to the first device that has accessed the base station, and adds the first indication information to the first message. In this way, after receiving the first message, the first device may determine, according to the first indication information, whether the first device needs to broadcast the system information, and the first device broadcasts the system information when determining that the first device needs to broadcast the system information. In this way, a device that receives the system information broadcast by the first device, such as, a target device, may access the base station based on the system information by using the first device, thereby implementing a process in which the target device accesses the base station by using the first device. In addition, when the method is applied to a scenario in which there are a plurality of (including two) relay devices between the base station and a terminal device, each of the plurality of relay devices between the base station and the terminal device may access the base station by using the foregoing solution based on each previous-hop relay device accessed by the relay device. Therefore, a plurality of relay devices can be deployed between the terminal device and the base station, to form a multi-hop relay network architecture, so that increasing communication requirements can be met, and costs of an operator can also be compromised, for example, provision of network coverage in some remote areas is avoided. It may be understood that, in an actual process, in the random access process of the target device, the first device further allocates an uplink resource to the target device, and the second message is sent by the target device to the first device on the uplink resource. After receiving the system information, the target device may send, to the base station in the random access process by using the first device that has accessed the base station, the second message that is sent by the target device to request to set up the radio resource control RRC connection between the base station and the target device. In this way, after receiving the second message, the base station may set up the RRC connection between the base station and the target device. In this case, the target device may successfully access the base station.

With reference to the first aspect, in a first possible implementation of the first aspect, the first indication information is a first indicator, and the first indicator is used to instruct the first device to broadcast the system information. The first message carries the first indicator and the system information. In this way, after parsing the first message, the first device may determine, based on the first indicator, that the system information needs to be broadcast, and therefore the first device broadcasts the system information. A multi-hop architecture between the target device and the base station is used, so that the resource configuration information configured by the base station for the target device can be forwarded to the target device through multi-hop transmission. According to the first aspect, the resource configuration information includes first resource configuration information and second resource configuration information, where the first configuration information is used to configure at least one of a packet data convergence protocol PDCP layer and a service data adaptation protocol SDAP layer of the target device, and the second configuration information is used to configure at least one of a radio link control RLC layer, a media access control MAC layer, and a physical PHY layer of the target device; or the first resource configuration information is generated by the base station, and the second resource configuration information is generated by the base station or the first device. It may be understood that when the second resource configuration information is generated by the first device, the first device sends the generated second resource configuration information to the base station. After the target device accesses the base station, the target device can update radio resource configuration in a timely manner by using the first resource configuration information and the second resource configuration information that are configured by the base station for the target device. This manner is applicable to an L2 architecture, and is also applicable to a hybrid protocol stack architecture. The method provided in this application is further applicable to the L2 architecture, and in the L2 architecture, the first device has at least one of an RLC layer, a media access control MAC layer, and a physical PHY layer. Therefore, the first device may generate the second resource configuration information. However, in the L2 architecture, the first device has an RRC layer only when the first device is used as a relay, and therefore, the first device can only forward, to a next-hop device such as the target device, the second resource configuration information sent by the base station. Therefore, after the first device generates the second resource configuration information, the first device may be used as a terminal device to send the second resource configuration information to the base station, and forward the second resource configuration information to the target device in a form of a relay station under the instruction of the base station. In this manner, a manner of generating the second resource configuration information is diversified, and the solution provided in this application is also applicable to different protocol stack architectures.

With reference to any one of the first aspect to the second possible implementation of the first aspect, in a third possible implementation of the first aspect, the first device receives a fourth message that is sent by the base station and that is used to instruct the first device to page a terminal device in a tracking area TA in a paging occasion PO; and the first device pages the terminal device in the TA in the paging occasion PO if the first device determines that the first device belongs to the TA, or if the first device determines that there is a candidate device that is in next-hop devices of the first device and that belongs to the TA, the first device sends a fifth message to the candidate device, where the fifth message is used to instruct to page the terminal device in the TA in the PO. When the terminal device accesses the base station by using a plurality of hops of relay devices, and the terminal device changes from a connected mode to an idle mode, when the base station needs to page the terminal device, the base station does not know a relay device accessed by the terminal device. Therefore, the base station may send the fourth message to at least one relay device that has accessed the base station, to page the terminal device in a specified PO by using the at least one relay device.

With reference to any one of the first aspect to the third possible implementation of the first aspect, in a fourth possible implementation of the first aspect, before the paging, by the first device, the terminal device in the TA in the paging occasion PO if the first device determines that the first device belongs to the TA, the method provided in this application further includes: the fourth message carries at least the paging PO, and before the paging, by the first device, the terminal device in the TA in the paging occasion PO, the method provided in this application further includes: determining, by the first device, the paging PO from the fourth message; or the fourth message includes a second identifier of the terminal device, a discontinuous reception period specific to the terminal device, and a cell-specific discontinuous reception period, and before the paging, by the first device, the terminal device in the TA in the paging occasion PO, the method provided in this application further includes: determining, by the first device, the paging PO based on the second identifier, the discontinuous reception period specific to the terminal device, and the cell-specific discontinuous reception period. In this way, the first device can determine the paging PO in a more flexible manner.

With reference to any one of the first aspect to the fourth possible implementation of the first aspect, in a fifth possible implementation of the first aspect, the first device receives a fourth message sent by the base station, where the fourth message includes a paging PO, an identifier of the terminal device, and third indication information, and the third indication information is used to instruct to send the paging PO and a second identifier of the terminal device to the target device; and the first device sends the paging PO and the second identifier of the terminal device to the target device according to the third indication information. This manner is applicable to a scenario in which the base station knows that a TA in which paged terminal device is located is a TA in which the target device is located. Therefore, when the base station needs to page the terminal device, the base station may directly send the second identifier of the paged terminal device and the PO to the target device by using the first device.

With reference to any one of the first aspect to the fifth possible implementation of the first aspect, in a sixth possible implementation of the first aspect, the method provided in this application further includes: adding fourth indication information to a signaling radio bearer SRB between the first device and the base station, where the fourth indication information is used to indicate whether the system information or the fourth message is transmitted on the SRB in a current transmission time unit. The SRB carries the fourth indication information. Specifically, the fourth indication information is carried at an adaptation layer in a protocol stack that is of the base station and that is peer to the first device. In this way, the first device can determine, on the SRB according to the fourth indication information, whether the system information or a paging message is transmitted on the SRB in the current transmission time unit, to correctly obtain corresponding content from the SRB through parsing.

With reference to any one of the first aspect to the sixth possible implementation of the first aspect, in a seventh possible implementation of the first aspect, the first device determines at least one association relationship from the following association relationships: an association relationship between a radio bearer between the first device and the base station and a radio bearer between the first device and the target device, an association relationship between service information and the radio bearer between the first device and the target device, and an association relationship between the service information and the radio bearer between the first device and the base station, where the at least one association relationship is used by the first device to determine a specified radio bearer for transmitting a target data packet, and the target data packet may be sent by the base station to the first device, or may be sent by the terminal device to the first device. By determining the at least one association relationship, the first device can select, after receiving the target data packet, the specified radio bearer from a plurality of radio bearers to transmit the target data packet. With reference to any one of the first aspect to the seventh possible implementation of the first aspect, in an eigth possible implementation of the first aspect, the at least one association relationship is generated by the base station and then sent to the first device, or the at least one association relationship is generated by a previous-hop relay device of the first device and then sent to the first device.

With reference to any one of the first aspect to the eigth possible implementation of the first aspect, in a ninth possible implementation of the first aspect, the target device is a terminal device, and the method provided in this application further includes: selecting, by the first device, an encryption algorithm for the target device; and sending, by the first device, a sixth message to the base station, and sending an identifier of the encryption algorithm to the target device, where the sixth message includes the identifier of the encryption algorithm and a third identifier of the target device, and the encryption algorithm is used to encrypt data transmitted between the base station and the target device. The first device selects the encryption algorithm for the target device, and sends the identifier of the selected encryption algorithm to the base station and the terminal device, so that the base station and the terminal device can determine an encryption manner of the data transmitted between the base station and the target device.

With reference to any one of the first aspect to the ninth possible implementation of the first aspect, in a tenth possible implementation of the first aspect, the target device is a terminal device, and the method provided in this application further includes: receiving, by the first device, fifth indication information and an encryption algorithm that are sent by the base station, where the fifth indication information is to instruct to send an identifier of the encryption algorithm to the target device; and sending, by the first device, the identifier of the encryption algorithm to the target device according to the fifth indication information, where the encryption algorithm is used to encrypt data transmitted between the base station and the target device. After selecting the encryption algorithm, the base station sends the selected encryption algorithm to the terminal device by using a multi-hop relay architecture between the base station and the terminal device, so that the terminal device can encrypt, based on the encryption algorithm selected by the base station, the data transmitted between the base station and the target device.

Correspondingly, according to a second aspect, an embodiment of this application further provides an information transmission apparatus, and the information transmission apparatus may implement the information transmission method described in any implementation of the first aspect. For example, the apparatus may be a first device, or may be a chip disposed in the first device, and may implement the foregoing method by using software or hardware, or by using hardware by executing corresponding software.

In a possible design, the information transmission apparatus may include a processor and a memory. The processor is configured to support the information transmission apparatus in performing corresponding functions in the information transmission method described in the first aspect. The memory is configured to be coupled to the processor, and stores a program (instruction) and data that are necessary for the information transmission apparatus. In addition, the information transmission apparatus may further include a communications interface, configured to support communication between the information transmission apparatus and another network element (for example, a base station, a next-hop information transmission apparatus, or a terminal device), and the communications interface may be a transceiver.

In a possible design of the second aspect, the information transmission apparatus may include a receiving unit and a sending unit. The receiving unit is configured to receive a first message sent by the base station, where the first message includes first indication information and system information, and the first indication information is used to indicate whether the first device broadcasts the system information. The first device broadcasts the system information if the first device determines, according to the first indication information, that the system information needs to be broadcast.

With reference to the second aspect, the information transmission apparatus provided in this application further includes an allocation unit, configured to allocate a first identifier of a target device to the target device in a random access process of the target device, where the first identifier is used to identify the target device in a cell accessed in the random access process of the target device. The sending unit is further configured to: send the first identifier to the base station, and forward a second message sent by the target device, where the second message is used to request to set up a radio resource control RRC connection between the base station and the target device. With reference to the second aspect, the receiving unit is further configured to receive a third message sent by the base station, where the third message includes resource configuration information and second indication information, and the second indication information is used to determine a target device to which the resource configuration information is to be transmitted. The apparatus provided in this application further includes a processing unit, configured to determine, according to the second indication information, whether the target device is the first device. The sending unit is further configured to send the resource configuration information to the target device when the processing unit determines that the target device is not the first device.

According to the second aspect, the resource configuration information includes first resource configuration information and second resource configuration information. The receiving unit is further configured to receive the first resource configuration information and the second resource configuration information that are generated by the base station, where the first resource configuration information is used to configure at least one of a packet data convergence protocol PDCP layer and a service data adaptation protocol SDAP layer of the target device, and the second resource configuration information is used to configure at least one of a radio link control RLC layer, a media access control MAC layer, and a physical PHY layer of the target device; or the receiving unit is further configured to: receive the first resource configuration information generated by the base station, and receive the second resource configuration information generated by the first device and sent by the base station. The processing unit is further configured to generate the second resource configuration information, and the sending unit is further configured to send the second resource configuration information to the base station after the processing unit generates the second resource configuration information.

With reference to any one of the second aspect to the first possible implementation of the second aspect, in a second possible implementation of the second aspect, the target device is a terminal device, the receiving unit is further configured to receive a fourth message that is sent by the base station and that is used to instruct to page a terminal device in a tracking area TA in a paging occasion PO, and the processing unit is further configured to page the terminal device in the TA in the paging PO when the first device determines that the first device belongs to the TA, or the sending unit is further configured to: if the processing unit determines that there is a candidate device that is in next-hop devices of the first device and that belongs to the TA, send a fifth message to the candidate device, where the fifth message is used to instruct to page the terminal device in the TA in the PO.

With reference to any one of the second aspect to the second possible implementation of the second aspect, in a third possible implementation of the second aspect, the fourth message carries at least the paging PO, and the processing unit is further configured to determine the paging PO from the fourth message; or the fourth message includes a second identifier of the terminal device, a discontinuous reception period specific to the terminal device, and a cell-specific discontinuous reception period, and the processing unit is further configured to determine the paging PO based on the second identifier, the discontinuous reception period specific to the terminal device, and the cell-specific discontinuous reception period.

With reference to any one of the second aspect to the third possible implementation of the second aspect, in a fourth possible implementation of the second aspect, the target device is a terminal device; the receiving unit is further configured to receive a fourth message sent by the base station, where the fourth message includes a paging PO, an identifier of the terminal device, and third indication information, and the third indication information is used to instruct the first device to send the paging PO and the identifier of the terminal device to the target device; and the sending unit is further configured to send the paging PO and the identifier of the terminal device to the target device.

With reference to any one of the second aspect to the fourth possible implementation of the second aspect, in a fifth possible implementation of the second aspect, a signaling radio bearer SRB between the first device and the base station carries fourth indication information, and the fourth indication information is used to indicate whether the system information or the fourth message is transmitted on the SRB in a current transmission time unit.

With reference to any one of the second aspect to the fifth possible implementation of the second aspect, in a sixth possible implementation of the second aspect, the processing unit is further configured to determine at least one association relationship from the following association relationships: an association relationship between a radio bearer between the first device and the base station and a radio bearer between the first device and the target device, an association relationship between service information and the radio bearer between the first device and the target device, and an association relationship between the service information and the radio bearer between the first device and the base station, where the at least one association relationship is used by the first device to determine a specified radio bearer for transmitting a target data packet. With reference to any one of the second aspect to the sixth possible implementation of the second aspect, in a seventh possible implementation of the second aspect, the receiving unit is further configured to receive the at least one association relationship generated by the base station, or the receiving unit is further configured to receive the at least one association relationship generated by a previous-hop relay device of the first device.

With reference to any one of the second aspect to the seventh possible implementation of the second aspect, in an eigth possible implementation of the second aspect, the target device is a terminal device, the processing unit is further configured to select an encryption algorithm for the target device, and the sending unit is further configured to: send a sixth message to the base station, andsend an identifier of the encryption algorithm to the target device, where the sixth message includes the identifier of the encryption algorithm and a third identifier of the target device, and the encryption algorithm is used to encrypt data transmitted between the base station and the target device.

With reference to any one of the second aspect to the eigth possible implementation of the second aspect, in a ninth possible implementation of the second aspect, the receiving unit is further configured to receive fifth indication information and an encryption algorithm that are sent by the base station, where the fifth indication information is used to instruct to send an identifier of the encryption algorithm to the target device; and the sending unit is further configured to send the identifier of the encryption algorithm to the target device according to the fifth indication information, where the encryption algorithm is used to encrypt data transmitted between the base station and the target device.

According to a third aspect, this application provides a computer readable storage medium. The computer readable storage medium stores an instruction. When the instruction is executed by a computer, the computer performs the information transmission method described in any one of the first aspect or the optional implementations of the first aspect.

According to the solutions provided in the embodiments of this application, the first device that has accessed the base station can be fully used to forward the first indication information and the system information of the base station, to complete a process in which another relay device (for example, the target device) or a terminal device accesses the base station by using the first device. For example, the first device that has accessed the base station is used to forward the first indication information and the system information, thereby implementing a process in which a next-hop device of the first device accesses the base station. Therefore, a plurality of relay devices can be deployed between user equipment and the base station, so that increasing communication requirements can be met, and costs of an operator can also be compromised. For example, a problem that fiber deployment is difficult and expensive if network coverage is to be provided in some remote areas is avoided. A corresponding device and system are also provided in the embodiments of this application.

### BRIEF DESCRIPTION OF DRAWINGS

FIG. 1 is a schematic diagram of a single-hop network architecture in the prior art;
FIG. 2 is a schematic diagram of a control plane protocol stack architecture of an R10 relay in the prior art;
FIG. 3 is a schematic diagram of a user plane protocol stack architecture of an R10 relay in the prior art;
FIG. 4 is a schematic diagram of a multi-hop network architecture according to an embodiment of this application;
FIG. 5 is a schematic structural diagram of a base station according to an embodiment of this application;
FIG. 6 is a schematic diagram of another multi-hop network architecture according to an embodiment of this application;
FIG. 7 is a schematic diagram of a control plane protocol stack architecture of an L2 protocol stack in a multi-hop network architecture according to an embodiment of this application;
FIG. 8 is a schematic diagram of a user plane protocol stack architecture of an L2 protocol stack in a multi-hop network architecture according to an embodiment of this application;
FIG. 9 is a schematic diagram of a control plane protocol stack architecture of an L3 protocol stack in a multi-hop network architecture according to an embodiment of this application;
FIG. 10 is a schematic diagram of a user plane protocol stack architecture of an L3 protocol stack in a multi-hop network architecture according to an embodiment of this application;
FIG. 11 is a schematic diagram of a control plane protocol stack architecture of an L3 protocol stack in another multi-hop network architecture according to an embodiment of this application;
FIG. 12 is a schematic diagram of a user plane protocol stack architecture of an L3 protocol stack in another multi-hop network architecture according to an embodiment of this application;
FIG. 13 is a schematic flowchart 1 of an information transmission method according to an embodiment of this application;
FIG. 14A to FIG. 14D are a schematic flowchart 2 of an information transmission method according to an embodiment of this application;
FIG. 15A to FIG. 15D are a schematic flowchart 3 of an information transmission method according to an embodiment of this application;
FIG. 16A to FIG. 16E are a schematic flowchart 4 of an information transmission method according to an embodiment of this application;
FIG. 17 is a schematic diagram of bearer mapping according to an embodiment of this application;
FIG. 18 is a schematic diagram of a control plane transmission procedure in an L2 architecture according to an embodiment of this application;
FIG. 19 is a schematic diagram of a user plane transmission procedure in an L2 architecture according to an embodiment of this application;
FIG. 20 is a schematic diagram of a control plane transmission procedure in a hybrid protocol stack architecture according to an embodiment of this application;
FIG. 21 is a schematic diagram of a user plane transmission procedure in a hybrid protocol stack architecture according to an embodiment of this application;
FIG. 22 is a schematic diagram of a key configuration procedure between relay devices according to an embodiment of this application;
FIG. 23 is a schematic structural diagram 1 of a first device according to an embodiment of this application;
FIG. 24 is a schematic structural diagram 2 of a first device according to an embodiment of this application; and
FIG. 25 is a schematic structural diagram 3 of a first device according to an embodiment of this application.

### DESCRIPTION OF EMBODIMENTS

A system architecture and a service scenario that are described in this application are intended to more clearly describe the technical solutions in this application, and do not limit the technical solutions provided in this application. A person of ordinary skill in the art may learn that the technical solutions provided in this application are also applicable to a similar technical problem with evolution of the system architecture and emergence of a new service scenario.

It should be noted that, in this application, the word "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

"Of (English: of)", "corresponding (English: corresponding or relevant)", and "corresponding (English: corresponding)" may be interchangeably used sometimes. It should be noted that meanings expressed by "of" and "corresponding" are consistent when differences are not emphasized.

FIG. 2 shows a control plane protocol stack architecture of an existing R10 relay, and the control plane protocol stack architecture is applied to a network structure shown in FIG. 1. As shown in FIG. 2, a protocol stack of a terminal device (the terminal device is used as an example) includes a non-access stratum (non-access stratum, NAS) stratum, a radio resource control (radio resource control, RRC) layer, a packet data convergence protocol (Packet Data Convergence Protocol, PDCP) layer, a radio link control (Radio Link Control, RLC) layer, a media access control (Media Access Control, MAC) layer, and a physical layer (physical layer, PHY). A relay device includes a first protocol stack that is peer to the terminal device and a second protocol stack that is peer to a base station, where the first protocol stack includes an RRC layer, a PDCP layer, an RLC layer, a MAC layer, and a PHY layer from top to bottom, and the second protocol stack includes an S1 application protocol (S1 Application Protocol, S1AP) layer, a stream control transmission protocol (Stream Control Transmission Protocol, SCTP) layer, an internet protocol (internet protocol, IP) layer, a PDCP layer, an RLC layer, a MAC layer, and a PHY layer from top to bottom. The base station includes a third protocol stack that is peer to the second protocol stack of the relay device and a fourth protocol stack that is peer to a core network device (for example, a mobility management entity (mobility management entity, MME) in long term evolution (Long Term Evolution, LTE)), where the third protocol stack includes an S1AP layer, an SCTP layer, an IP layer, a PDCP layer, an RLC layer, a MAC layer, and a PHY layer from top to bottom, and the fourth protocol stack includes an S1AP layer, an SCTP layer, an IP layer, an L (Layer) 2 layer, and an L1 layer from top to bottom. A protocol stack of the core network device includes a NAS stratum, an S1AP layer, an SCTP layer, an IP layer, an L2 layer, and an L1 layer from top to bottom. The L1 layer is a physical layer, and the L2 layer is a data link layer. For example, the L1 layer is a physical layer defined in an open system interconnection reference model (open system interconnection reference model, OSI), and the L2 layer is a data link layer (data link layer, DLL) defined in the OSI.

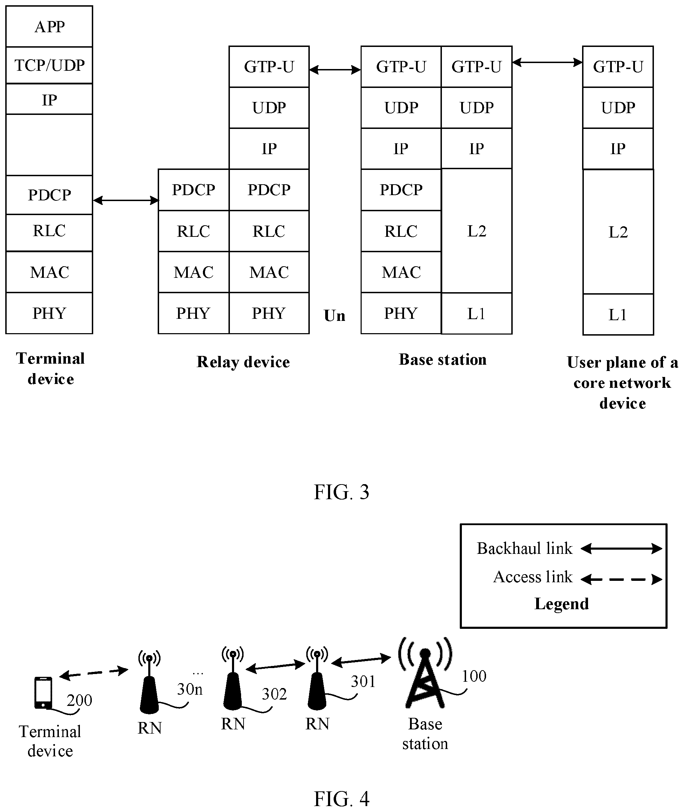

FIG. 3 shows a user plane protocol stack architecture of an R10 relay. A protocol stack of a terminal device includes an application (Application, App) layer, a transmission control protocol (Transmission Control Protocol, TCP)/user datagram protocol (User Datagram Protocol, UDP) layer, an IP layer, a PDCP layer, an RLC layer, a MAC layer, and a PHY layer. A relay device includes a fifth protocol stack that is peer to the terminal device and a sixth protocol stack that is peer to a base station, where the fifth protocol stack includes a PDCP layer, an RLC layer, a MAC layer, and a PHY layer from top to bottom, and the sixth protocol stack includes a GPRS tunneling protocol-user plane (GPRS Tunneling Protocol-User Plane, GTP-U) layer, a user datagram protocol (User datagram protocol, UDP) layer, an IP layer, a PDCP layer, an RLC layer, a MAC layer, and a PHY layer from top to bottom. The base station includes a seventh protocol stack that is peer to the sixth protocol stack and an eighth protocol stack that is peer to a core network device, where the seventh protocol stack includes a GTP-U layer, a UDP layer, an IP layer, a PDCP layer, an RLC layer, a MAC layer, and a PHY layer from top to bottom, and the eighth protocol stack includes a GTP-U layer, a UDP layer, an IP layer, an L2 layer, and an L1 layer from top to bottom. A protocol stack of the core network device includes a GTP-U layer, a UDP layer, an IP layer, an L2 layer, and an L1 layer that are peer to the eighth protocol stack.

In the R10 relay, only a network access process in a layer 3 (Layer 3, L3) protocol stack architecture (L3 architecture for short below) scenario is supported, and another protocol stack architecture such as an L2 protocol stack architecture (L2 architecture for short below) scenario is not involved. In a multi-hop wireless relay network, a multi-hop networking latency of the L3 architecture is greater than a multi-hop networking latency of the L2 architecture. Therefore, research of a multi-hop networking scenario of the L2 architecture also needs to be considered. FIG. 4 is a schematic diagram of a communications system. The communications system may include at least one base station 100 (only one is shown), one or more terminal devices 200 (only one is shown) connected to the base station 100, and a plurality of relay nodes (Relay Node, RN) between the base station 100 and the terminal device 200, such as, an RN 301, an RN 302, and an RN 30n shown in FIG. 4, where n is an integer greater than or equal to 2.

The RN is wirelessly connected to both the terminal device 200 and the base station 100. For example, a wireless interface between the RN and the base station 100 is a Un interface. For example, a wireless interface between the RN 301 and the base station 100 is a Un interface. A wireless interface between RNs is a Un interface. For example, a wireless interface between the RN 301 and the RN 302 is a Un interface. A link between a next-hop RN (for example, the RN 301) of the base station and the base station 100 is referred to as a backhaul link (Backhaul Link), an interface between the terminal device 200 and an RN connected to the terminal device 200 or an interface between the terminal device 200 and the base station 100 is a Uu interface, and a link between the terminal device 200 and the base station/RN is referred to as an access link (Access Link), such as, a link between the terminal device 200 and the previous-hop RN 302 of the terminal device 200.

The RN is configured to forward data and signaling between the base station 100 and the terminal device 200. Generally, the base station 100 may also be used as a donor (Donor) base station. In a new air interface or a 5G (New Radio, NR) system, the donor base station may be a donor gNodeB (Donor gNodeB, DgNB). In an LTE system, the donor base station may be a donor eNodeB (Donor eNodeB, DeNB). Certainly, the donor base station may also be referred to as a gNB or an eNB for short.

In an actual communication process, the RN is used as a base station, and is used as a terminal device for processing during access authentication and when performing some security functions. When the RN is used as a terminal device, the RN may access a wireless network like the terminal device. During access of the terminal device, a network side performs user authentication and key agreement (Authentication and Key Agreement, AKA) on the terminal device. In the LTE system, this process is also referred to as an evolved packet system (Evolved Packet System, EPS). Generally, the RN is used as a base station for a terminal device served by the RN, and is used as a terminal device for a base station that serves the RN. For example, in an architecture shown in FIG. 4, in a downlink transmission process, downlink data sent by a core network device first arrives at the base station 100, and then is transferred by the base station 100 to a next-hop RN (for example, the RN 301) of the base station 100, and the next-hop RN then transmits the downlink data to the terminal device 200 by using an RN (for example, the RN 302) between the next-hop RN and the terminal device 200. In an uplink, a case is opposite.

The base station 100 may be a device that communicates with the terminal device 200, and the base station 100 may be a relay station, an access point, or the like. The base station 100 may be a base transceiver station (base transceiver station, BTS) in a global system for mobile communications (global system for mobile communication, GSM) or a code division multiple access (code division multiple access, CDMA) network, or may be a 3G base station (NodeB, NB) in wideband code division multiple access (wideband code division multiple access, WCDMA), or may be an eNB or eNodeB (evolutional NodeB) in LTE. Alternatively, the base station 100 may be a radio controller in a cloud radio access network (cloud radio access network, CRAN) scenario. The network device 100 may alternatively be a network device in a 5G network or a network device in a future evolved network, for example, a next-generation base station (NR NodeB, gNB), or may be a wearable device, an in-vehicle device, or the like.

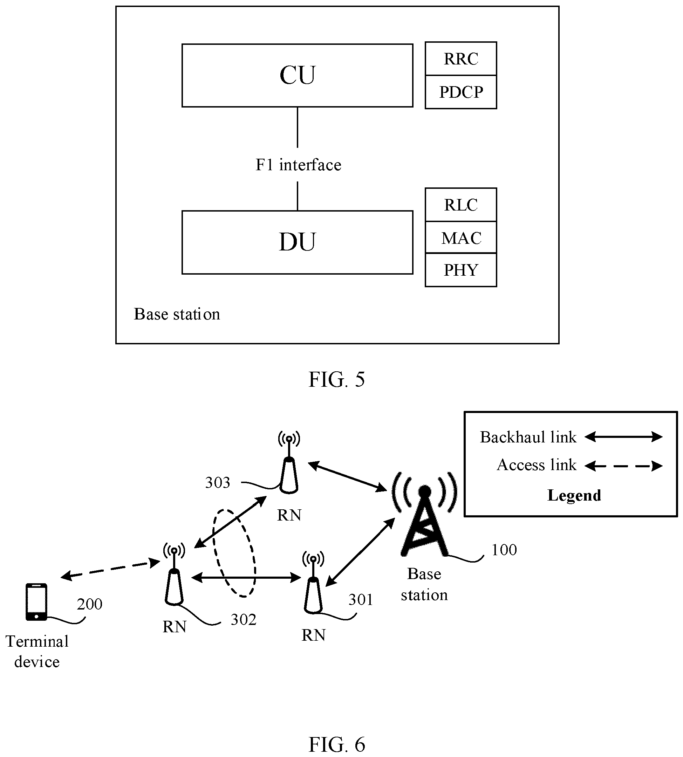

A future access network may be implemented by using a cloud radio access network (cloud radio access network, C-RAN) architecture. Therefore, in a possible manner, a protocol stack architecture and a function of a conventional base station are divided into two parts: One part is referred to as a central unit (central unit, CU), and the other part is referred to as a distributed unit (distributed unite, DU). An actual deployment manner of the CU and the DU is relatively flexible. For example, CU parts of a plurality of base stations are integrated to form a functional entity with a relatively large scale. As shown in FIG. 5, for example, an access network is a base station. A base station 100 may be divided into one CU and at least one DU, and the CU is connected to each DU by using an F1 interface. The CU is configured to implement functions of an RRC layer and a PDCP layer of the base station, and the DU is configured to implement functions of an RLC layer, a MAC layer, and a PHY layer of the base station.

As shown in FIG. 5, the CU and the DU may be obtained through division based on protocol layers of a radio network. For example, the CU is configured to implement functions of a packet data convergence protocol (Packet Data Convergence Protocol, PDCP) and radio resource control (Radio Resource Control, RRC) above the PDCP layer. The DU is configured to implement functions of protocol layers below the PDCP, such as, a radio link control (Radio Link Control, RLC) layer, a media access control (Medium Access Control, MAC) layer, and a physical layer (physical layer, PHY).

The division of the protocol layer is merely an example, and division may alternatively be performed at another protocol layer, for example, at the RLC layer. Functions of the RLC layer and layers above the RLC layer are set on the CU, and functions of protocol layers below the RLC layer are set on the DU. Alternatively, division is performed at a protocol layer. For example, some functions of the RLC layer and functions of protocol layers above the RLC layer are set on the CU, and remaining functions of the RLC layer and functions of the protocol layers below the RLC layer are set on the DU. In addition, division may alternatively be performed in another manner, for example, performed based on a latency. A function whose processing time needs to meet a latency requirement is set on the DU, and a function whose processing time does not need to meet the latency requirement is set on the CU.

In addition, a radio frequency apparatus may not be arranged in the DU and is arranged away from the DU, or may be integrated into the DU, or a part of the radio frequency apparatus is arranged away from the DU, and the other part is integrated into the DU. This is not limited herein.

The terminal device 200 may alternatively be user equipment (User Equipment, UE), an access terminal (Access Terminal), a user unit (User Unit), a user station (User Station), a mobile station (Mobile Station), a mobile console (Mobile), a remote station (Remote Station), a remote terminal (Remote Terminal), mobile equipment (Mobile Equipment), a user terminal (User Terminal), wireless telecom equipment (Wireless Telecom Equipment), a user agent (User Agent), user equipment (User Equipment), or a user apparatus. The terminal device may communicate with one or more core networks (for example, network slices) by using a radio access network (Radio Access Network, RAN), or may communicate with another terminal device, such as, communication in a device to device (Device to Device, D2D) or machine to machine (Machine to Machine, M2M) scenario. The terminal device may be a station (Station, STA) in a wireless local area network (Wireless Local Area Network, WLAN), or may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, an in-vehicle device, a wearable device, a terminal device in a next-generation communications system such as a 5th generation (fifth-generation, 5G) communications network, or a terminal device in a future evolved public land mobile network (Public Land Mobile Network, PLMN).

For example, in this embodiment of this application, the terminal may alternatively be a wearable device. A wearable device may also be referred to as a wearable intelligent device, and is a general term for wearable devices such as glasses, gloves, watches, clothes, and shoes that are developed by applying wearable technologies in intelligent designs of daily wear. A wearable device is a portable device that can be directly worn on a body or integrated into clothes or an accessory of a user. The wearable device is not merely a hardware device, but implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

FIG. 6 is a schematic diagram of another communications system in this application. A difference between FIG. 6 and FIG. 4 lies in that the RN 301 and the RN 302 form a multi-hop communications system architecture in FIG. 4, and at least one RN 303 (only one is shown in FIG. 6) is further introduced in FIG. 6. The RN 303 is wirelessly connected to the base station 100, and the RN 303 forwards data and signaling of the base station 100 to the RN 302, or the RN 303 forwards data and signaling of the terminal device 200 to the base station 100, to form a multi-hop and multi-link communications system architecture.

It should be noted that FIG. 4 and FIG. 6 are merely schematic diagrams of a communications system architecture used in this application, and more communications system architectures or a more complex communications system architecture may be further included in an actual communication process.

Optionally, in the architectures shown in FIG. 4 and FIG. 6, in this application, a quantity of hops of the base station may be defined as 0. Each time one relay device is added between the base station 100 and the terminal device 200 in a direction from the base station 100 to the terminal device 200, a quantity of hops of the relay device increases by one hop. When the added relay device is not in a same branch as other relay devices, a quantity of hops of the branch also increases by one hop. For example, in the architecture shown in FIG. 4, a quantity of hops from the RN 301 to the base station is 1, and a quantity of hops from the RN 302 to the base station is 2. In the architecture shown in FIG. 6, a quantity of hops from the RN 303 to the base station is 1, but the RN 303 and the RN 301 are on different communication links, for example, the RN 301 is on a communication link 1, and the RN 303 is on a communication link 2.

The term "a plurality of" in this application means two or more.

In this application, the terms "first", "second", and the like are merely used to distinguish different objects, but not limit a sequence thereof. For example, first resource configuration information and second resource configuration information are merely used to distinguish different resource configuration information, and a sequence thereof is not limited.

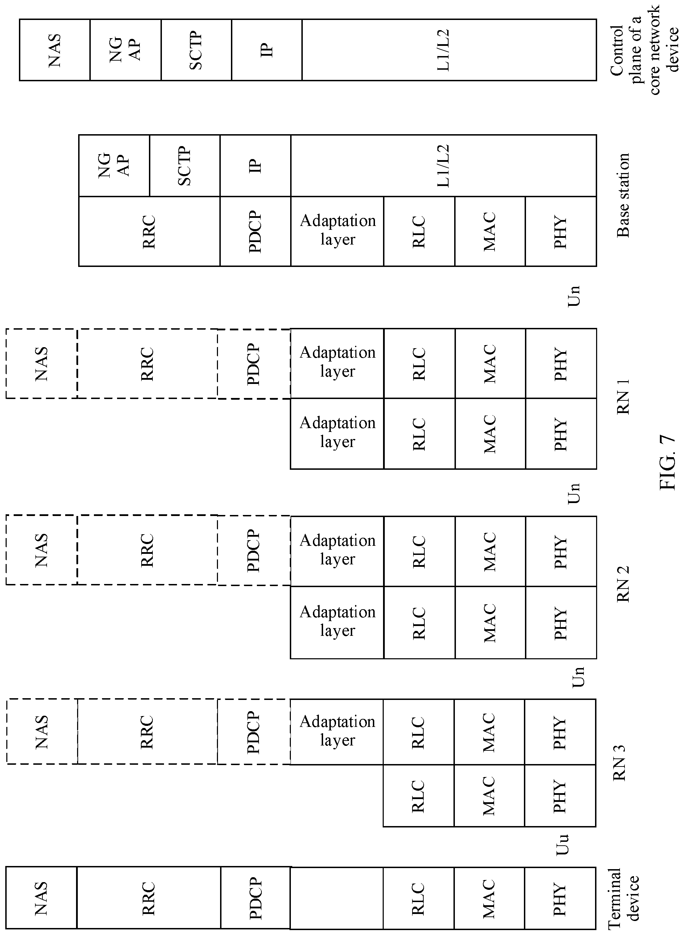

Before the solution provided in this application is described, a protocol stack architecture involved in this application is first described. Specifically, details are described below with reference to FIG. 7 to FIG. 12.

Specifically, FIG. 7 shows a control plane protocol stack of an L2 architecture in this application. In FIG. 7, the control plane protocol stack of the L2 architecture is described by using an example in which there are three relay devices (for example, an RN 1, an RN 2, and an RN 3) between a base station and a terminal device. As shown in FIG. 7, a control plane protocol stack of the terminal device sequentially includes a NAS stratum, an RRC layer, a PDCP layer, an RLC layer, a MAC layer, and a PHY layer from top to bottom; and a control plane protocol stack architecture of the RN 3 includes a ninth protocol stack that is peer to the terminal device and a tenth protocol stack that is peer to the RN 2, where the ninth protocol stack sequentially includes, from top to bottom, an RLC layer, a MAC layer, and a PHY layer that are peer to the terminal device, and the tenth protocol stack sequentially includes a NAS stratum, an RRC layer, a PDCP layer, an adaptation (Adaptation) layer, an RLC layer, a MAC layer, and a PHY layer from top to bottom. For protocol stacks of the RN 2 and the RN 1, specifically refer to the RN 3 and FIG. 7. Details are not described herein again in this application. A control plane protocol stack structure of the base station includes an eleventh protocol stack that is peer to a tenth protocol stack of the RN 1 and a twelfth protocol stack that is peer to a core network device, where the eleventh protocol stack includes an RRC layer, a PDCP layer, an adaptation layer, an RLC layer, a MAC layer, and a PHY layer from top to bottom, and the twelfth protocol stack includes a next-generation application protocol (Next Generation Application Protocol, NG AP) layer, an SCTP layer, an IP layer, and an L1/L2 layer from top to bottom. A protocol stack of the core network device includes a NAS stratum, an NG AP layer, an SCTP layer, an IP layer, and an L1/L2 layer.

It should be noted that in the L2 architecture, when each relay device (for example, the RN 1, the RN 2, and the RN 3 shown in FIG. 7) is connected to the base station or a previous-hop relay device (for example, a previous-hop relay device of the RN 2 is the RN 1) as a terminal device by using a Uu interface, there are a NAS stratum, an RRC layer, and a PDCP layer between each relay device and the base station or a respective previous-hop relay device; and when each relay device is connected to the base station or a respective previous-hop relay device as a relay by using a Un interface, there may not be a NAS stratum, an RRC layer, and a PDCP layer between the relay device and the base station. The Uu interface and the Un interface may be existing interfaces, or may be replaced with a new interface. This is not limited in this embodiment of this application. Specifically, in FIG. 7, a protocol layer in a dotted box represents a protocol layer (for example, a NAS stratum, an RRC layer, and a PDCP layer) existing when a relay device accesses the base station as a terminal device, and there may not be the protocol layer when the relay device is used as a relay to forward data of the base station or the terminal device.

In conclusion, in the L2 architecture, both the base station and the terminal device have an RRC layer. Therefore, when the terminal device accesses the base station or a relay device accesses the base station as a terminal device, an RRC message of the terminal device terminates on the base station. Configuration of the PDCP layer of the base station is specific to the terminal device; to be specific, each terminal device corresponds to configuration of one PDCP layer. The RLC layer, the MAC layer, and the PHY layer of the base station are specific to the relay device; to be specific, each relay device corresponds to one RLC layer, one MAC layer, and one PHY layer. In addition, there is an adaptation layer between the relay device and the base station. Functions of the adaptation layer mainly include: adding or identifying an identifier of the terminal device, and determining radio bearer mapping, of an RRC message of the terminal device, between the relay device and the base station. Optionally, the adaptation layer exists when the relay device is used as a relay to forward data, and may not exist when the relay device is used as a terminal device for access.

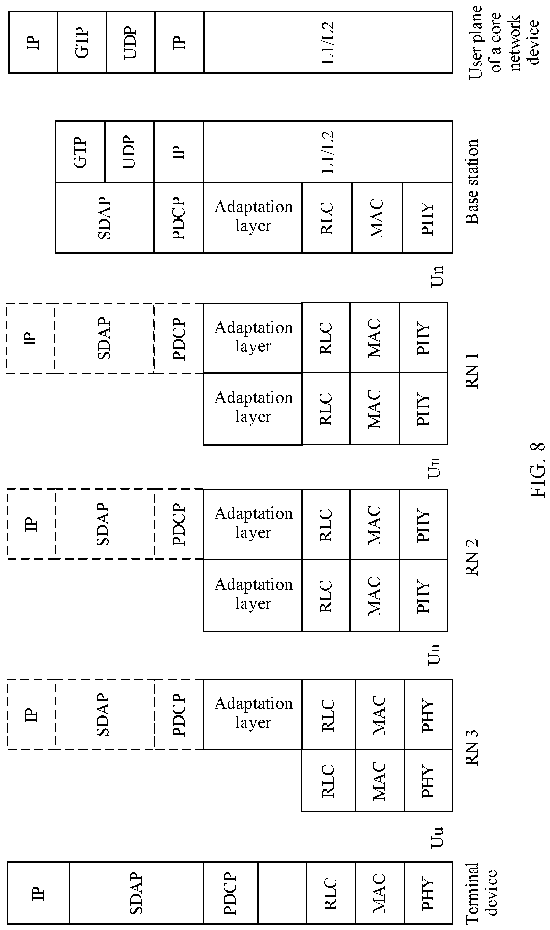

FIG. 8 shows a user plane in an L2 architecture in this application. As shown in FIG. 8, a user plane protocol stack of a terminal device includes an IP layer, an SDAP layer, a PDCP layer, an RLC layer, a MAC layer, and a PHY layer from top to bottom; and an RN 3 includes a thirteenth protocol stack that is peer to the protocol stack of the terminal device and a fourteenth protocol stack that is peer to a protocol stack of an RN 2, where the thirteenth protocol stack includes an RLC layer, a MAC layer, and a PHY layer from top to bottom, and the fourteenth protocol stack includes an IP layer, an SDAP layer, a PDCP layer, an adaptation layer, an RLC layer, a MAC layer, and a PHY layer from top to bottom. For user plane protocol stacks of the RN 2 and an RN 1, refer to FIG. 8 and the protocol stacks of the RN 3. Details are not described herein again in this application. A base station includes a fifteenth protocol stack that is peer to a fourteenth protocol stack of the RN 1 and a sixteenth protocol stack that is peer to a protocol stack of a core network device, where the fifteenth protocol stack includes an SDAP layer, a PDCP layer, an adaptation layer, an RLC layer, a MAC layer, and a PHY layer from top to bottom, and the sixteenth protocol stack includes a GTP layer, a UDP layer, an IP layer, and an L1/L2 layer from top to bottom. The protocol stack of the core network device includes an IP layer, a GTP layer, a UDP layer, an IP layer, and an L1/L2 layer from top to bottom.

In conclusion, an SDAP layer between the terminal device and the base station is specific to one session (session) of each terminal device, to be specific, one session of each terminal device corresponds to one SDAP layer, and different sessions of a terminal correspond to different SDAP layers. The adaptation layer is used to add or identify an identifier of the terminal device and an identifier of a data radio bearer DRB of a Uu interface, and the adaptation layer is used to perform bearer mapping of data of the terminal device between a relay device and the base station. Specifically, in FIG. 8, a protocol layer in a dotted box indicates that when a relay device accesses the base station or a previous-hop relay device of the relay device as a terminal device, the relay device has the protocol layer (for example, an IP layer, an SDAP layer, a PDCP layer, and an adaptation layer) in the dotted box, and when the relay device is used as a relay node to forward data, the relay device may not have the protocol layer in the dotted box. When the terminal device performs access and the relay device performs access as a terminal device, the PDCP layer and the SDAP layer of the relay device/terminal device are peer to the PDCP layer and the SDAP layer of the base station, and are specific to one bearer of each terminal device, to be specific, the PDCP layer and the SDAP layer correspond to one bearer of one terminal device, and different bearers of one terminal device correspond to different PDCP layers and SDAP layers. The RLC layer, the MAC layer, and the PHY layer of the base station are specific to each relay device, and are peer layers of an RLC layer, a MAC layer, and a PHY layer on a relay side. In addition, an adaptation layer is defined between the relay device and the base station. Functions of the adaptation layer are described above, and details are not described herein again in this application. The adaptation layer exists when the relay device is used as a relay node to forward data, and may not exist when the relay device is used as a terminal device for access.

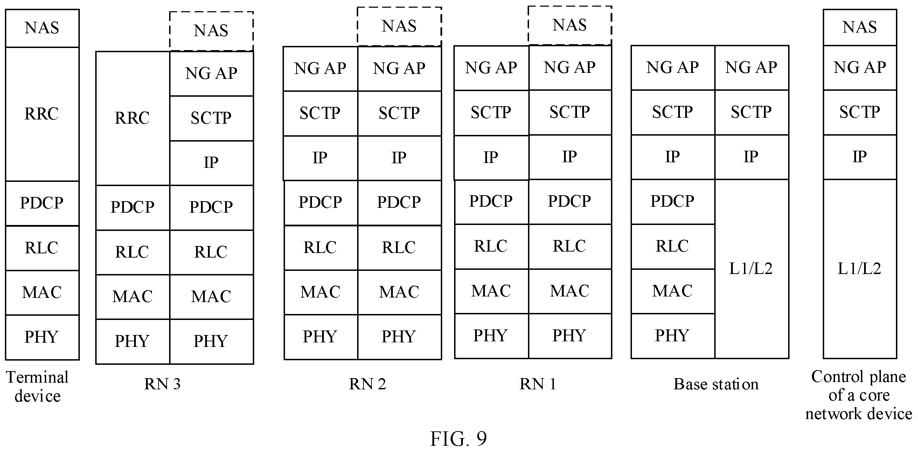

FIG. 9 shows a control plane protocol stack architecture of an L3 architecture. A common point between FIG. 9 and FIG. 7 lies in that, on control planes in the L2 architecture and the L3 architecture, terminal devices have a same protocol stack, and core network devices have a same protocol stack. A difference lies in that a ninth protocol stack of a relay device (for example, an RN 1, an RN 2, and an RN 3) on the control plane in the L3 architecture sequentially has an RRC layer and a PDCP layer from top to bottom, there are further a NAS stratum, an NG AP layer, an SCTP layer, an IP layer, and a PDCP layer from top to bottom above an RLC layer that is of the relay device and that is peer to a base station, and there are sequentially an NG AP layer, an SCTP layer, an IP layer, and a PDCP layer from top to bottom above an RLC layer that is of the base station and that is peer to the relay device (for example, the RN 1). Specifically, in FIG. 9, a protocol layer in a dotted box indicates that when a relay device accesses the base station or a previous-hop relay device of the relay device as a terminal device, the relay device has the protocol layer (for example, a NAS stratum) in the dotted box. In addition, the NG AP layer, the SCTP layer, and the IP layer of the relay device in FIG. 9 further need to be replaced with an RRC layer, and protocol layers, namely, an NG AP layer, an SCTP layer, and an IP layer, of the previous-hop relay device that are peer to the relay device also need to be replaced with the RRC layer. When the relay device is used as a relay node to forward data, the relay device may not have the protocol layer in the dotted box.

Therefore, on the control plane in the L3 architecture, after an RRC message sent by the terminal device passes through each relay device (for example, the RN 3, the RN 2, and the RN 1), an NG AP message is generated, and the relay device sends the NG AP message to a core network device by using the base station.

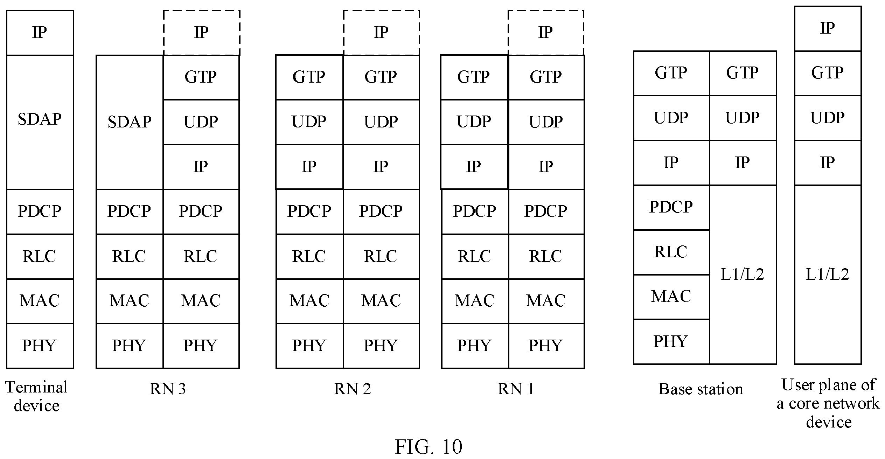

FIG. 10 shows a user plane protocol stack architecture of an L3 architecture. A common point between FIG. 10 and FIG. 8 lies in that, on a user plane in a hybrid protocol stack architecture, terminal devices have a same protocol stack, core network devices have a same protocol stack, and a protocol stack that is of a base station and that is peer to a core network device is the same. A difference lies in that a protocol stack that is of the relay device and that is peer to the terminal device in the L3 architecture further includes a PDCP layer and an SDAP layer above an RLC layer, a protocol stack that is of the relay device and that is peer to the base station further includes a PDCP layer, an IP layer, a UDP layer, and a GTP layer above an RLC layer, and a protocol stack that is of the base station and that is peer to the relay device further includes a PDCP layer, an IP layer, a UDP layer, and a GTP layer above an RLC layer. Specifically, in FIG. 10, a protocol layer in a dotted box indicates that when the relay device accesses the base station or a previous-hop relay device of the relay device as a terminal device, the relay device has the protocol layer (for example, an IP layer) in the dotted box. In addition, an IP layer, a UDP layer, and a GTP layer of a relay device in FIG. 10 further need to be replaced with an SDAP layer, and protocol layers, namely, an IP layer, a UDP layer, and a GTP layer, of the previous-hop relay device that are peer to the relay device also need to be replaced with an SDAP layer. When the relay device is used as a relay node to forward data, the relay device may not have the protocol layer in the dotted box.

Therefore, on the user plane in the L3 architecture, on an interface between a relay and the base station, one session of one terminal device corresponds to one GTP tunnel, and different sessions of the terminal device correspond to different GTP tunnels. One GTP tunnel is carried on one DRB bearer of one RN, and supports a function of converging different QoS services of a plurality of terminal devices.

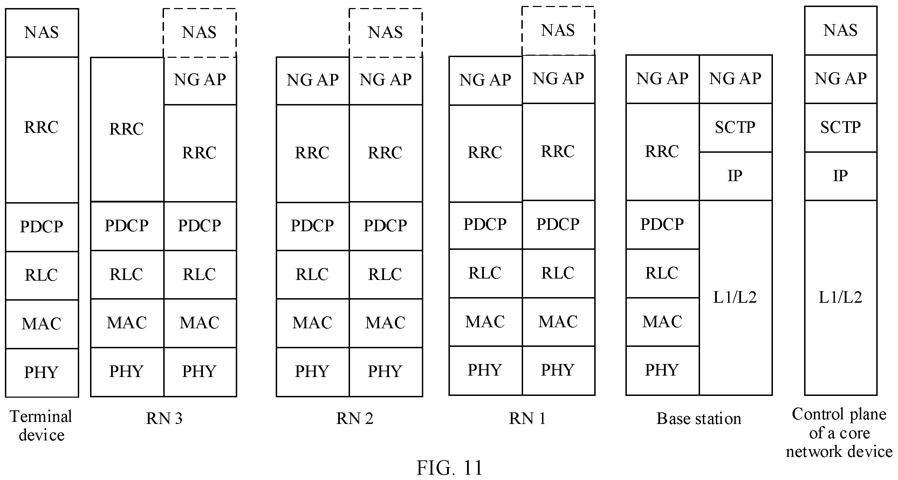

FIG. 11 shows another control plane protocol stack architecture of an L3 architecture. A difference between FIG. 11 and FIG. 9 is as follows: In a protocol stack that is of a relay device and that is peer to a base station, the SCTP layer and the IP layer shown in FIG. 9 are replaced with an RRC layer, and in a protocol stack that is of the base station and that is peer to the relay device, the SCTP layer and the IP layer shown in FIG. 9 are replaced with an RRC layer.

In FIG. 11, after an RRC message of a terminal device is sent to the relay device, the relay device generates an NG AP message, adds the NG AP message to an RRC message of the relay device, and sends the RRC message to the base station, and the base station proxies the received NG AP message to an NG_CN.

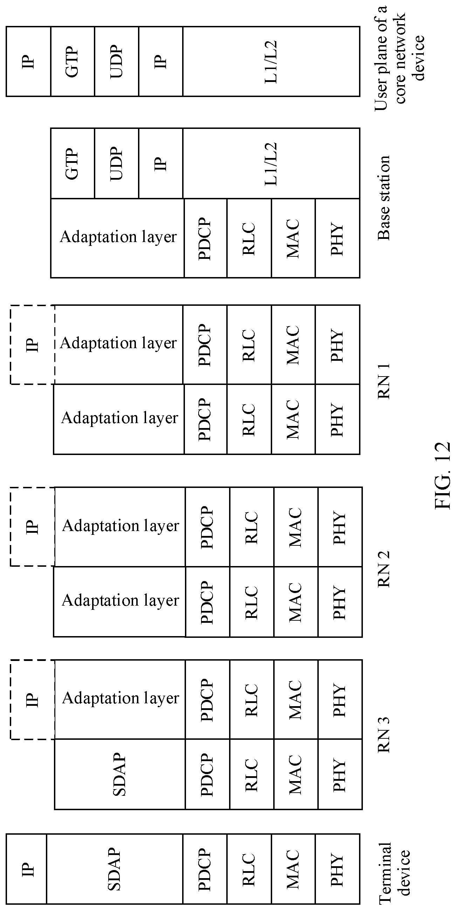

FIG. 12 shows another user plane protocol stack architecture of an L3 architecture. A difference between FIG. 12 and FIG. 10 is as follows: In a protocol stack that is of a relay device and that is peer to a base station, the GTP layer, the UDP layer, and the IP layer in FIG. 10 are replaced with an adaptation layer shown in FIG. 12, and in a protocol stack that is of the base station and that is peer to the relay device, the GTP layer, the UDP layer, and the IP layer in FIG. 10 are replaced with an adaptation layer shown in FIG. 12.

It may be understood that, in FIG. 7 to FIG. 12, a plurality of hops of relay devices are used as an example to describe a protocol stack architecture. It may be understood that, in an actual process, the protocol stack is also applicable to a scenario of a single-hop relay device (in other words, there is one relay device between a terminal device and a base station). Therefore, in FIG. 7 to FIG. 12, there is a protocol stack of one relay device between the terminal device and the base station. For example, the protocol stacks of the RN 3 and the RN 2 in FIG. 7 to FIG. 12 may be omitted.

The information transmission method provided in this embodiment of this application is applicable to an L2 architecture and a hybrid protocol stack architecture. The hybrid protocol stack architecture means that a control plane in the hybrid protocol stack architecture uses a control plane protocol stack architecture of a protocol stack of L3 (for example, the control plane protocol stack architecture shown in FIG. 9 or FIG. 11 may be used), and a user plane uses the user plane protocol stack architecture of the L2 architecture shown in FIG. 8.

It should be noted that the first device in this application may be a relay device, and the target device may be a next-hop relay device that accesses the first device, or may be user equipment that accesses the base station.

This application is described below. An embodiment of how two relay devices access a base station is described in detail by using an example in which a first device is a first relay device and a target device is a second relay device, to form a multi-hop networking architecture.

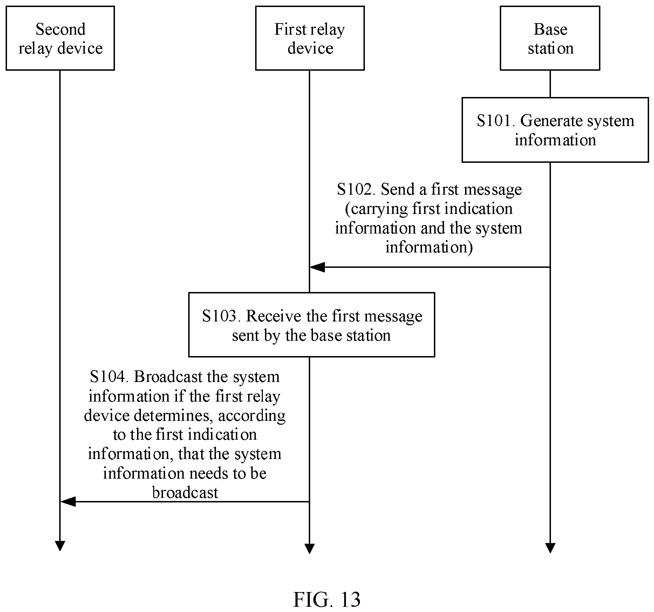

FIG. 13 is a schematic interaction diagram of an information transmission method in this application. The method includes the following steps.

5101. A base station generates system information.

Optionally, the system information includes a SIB 1 (system information block, SIB system information block 1) and a SIB 2. Content of the SIB 1 and the SIB 2 is similar to that in the prior art. Details are not described in this embodiment.

S102. The base station sends a first message to a first relay device, where the first message carries first indication information and the system information, and the first indication information is used to indicate whether the first relay device broadcasts the system information.

In a possible implementation, the first indication information may be an indicator, and the indicator is used to indicate whether the first relay device broadcasts the system information.

Optionally, the indicator may be a first indicator, and the first indicator is used to indicate that the first relay device broadcasts the system information; or the indicator may be a second indicator, and the second indicator is used to indicate that the first device does not broadcast the system information, in other words, the second indicator indicates that the first relay device uses the system information.

For example, the first indicator may be 1, and the second indicator may be 0. Certainly, the first indicator and the second indicator in this application may alternatively be other parameters. This is not limited in this application.

It should be noted that, in one aspect, the first relay device may be a device directly connected to the base station, for example, the first relay device is the RN 301 shown in FIG. 4. In this case, the base station may directly send the first message to the first relay device by using dedicated signaling such as an RRC message.

In another aspect, there may also be at least one accessed relay device between the base station and the first relay device. For example, if the first relay device is the RN 302 shown in FIG. 4, there is still the RN 301 between the RN 302 and the base station. Therefore, the RN 301 needs to forward the first message when the base station is to send the first message to the RN 302. In a possible implementation, after S101, the method provided in this application further includes: sending, by the base station, ninth indication information, the first indication information, and the system information to a previous-hop device of the first relay device, where the ninth indication information is used to indicate a first relay device to which the first indication information and the system information are transmitted. When determining that the first relay device indicated by the ninth indication information is not the previous-hop relay device of the first relay device, the previous-hop relay device of the first relay device sends the first indication information and the system information to the first relay device by using the first message.

For example, the ninth indication information may be at least one of an identifier of the first relay device and a quantity of hops from the first relay device to the base station.

Optionally, the ninth indication information may be an identifier of the first relay device, a quantity of hops from the first relay device to the base station, or a quantity of hops from the first relay device to the base station and an identifier of the first relay device. The identifier of the first relay device is used to identify the first relay device, and there may be one identifier of the first relay device or a group of identifiers of the first relay device. Specifically, if a plurality of relay devices are included between the first relay device and the base station, the ninth indication information is identifiers of all the relay devices between the first relay device and the base station. Specifically, in one aspect, the previous-hop relay device (a first-hop device for short below) of the first relay device may determine whether an identifier of the first relay device indicated by the ninth indication information is consistent with an identifier of the first-hop device, and when the first-hop device determines that the identifier of the first relay device indicated by the ninth indication information is consistent with the identifier of the first-hop device, the first-hop device determines that the system information and the first indication information are sent to the first-hop device. Therefore, the first-hop device may analyze and process the system information, for example, determine, according to the first indication information, whether to broadcast the system information.

When the first-hop device determines that the identifier of the first relay device is inconsistent with the identifier of the first-hop device, the first-hop device determines that the first indication information and the system information are not sent to the first-hop device. Therefore, the first-hop device may send the system information and the first indication information to the first relay device. In this way, the first relay device may determine, according to the first indication information, whether the system information needs to be broadcast, and broadcast the system information after determining that the system information needs to be broadcast.

In another aspect, the first-hop device may further determine, based on the quantity of hops from the first relay device to the base station, whether the first indication information and the system information are sent to the first-hop device. For a specific determining process, refer to a process that is based on the identifier of the first relay device. Details are not described herein again in this application.

For example, the first relay device is the RN 301 shown in FIG. 4. In this case, the quantity of hops from the first relay device to the base station is 1. It may be understood that when the first relay device is the RN 303 shown in FIG. 6, the ninth indication information may alternatively be an identifier of a communication link in which the first relay device is located and the quantity of hops from the first relay device to the base station.

Optionally, in an L2 architecture, the first indication information in this application may be carried at an adaptation layer, and in an L2-L3 hybrid protocol stack architecture, the first indication information in step S102 in this application may be carried in an RRC message or may be carried at an adaptation layer in a control plane protocol stack. Optionally, the adaptation layer may be added below a PDCP layer.

In this application, the base station may send the first message to the first relay device by using dedicated signaling (for example, an RNreconfiguration message), or may send the first message by using another existing RRC message or a new message. This is not limited in this embodiment of this application.

Optionally, the first message further includes subframe configuration, and the subframe configuration is used to instruct the first relay device to broadcast the system information in a subframe timeslot.

It should be noted that, in this application, before the base station sends the first message to the first relay device, the first relay device has accessed the base station, and a manner in which the first relay device accesses the base station is not limited in this application.

S103. The first relay device receives the first message sent by the base station.

S104. The first relay device broadcasts the system information if the first relay device determines, according to the first indication information, that the system information needs to be broadcast.

Optionally, if the first relay device determines that the first message includes the first indicator, the first relay device determines that the system information needs to be broadcast; and if the first relay device determines that the first message does not include the first indicator or the first message carries the second indicator, the first relay device determines that the system information does not need to be broadcast.

Optionally, the first indicator and the second indicator may multiplex a same bit location in the first message.

Specifically, after the first relay device receives the system information in the first message sent by the base station, in one aspect, the system information sent by the base station is different for different relay devices, in other words, when the system information is that the base station learns that a relay device accesses the base station, the base station adds, to the first message, system information that is different from the system information broadcast by the base station, and sends the first message to the first relay device. In this scenario, the first message may include the first indication information, so that the first relay device knows whether the system information needs to be broadcast to another device (for example, a relay device or a terminal device) or whether the first relay device uses the system information.

In another aspect, the system information sent by the base station is the same for all relay devices. In this scenario, the first message may not include the first indication information, to be specific, a relay device that receives the system information only needs to broadcast the system information, or the first relay device may also use the system information while broadcasting the system information, or the first relay device uses the system information.

Optionally, the first message may further carry resource configuration. Step S104 may be specifically implemented in the following manner: The first relay device determines, according to the first indication information, that the first relay device needs to broadcast the system information, and the first relay device broadcasts the system information in a transmission time unit (for example, a subframe or a timeslot) indicated by the resource configuration.

It should be noted that, in a control plane protocol stack architecture of L2, as shown in FIG. 7, when the first relay device accesses the base station as a terminal device, the first relay device may not have an RRC layer or a PDCP layer. Therefore, in the L2 architecture, the first relay device does not generate the system information, and the first relay device may forward the system information generated by the base station.

In addition, in the hybrid protocol stack architecture, a control plane in the hybrid protocol stack architecture is the protocol stack architecture shown in FIG. 9 or FIG. 11, and when the first relay device accesses the base station as a terminal device, the first relay device has an RRC layer and a PDCP layer. Therefore, in the hybrid protocol stack architecture, the first relay device may generate the system information. When the first relay device generates the system information, steps S101 to S103 may be omitted.

When the foregoing steps S101 to S103 are applicable to the hybrid protocol stack architecture, the system information may be sent by the base station to the first relay device after the base station generates common system information (for example, common SI). After changing or adding some information to the common system information, the first relay device generates new system information (for example, minimal SI) and then sends the new system information to a second relay device. The common system information may be information related to the base station or may be related information shared by the base station and the relay device.

In addition, the system information may be sent by the base station to the first relay device by using an RN reconfiguration message, or may be sent by using another existing RRC message or a new message. This is not limited in this embodiment of this application.

Optionally, in the hybrid protocol stack architecture, alternatively, the first indication information may not be added to the first message in step S102, in other words, after receiving the system information, the first relay device determines whether to broadcast the system information. Specifically, the first relay device may determine to modify the system information, and determine whether to broadcast the modified system information.

It should be noted that when the second relay device is not a next-hop relay device of the first relay device, step S104 may be specifically implemented in the following manner:
The first relay device sends an eighth message to the next-hop relay device of the first relay device, and the eighth message carries the first indication information and the system information. The next-hop device of the first relay device forwards the eighth message, or a plurality of relay devices between the first relay device and the second relay device sequentially forward the eighth message until the system information is forwarded to the second relay device.

Specifically, the system information in this application is used by the second relay device to determine how a cell corresponding to the base station is configured, so that the second relay device accesses the cell and works correctly in the cell. To be specific, after receiving the system information, the second relay device may send a random access request (namely, a message 1) to the first relay device, to request to access the base station.

In conclusion, in steps S101 to S104, after the first relay device broadcasts the system information, if the first relay device is connected to a plurality of second relay devices, when the plurality of second relay devices need to access the base station, the plurality of second relay devices may access the base station based on the system information by using the first relay device, to form a multi-hop relay architecture.

According to the information transmission method provided in this application, the base station sends the first message to the first relay device that has accessed the base station, and adds the first indication information to the first message. In this way, after receiving the first message, the first relay device may determine, according to the first indication information, whether to broadcast the system information. When the first relay device determines that the system information needs to be broadcast, the first relay device may broadcast the system information, so that another device, such as the second relay device that receives the system information broadcast by the first relay device, can access the base station by using the system information, thereby implementing a process in which the second relay device accesses the base station by using the first relay device. In addition, when the method is applied to a scenario in which there are a plurality of relay devices between the base station and the terminal device, each of the plurality of relay devices between the base station and the terminal device may access the base station by using the foregoing solution based on each previous-hop relay device accessed by the relay device. Therefore, a plurality of relay devices can be deployed between user equipment and the base station, to form a multi-hop relay network architecture, so that increasing communication requirements can be met, and costs of an operator can also be compromised. In addition, a wireless relay (Relay) technology is to expand a coverage area of a cell, reduce a dead zone in communication, balance load, transfer a service in a hotspot area, and reduce transmit power of the terminal device. Therefore, costs generated when network coverage is provided in some remote areas can be reduced by deploying a plurality of hops of relay devices.

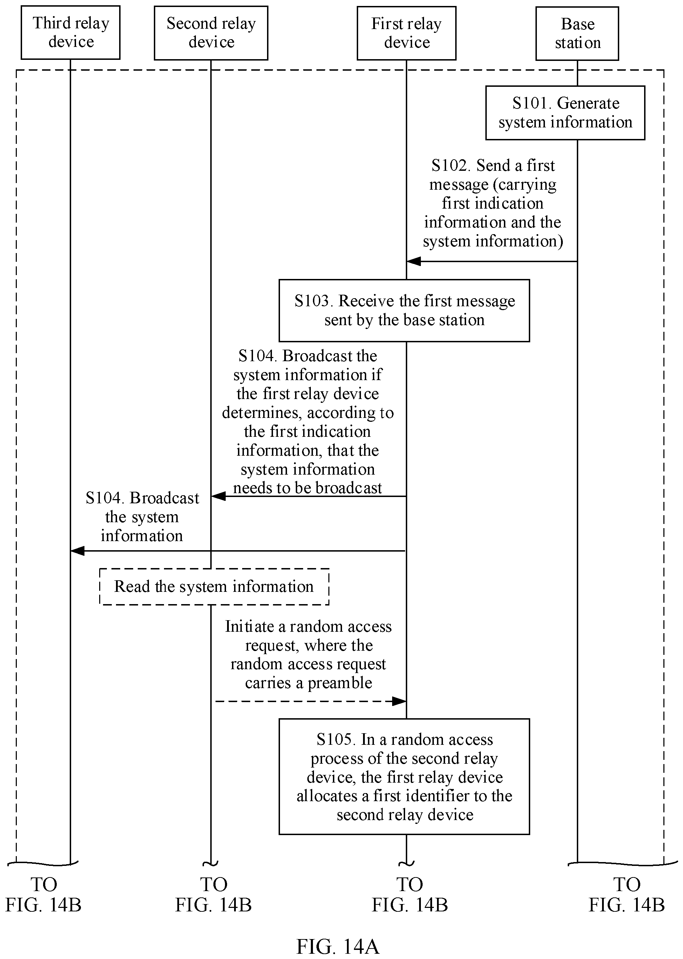

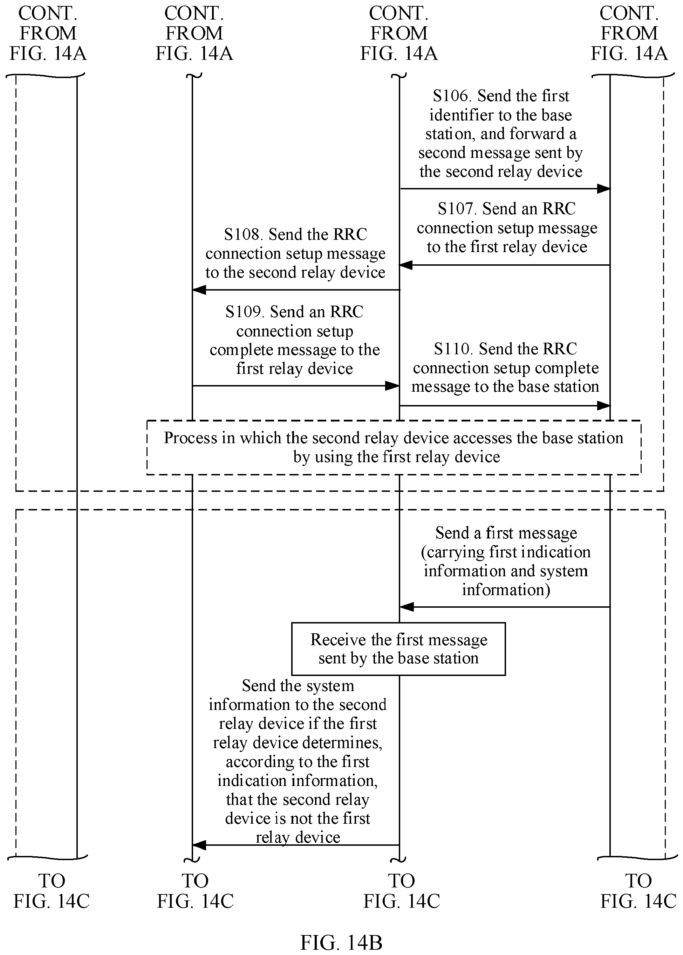

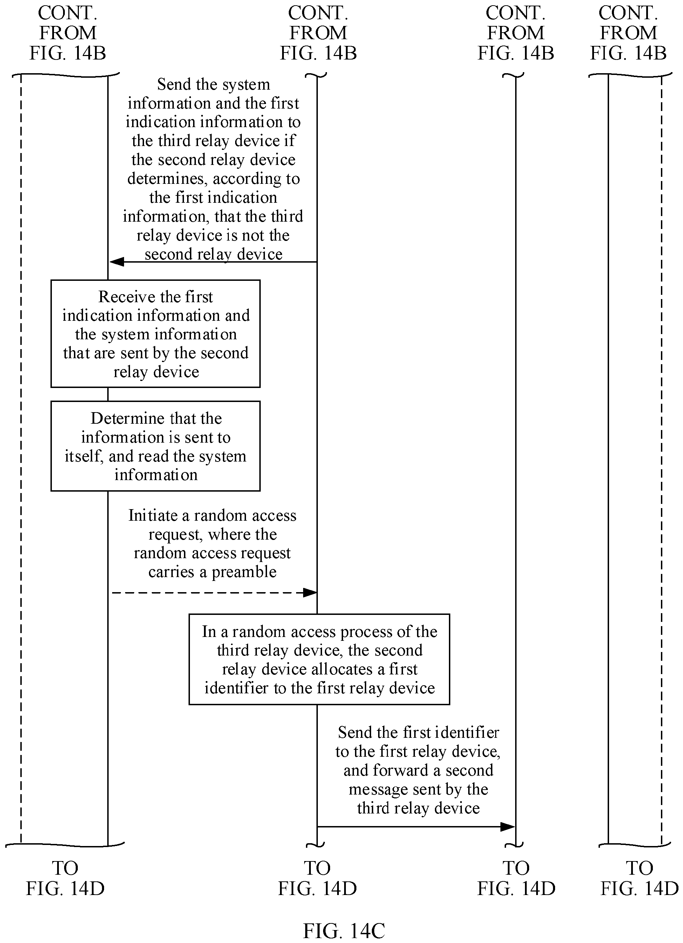

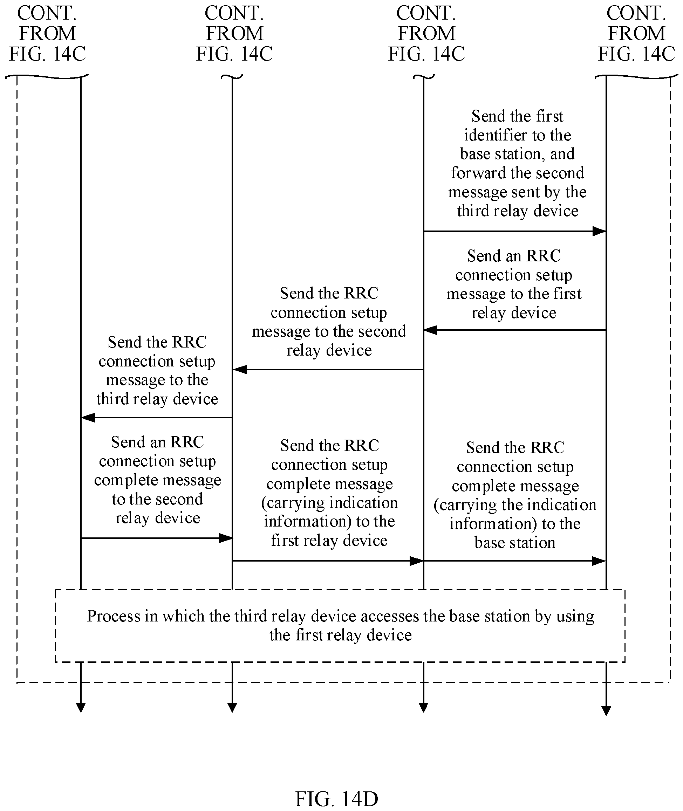

In another possible implementation of this application, in an actual process, the process in which the second relay device accesses the base station based on the system information by using the first relay device may be implemented in the following manner, as shown in FIG. 14Ato FIG. 14D. S 105. In a random access process of the second relay device, the first relay device allocates a first identifier to the second relay device, where the first identifier is used to identify the second relay device in a cell accessed in the random access process of the second relay device.

For example, the first identifier of the second relay device may be a cell radio network temporary identity (Cell Radio Network Tempory Identity, CRNTI). Certainly, in future NR, the first identifier may alternatively be another identifier used to identify the second relay device in the cell accessed in the random access process of the second relay device.

Optionally, the first relay device may allocate the first identifier to the second relay device in the following manner:
In one aspect, the first relay device selects, as the first identifier of the second relay device, one first identifier from a plurality of first identifiers preconfigured by the base station for the first relay device, and sends the selected first identifier to the base station.

In another aspect, the first relay device sends, to the base station, the message 1 sent by the second relay device, and the first relay device receives a first identifier sent by the base station by using dedicated signaling, where the first identifier is allocated by the base station to the second relay device after the base station receives the message 1.

In still another aspect, the first relay device allocates a first identifier to the second relay device, and the first relay device sends the first identifier and the identifier of the first relay device to the base station.

In an optional implementation, the random access process of the second relay device in this application is that the second relay device reads the system information, and initiates a random access request to the first relay device, where the random access request carries a preamble (preamble) randomly selected by the second relay device.

It may be understood that the first relay device further allocates an uplink resource to the second relay device in the random access process of the second relay device, and the uplink resource may be used by the second relay device to send an uplink message to the first relay device. For example, the uplink message may be an RRC connection message, and the uplink message carries an identifier (for example, a temporary mobile subscriber identity (Temporary Mobile Subscriber Identity, TMSI)) of the second relay device as a contention resolution identifier.

S106. The first relay device sends the first identifier to the base station, and forwards a second message sent by the second relay device, where the second message is used to request to set up a radio resource control RRC connection between the base station and the second relay device. Optionally, the second message may be an RRC connection request (RRCconnectionrequest) message. In step S106, the first relay device may further send identification information of the first relay device to the base station, so that the base station may determine, based on the identification information of the first relay device, that the first identifier of the second relay device is allocated by the first relay device, and determine that the second relay device is located at a next hop of the first relay device, and in addition, may further determine that an RRC connection is set up for the second relay device.

It may be understood that when the first relay device sends, to the base station, the message 1 sent by the second relay device, to determine the first identifier of the second relay device, in step S106, the first relay device may omit a process of sending the identifier of the first relay device and the CRNTI to the base station.

Optionally, in one aspect, the first relay device may transmit the second message by using a specified signaling radio bearer (Signaling Radio Bearer, SRB) between the base station and the first relay device. To be specific, the first relay device adds the second message to an RRC message between the base station and the first relay device for transmission, for example, carryies the second message on an RRC connection reconfiguration complete message RRCconnectionreconfiguration complete message, another existing SRB message, or a new SRB message for transmission. This is not limited in this embodiment of this application.

Optionally, the first relay device may transmit the second message by using a specified data radio bearer (Data Radio Bearer, DRB) between the base station and the first relay device. To be specific, the first relay device maps the second message to the specified DRB between the first relay device and the base station for transmission. Specific manners of determining the specified DRB and the specified SRB are described in the following embodiments.

In addition, after the base station receives the second message sent by the first relay device, the method provided in this application further includes the following steps:
S 107. The base station sends an RRC connection setup message to the first relay device.
S 108. The first relay device sends the RRC connection setup message to the second relay device.
S109. The second relay device sends an RRC connection setup complete message, namely, (a message 5, an MSG 5), to the first relay device.
S 110. The first relay device forwards the RRC connection setup complete message to the base station.

In addition, after the base station receives the RRC connection setup complete message, the base station generates an initial UE message and sends the initial UE message to a core network device. The initial UE message carries one piece of RN indication information, to notify the core network device that an RN performs access.

Specifically, after steps S101 to S 110, the second relay device successfully accesses the base station. For security authentication and activation of a NAS stratum and an AS stratum and final bearer setup after the second relay device accesses the base station, specifically refer to the solution in the prior art. Details are not described herein in this application.

It should be noted that this application is described by using an example in which steps S105 to S 110 are performed after steps S101 to S 104. In an actual process, a process in which the first relay device allocates a first identifier to a next-hop relay device that is to perform access and a process in which the first relay device forwards an RRC connection setup message of the next-hop relay device that is to perform access may be separately performed. In other words, in the actual process, steps S105 to S 110 in this application may be implemented as a separate embodiment. When steps S105 to S 110 may be implemented as a separate embodiment, steps S105 to S 110 are still applicable to the architecture shown in FIG. 3 or FIG. 4. When steps S105 to S110 are separately performed, the second relay device or the next-hop relay device of the first relay device has accessed the base station in a manner such as S101 to S104 by using the first relay device or accesses the base station in another manner by using the first relay device, or the second relay device or the next-hop relay device of the first relay device has accessed the base station in another manner by using the first relay device or accesses the base station in another manner by using the first relay device. This is not limited in this embodiment of this application.

After the second relay device accesses the base station by using the first relay device, a next-hop relay device of the second relay device, such as, a third relay device shown in FIG. 14A to FIG. 14D, may access the base station by using the accessed second relay device. Similarly, a terminal device that accesses the base station by using the third relay device may access the base station by using one or more relay devices between the terminal device and the first relay device. A specific access process is the same as or similar to a process in which the second relay device accesses the base station. Details are not described herein again in this application. It may be understood that when the next-hop relay device of the second relay device or the terminal device needs to access the base station by using the second relay device, a function of the second relay device is the same as a function of the first relay device in steps S101 to S104 or steps S105 to S110.

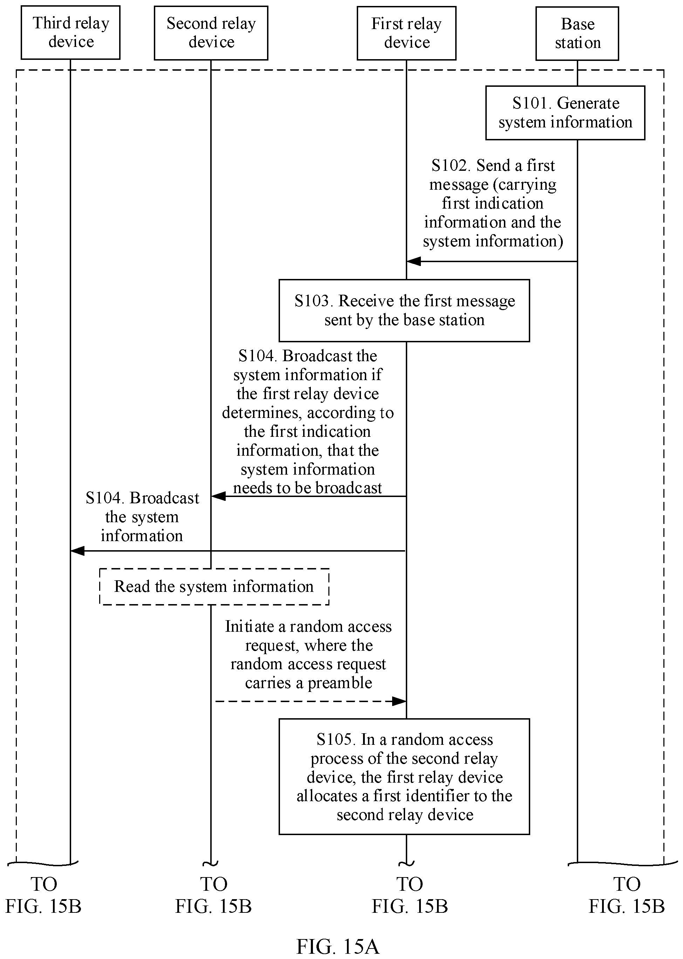

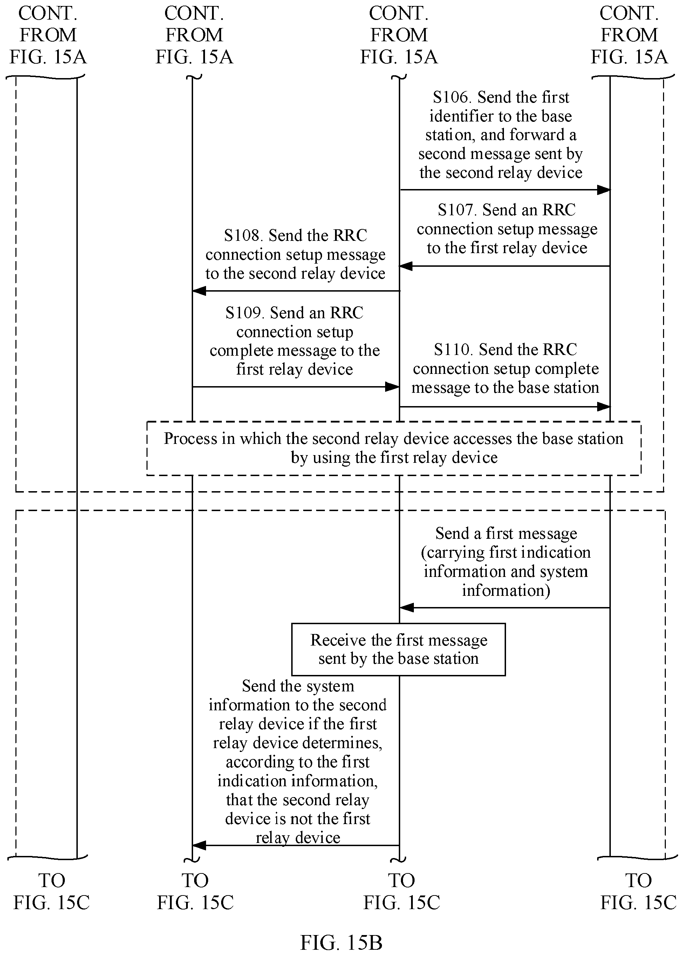

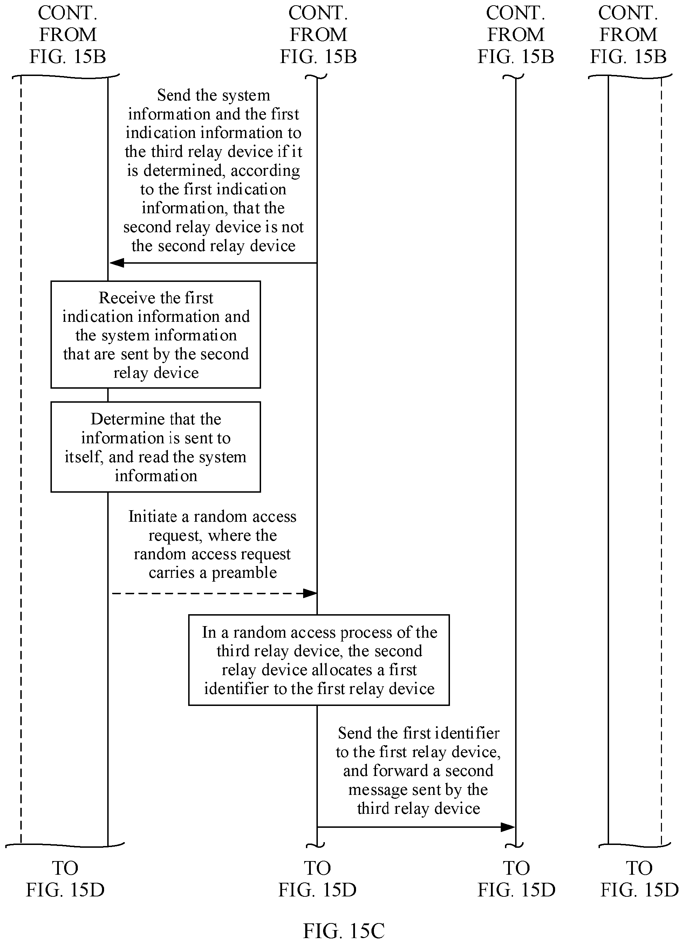

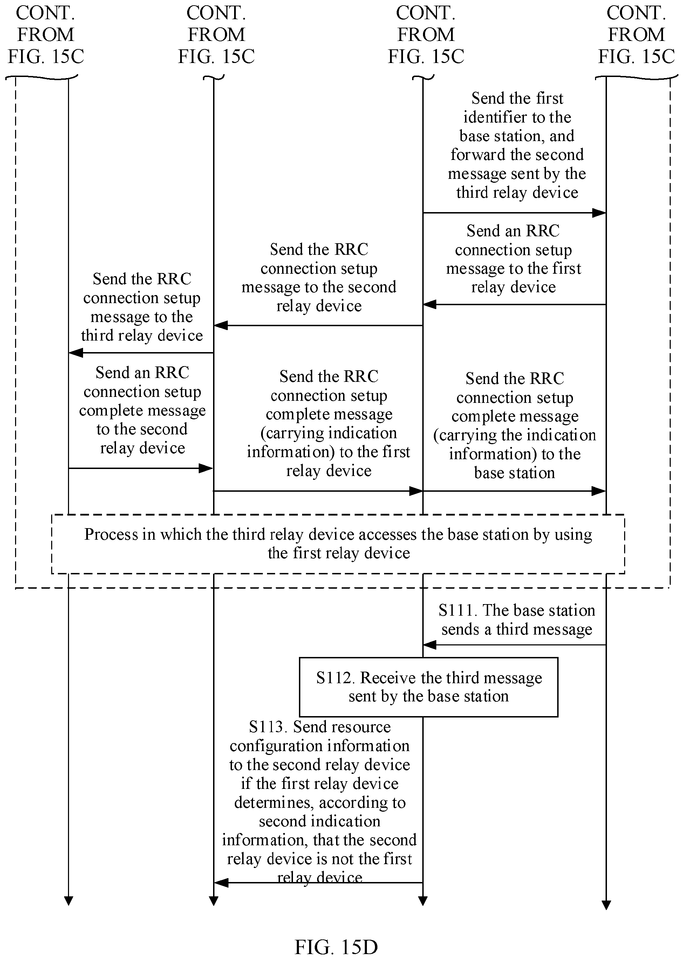

In another embodiment provided in this application, as shown in FIG. 15A to FIG. 15D, after a multi-hop relay architecture is formed between the second relay device and the base station, the base station may trigger an RRC connection reconfiguration message and RN reconfiguration information for the second relay device based on a plurality of hops of formed relay devices. Specifically, in another embodiment of this application, as shown in FIG. 15A to FIG. 15D, in an architecture in which the second relay device has accessed the base station by using the first relay device, a process in which the base station configures resource configuration information for the second relay device based on a multi-hop architecture may be specifically implemented in the following manner:
S111. The base station sends a third message to the first relay device, where the third message includes resource configuration information and second indication information, and the second indication information is used to determine a second relay device to which the resource configuration information is to be transmitted.

In an implementation, in this application, the third message is transmitted by using an SRB 1 between the first relay device and the base station, in other words, the third message is carried in an RRC message between the first relay device and the base station for transmission. For example, the third message is carried in an RRC connection reconfiguration (RRC connection reconfiguration) message, another existing SRB message, or a new SRB message. This is not limited in this embodiment of this application.

Optionally, the first relay device may transmit the third message by using the DRB between the base station and the first relay device, in other words, the first relay device maps the thirdmessage to the DRB between the first relay device and the base station, to transmit the third message to the base station.

Optionally, the second indication information may include at least one of an identifier of the second relay device and a quantity of hops from the second relay device to the base station. It may also be understood that the second indication information is same indication information as the ninth indication information in the foregoing step, but in different messages, a specific meaning indicated by the ninth indication information and a specific meaning indicated by the second indication information are different. Certainly, it may also be considered that when the ninth indication information or the second indication information is in the first message, the ninth indication information or the second indication information is used to indicate the second relay device to which the system information is to be transmitted, and when the ninth indication information or the second indication information is in the third message, the ninth indication information or the second indication information is used to indicate the second relay device to which the resource configuration information is to be sent.

Optionally, the second indication information may be an identifier of the second relay device, a quantity of hops from the second relay device to the base station, or a quantity of hops from the second relay device to the base station and an identifier of the second relay device. The identifier of the second relay device is used to identify the second relay device. In other words, in this scenario, the identifier of the second relay device is unique on the base station to which the second relay device belongs. In other words, if a plurality of relay devices are included between the second relay device and the base station, the relay devices may uniquely identify the identifier of the second relay device.

Optionally, the identifier of the second relay device may be a list of a group of relay device identifiers. Specifically, if a plurality of relay devices are included between the second relay device and the base station, the second indication information is a list of identifiers of all the relay devices between the second relay device and the base station, a hop quantity list, or an identifier list of the relay devices and a hop quantity list. For example, the second relay device is the RN 3, and there are two relay devices, namely, the RN 2 and the RN 1, between the second relay device and the base station. In this case, the second indication information is an identifier list, and includes an identifier of the RN 1, an identifier of the RN 2, and an identifier of the RN 3; or the second indication information is an identifier list and a hop quantity list, and includes an identifier of the RN 1 (a first hop), an identifier of the RN 2 (a second hop), and an identifier of the RN 3 (a third hop), where the identifier of the RN 1 is optional.

It should be noted that this embodiment is described by using an example in which a target device is the second relay device. If the target device is a terminal device, the second indication information includes at least one of a third identifier of the terminal device, an identifier list of all relay devices between the terminal device and the base station, and a hop quantity list.

S112. The first relay device receives the third message sent by the base station.

S113. The first relay device sends the resource configuration information to the second relay device if the first relay device determines, according to the second indication information, that the second relay device is not the first relay device.

Specifically, in step S113, the second relay device may be a next-hop device of the first relay device. In this case, the first relay device may directly send the resource configuration information to the second relay device. When there are a plurality of other relay devices that have accessed the base station between the second relay device and the first relay device, the first relay device may sequentially forward the resource configuration information to the second relay device by using the other relay devices. Specifically, the first relay device may send a ninth message to a next-hop relay device of the first relay device in the other relay devices. Content of the ninth message is the same as content of the third message. This is not limited in this application.

Specifically, in one aspect, the resource configuration information includes first resource configuration information generated by the base station and second resource configuration information generated by the base station. The first configuration information is used to configure at least one of a PDCP layer and an SDAP layer of the second relay device. The second configuration information is used to configure at least one of an RLC layer, a MAC layer, and a PHY layer of the second relay device.

In both the L2 architecture and the hybrid protocol stack architecture, when the first relay device is used as a terminal device, the first relay device has both an RRC layer and a PDCP layer. In other words, when the first relay device is used as a terminal device, the first relay device may generate the second resource configuration information, or may receive the second resource configuration information sent by the base station. Therefore, in the L2 architecture and the hybrid protocol stack architecture, the first relay device may be used as a relay to forward the first resource configuration information and the second resource configuration information generated by the base station.

In another aspect, the resource configuration information includes first resource configuration information generated by the base station and second resource configuration information generated by a relay device. The relay device is the first relay device or a previous-hop relay device or previous-hop relay devices of the second relay device (that the relay device is the first relay device is used as an example below for description), and the second resource configuration information is generated by the first relay device and then sent to the base station. In the L2 architecture, each relay device has at least one of an RLC layer, a MAC layer, and a PHY layer. Therefore, the second resource configuration information may be generated by the first relay device. However, in the L2 architecture, because the first relay device may not have an RRC layer or a PDCP layer when the first relay device is used as a relay for access, and the first relay device cannot directly send the generated second resource configuration information to the next-hop relay device of the first relay device when the first is used as a relay for access, the first relay device may first send the generated second resource configuration information to the base station, and the base station forwards the second resource configuration information to the next-hop relay device of the first relay device by using the first relay device as a relay station. The second resource configuration information generated by the first relay device may be transmitted to the base station by using a DRB or an SRB between the first relay device and the base station, and then forwarded by the base station to the second relay device by using the first relay device. When forwarding the second resource configuration information and the first resource configuration information by using the first relay device, the base station adds indication information to a configuration message that carries the second resource configuration information and the first resource configuration information. The indication information is used to indicate that the second resource configuration information and the first resource configuration information are configured for a target relay device, and the indication message may be at least one of an identifier of the target relay device and a quantity of hops from the target relay device to the base station.

It should be noted that in the L2 architecture, the first relay device has an RRC layer and a PDCP layer when the first relay device is used as a terminal device, but does not have an RRC layer or a PDCP layer when the first relay device is used as a relay. Therefore, the first relay device may forward the first resource configuration information, and may generate or modify the second resource configuration information. When the second resource configuration information is configured by the base station, the first relay device may modify the second resource configuration information. In the L2-L3 hybrid protocol stack architecture, the first relay device has an RRC layer and a PDCP layer. Therefore, the first relay device may forward the first resource configuration information, or may generate or modify the first resource configuration information; and may forward the second resource configuration information, or may generate or modify the second resource configuration information. When the second resource configuration information is configured by the base station, the first relay device may modify the second resource configuration information.

Optionally, in the L2 architecture, the second indication information in this application may be carried at at least one of an adaptation layer, an RLC layer, a MAC layer, and a PHY layer, and in the L2-L3 hybrid architecture, the second indication information may be carried at at least one of an RRC layer, a PDCP layer, an adaptation layer, an RLC layer, a MAC layer, and a PHY layer.

Optionally, the base station may directly generate two RRC messages. An RRC message 1 in the two RRC messages is not encrypted, and the RRC message 1 is used by an intermediate relay device such as the first relay device to add and modify at least one configuration at the RLC layer, the MAC layer, and the PHY layer. In other words, after receiving the RRC message 1, the first relay device adds and modifies a configuration of the RLC layer, the MAC layer, and the PHY layer of the second relay device, and then sends the configuration to the second relay device. The other RRC message 2 in the two RRC messages is encrypted, and includes a configuration of the PDCP layer or the SDAP layer. After receiving the RRC message 2, the first relay device directly forwards the RRC message 2 to the second relay device, so that the second relay device obtains at least one of the configuration of the PDCP layer and the configuration of the SDAP layer after parsing the RRC message 2.

Both the RRC message 1 and the RRC message 2 need to include one piece of indication information, and the indication information is used to indicate that the RRC message is configured for a target RN. The indication information may be at least one of an identifier of the target RN and a quantity of hops from the target RN to the base station.

In addition, the RRC message further needs to indicate whether the RRC message 1 or the RRC message 2 is sent to the first relay device in a current transmission time unit. Specifically, this may be indicated by a negotiated third indicator or fourth indicator. For example, the third indicator may be 0, and the fourth indicator may be 1. This is not limited in this embodiment of this application.

It should be noted that, second configuration information of each relay device may be generated by the base station, or may be generated by a previous-hop relay device accessed by each relay device. When the second resource configuration information of each relay device is generated by the previous-hop relay device accessed by each relay device, the previous-hop relay device accessed by each relay device needs to first send the generated second resource configuration information to the base station (specifically, when each hop of relay device sends the second resource configuration information to the previous-hop relay device, one piece of seventh indication information, the second resource configuration information, and an identifier of a relay device for which the second resource configuration information is configured are carried, where the seventh indication information is used to instruct to send the second resource configuration information to the base station), and then the base station adds the second resource configuration information to configuration information, and the previous-hop relay device forwards the configuration information to a respective next-hop relay device.

It should be noted that, in one aspect, in this application, that steps S111 to step S113 are performed based on steps S101 to step S110 is used as an example for description, and does not limit this application. In an actual process, a process in which the base station allocates resource configuration information to the next-hop relay device of the first relay device may be separately implemented as an embodiment. In other words, in an actual process, steps S111 to S113 in this application may be separately performed. When S111 to S113 are separately performed, S111 to S113 are applicable to the architecture shown in FIG. 3 or FIG. 4. To be specific, in a scenario in which the base station configures resource configuration information for an accessed relay device by using a plurality of hops of relay devices, the plurality of hops of relay devices have accessed the base station by using the first relay device that accesses the base station. A manner in which each relay device accesses the base station is not limited in this application. For example, each relay device may access the base station in a manner such as S101 to S 104 by using the first relay device or in another manner.

Certainly, S111 to S113 may alternatively be performed after steps S101 to S104, in other words, S101 to S104 and S111 to S 113 are used as an embodiment; or S111 to S113 may be performed after steps S105 to S110, in other words, S105 to S110 and S111 to S113 are used as an embodiment. How the second relay device accesses the base station by using the first relay device that has accessed the base station is mainly described in steps S101 to S104. A process in which the base station sends the resource configuration information to the second relay device based on the plurality of relay devices between the second relay device and the base station is mainly described in steps S105 to S110. It may be understood that, in an actual process, the terminal device may also access the base station by using the second relay device and the first relay device. For a process in which the terminal device accesses the base station by using the second relay device and the first relay device, refer to the process in which the second relay device accesses the base station as a terminal device by using the first relay device in the foregoing embodiment. Details are not described herein again in this application. It should be understood that when the terminal device needs to access the base station by using a plurality of relay devices, the plurality of relay devices have already accessed the base station in the foregoing manner.

In a scenario in which the terminal device accesses the base station by using a plurality of hops of relay devices (for example, the RN 302 and the RN 301 shown in FIG. 4), after the terminal device enters an idle mode (Idle) from a connected mode (Connect), the base station does not know a relay device to which the terminal device is connected. In this case, if there is a service on a network side, the terminal device needs to be paged (paging), and the base station may page the terminal device by using a plurality of established relay devices between the terminal device and the base station. Therefore, a process in which the base station pages the terminal device by using a plurality of hops of relay devices is described below.

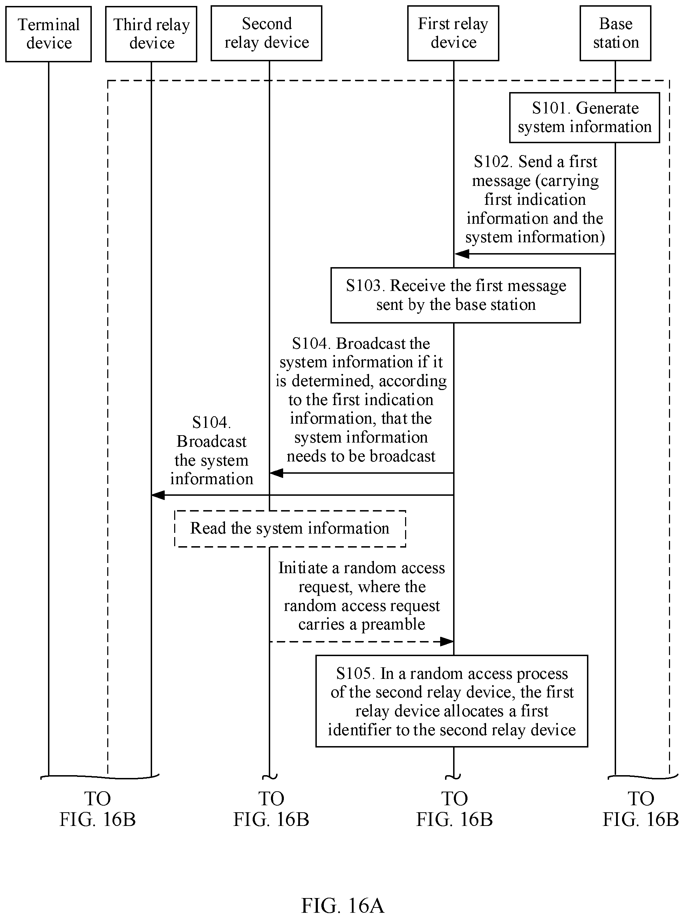

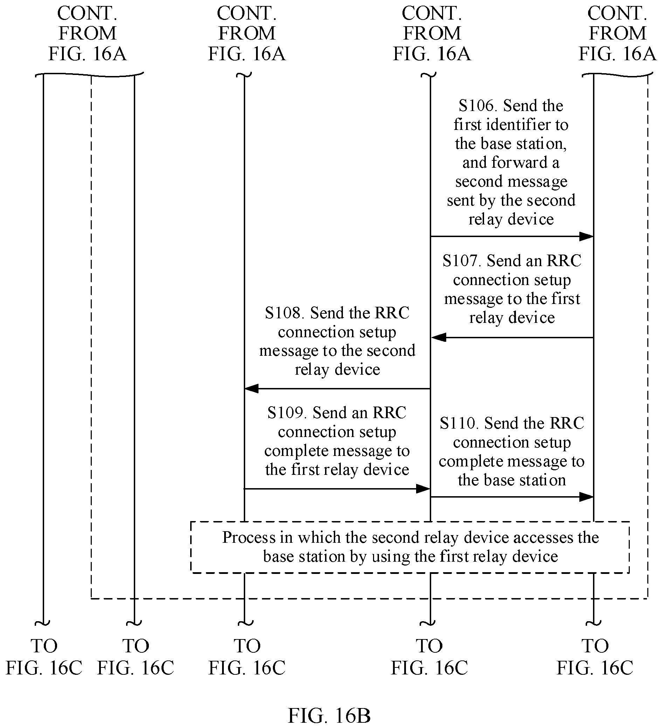

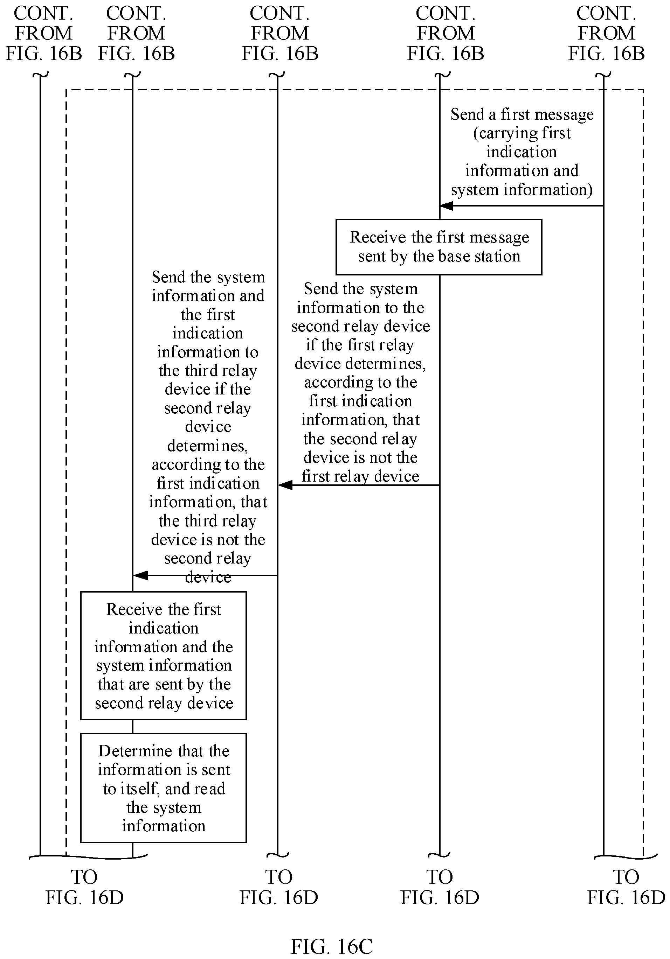

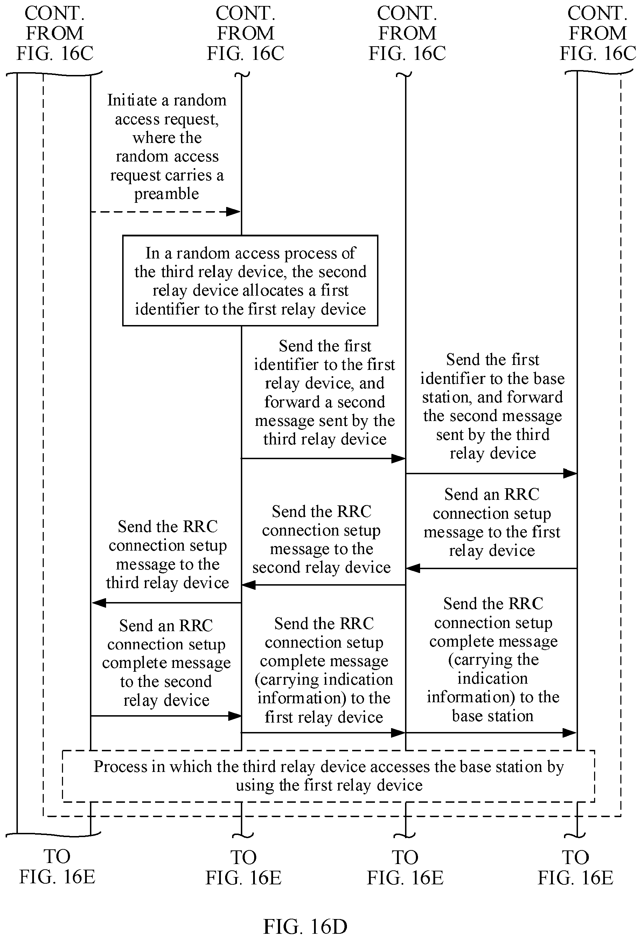

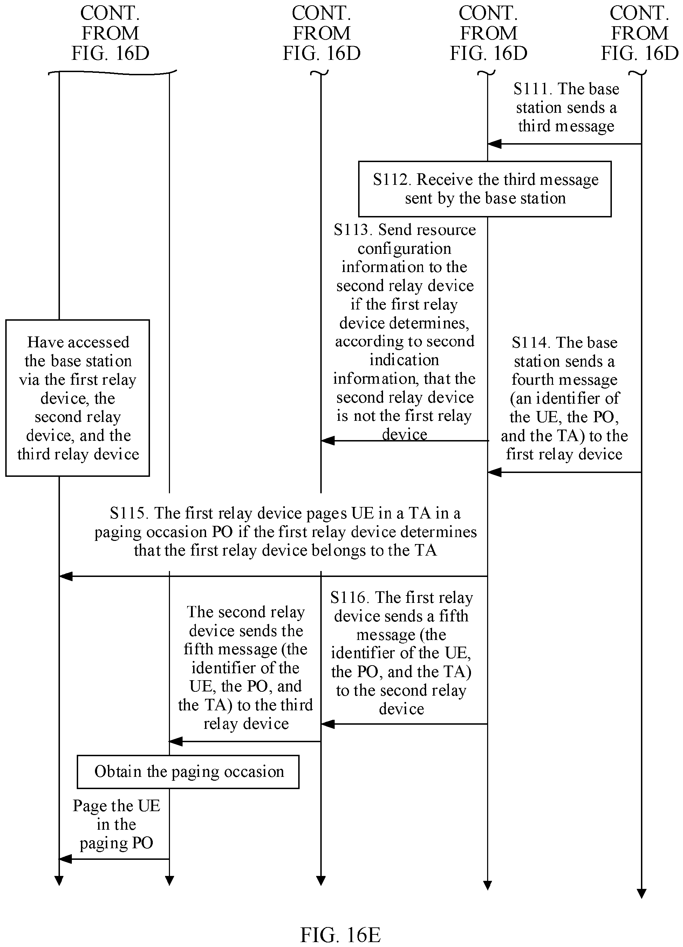

In another embodiment of this application, as shown in FIG. 16Ato FIG. 16E, the method provided in this application further includes the following steps.

S114. The base station sends a fourth message to the first relay device, where the fourth message is used to instruct the first relay device to page a terminal device in a tracking area (Tracking Area, TA) in a paging occasion (Paging Occasion, PO).

Specifically, when a network side (for example, a core network device) needs to page the terminal device, the core network device sends a paging message to the base station.

In a possible implementation, the core network device sends the paging message to all base stations in a tracking area list (Tracking Area List, TAList) in which the terminal device is located (the TAList includes a TA, TA update procedure registration, and the like). The paging message carries information such as a second identifier (for example, an S-TMSI) and a tracking area identity (Tracking Area Identity, TAI) of the terminal device.

The second identifier of the terminal device is used to determine the to-be-paged terminal device, and the TAI is used to determine the TA in which the to-be-paged terminal device is located.

Therefore, after receiving the paging message sent by the core network device, the base station may forward the paging message to the terminal device by using a relay device connected to the base station, to page the terminal device. However, generally, there may be the following three paging cases:
Case 1: Each node (for example, the base station, the first relay device, and the second relay device) may have a TA in which each hop of relay device connected to the node is located. For example, the base station may have a TA in which the first relay device is located, the first relay device may have a TA in which the second relay device is located, and the second relay device may have a TA in which the terminal device is located.
Case 2: Each node may have TAs in which all relay devices connected to the node are located. For example, the base station may have TAs in which the first relay device and the second relay device are located, and the first relay device may determine the TA in which the second relay device is located.
Case 3: Each node may not have a TA in which a relay device included by the node is located. Due to the foregoing three cases, a process in which the base station pages the terminal device by using the relay device is different. Therefore, processing processes of the base station and the first relay device in various cases are described in detail below.
Case 1: For example, in the architecture shown in FIG. 4, the base station 100 knows only a TA 1 in which the RN 301 is located, the RN 301 knows a TA2 in which the RN 302 is located, and the terminal device 200 paged by the base station 100 is located in the TA 2.

Therefore, step S114 may be specifically implemented in the following manner:
S1141. The base station sends a fourth message to a first relay device in next-hop relay devices of the base station.

For example, the base station sends the fourth message to the RN 301.

It may be understood that a TA in which the first relay device is located in step S1141 includes at least the TA in which the terminal device is located. In other words, the TA in which the terminal device is located is located in the TA in which the first relay device is located. Therefore, before S1141, the method further includes the following step:
The base station determines, from a TA in which each relay device at a next hop of the base station is located, a target TA that includes at least the TA in which the terminal device is located, and the target TA is the TA in which the first relay device is located.

S115. The first relay device pages the terminal device in the TA in the paging occasion PO if the first relay device determines that the first relay device belongs to the TA.

Specifically, the first relay device has the TA in which the first relay device is located. In case 1, the first relay device may also store a TA in which the next-hop relay device of the first relay device is located.

S116. If the first relay device determines that there is a candidate device in next-hop devices of the first relay device and that belongs to the TA, the first relay device sends a fifth message to the candidate device, where the fifth message is used to instruct to page the terminal device in the TA in the PO.

It may be understood that in step S116, the first relay device has at least one next-hop relay device. In a possible implementation, the fifth message may carry a second identifier of the paged terminal device, the paging occasion, and the TAI.

In another possible implementation, the fifth message may carry the TAI and a parameter (for example, the second identifier of the terminal device, a discontinuous reception period specific to the terminal device, and a cell-specific discontinuous reception period) that is used to calculate the paging occasion, and the candidate device may determine the paging PO based on the second identifier, the discontinuous reception period specific to the terminal device, and the cell-specific discontinuous reception period that are carried in the fifth message.

Specifically, the base station sends the TAI and the parameter that is used to calculate the paging occasion to the first relay device. If the first relay device determines that the TA of the first relay device is not the TA indicated by the TAI, after determining the candidate device, the first relay device adds, to the fifth message, the TAI and the parameter that is used to calculate the paging occasion, and sends the fifth message to the candidate device.

For example, if the RN 301 determines that the TA in which the RN 302 is located is the TA in which the paged terminal device is located, the RN 301 sends the paging PO and the second identifier of the paged terminal device to the RN 302.

Alternatively, for another example, if the RN 301 determines that the TA in which the RN 302 is located is the TA in which the paged terminal device is located, the RN 301 sends the parameter used to calculate the paging occasion to the RN 302.

In addition, the first relay device may not have a TA of the next-hop relay device of the first relay device. Therefore, when the first relay device determines that there is no candidate device that is in the next-hop devices of the first relay device and that belongs to the TA (because each relay device can determine a TA in which a next-hop device of the relay device is located, when the TA in which the next-hop device of the relay device is located is different from the TA in which the terminal device is located, a TA of a relay device between the next-hop device and the terminal device may also be the same as the TA in which the terminal device is located) or the first relay device does not have the TA of the next-hop relay device of the first relay device, the first relay device may send the second identifier of the paged terminal device, the paging occasion, and the TAI (or the parameter used to calculate the paging occasion) to all next-hop devices of the first relay device, so that the next-hop relay device of the first relay device continues to determine to forward a paging message for the terminal device, until all relay devices between the first relay device and the terminal device determine that the TA in which the paged terminal device is located does not belong to the TA of each relay device. In this case, the first relay device may return a message such as a paging failure to the base station, so that the base station re-initiates paging for the terminal device.

Optionally, before step S115 in this application, the method provided in this application further includes the following step.

S117. The first relay device determines the paging occasion.

In an actual process, the fourth message sent by the base station to the first relay device may carry the paging occasion, or may carry the parameter used to calculate the paging occasion. Because content of the fourth message is different, a manner in which the first relay device determines the paging occasion is different. Therefore, in this application, a specific implementation process of step S117 is described in detail with reference to different cases.

In one aspect, when the fourth message sent by the base station to the first relay device carries the paging PO, step S117 may be specifically implemented in the following manner:
S1171. The first relay device determines the paging PO from the fourth message.

Specifically, the fourth message carries the paging PO, the TAI, and the second identifier of the paged terminal device.

In another aspect, when the fourth message sent by the base station to the first relay device carries the parameter used by the first relay device to determine the paging occasion, for example, the fourth message includes the second identifier (for example, a temporary mobile subscriber identity (S-Temporary Mobile Subscriber Identity, S-TMSI) or an international mobile subscriber identity (International Mobile Subscriber Identity, IMSI)), a discontinuous reception (Discontinuous Reception, DRX) period specific to the terminal device, and a cell-specific discontinuous reception period, where the second identifier is used to indicate an identifier of the terminal device when the terminal device is paged, step S117 provided in this application may be specifically implemented in the following manner:
S1172. The first relay device determines the paging PO based on the second identifier, the discontinuous reception period specific to the terminal device, and the cell-specific discontinuous reception period.

It may be understood that in this application, how the first relay device determines the paging occasion is described only by the first relay device as an example. In an actual process, when the first relay device determines that the TA in which the paged second identifier is located is different from the TA in which the first relay device is located, the first relay device usually sends the fifth message to a next-hop relay device (the second relay device) of the first relay device. In this case, the fifth message may directly carry the paging PO, or may carry the second identifier, the discontinuous reception period specific to the terminal device, and the cell-specific discontinuous reception (Cell Specific DRX) period, so that the second relay device determines the paging occasion. For a specific manner of determining the paging PO, refer to the first relay device. Details are not described herein again in this application.

In addition, for a process in which the second relay device forwards a paging message for the second identifier when determining that the TA in which the second relay device is located is different from the TA in which the second identifier is located, also refer to the first relay device. This is not limited in this application.

Case 2: For example, in the architecture shown in FIG. 4, the base station 100 knows only a TA 1 in which the RN 301 is located and a TA2 in which the RN 302 is located, and the terminal device 200 paged by the base station 100 is located in the TA 2.

In another embodiment of this application, the method provided in this application further includes the following step.

S 118. The base station sends a fourth message to the first relay device, where the fourth message includes the paging PO, a second identifier of the terminal device, and third indication information, and the third indication information is used to instruct the first relay device to send the paging PO and the second identifier of the terminal device to the third relay device.

Specifically, the third indication information may further carry at least one of an identifier of the third relay device and a quantity of hops from the third relay device to the base station. For the identifier of the third relay device, refer to the descriptions in the foregoing embodiment. This is not limited in this application.

Optionally, the third indication information may be an identifier of the third relay device, a quantity of hops from the third relay device to the base station, or a quantity of hops from the third relay device to the base station and an identifier of the third relay device. The identifier of the third relay device is used to identify the third relay device. In other words, in this scenario, the identifier of the third relay device is unique on a base station to which the third relay device belongs. In other words, if a plurality of relay devices are included between the third relay device and the base station, the relay devices may uniquely identify the identifier of the third relay device. Optionally, the identifier of the third relay device may be a list of a group of relay device identifiers. Specifically, if a plurality of relay devices are included between the third relay device and the base station, the third indication information is a list of identifiers of all the relay devices between the second relay device and the base station, a hop quantity list, or an identifier list of the relay devices and a hop quantity list. For example, the third relay device is the RN 3, and there are two relay devices, namely, the RN 2 and the RN 1, between the third relay device and the base station. In this case, the third indication information is an identifier list, and includes an identifier of the RN 1, an identifier of the RN 2, and an identifier of the RN 3; or the third indication information is an identifier list and a hop quantity list, and includes an identifier of the RN 1 (a first hop), an identifier of the RN 2 (a second hop), and an identifier of the RN 3 (a third hop), where the identifier of the RN 1 is optional.

It should be noted that this embodiment is described by using an example in which the target device is the third relay device. If the target device is a terminal device, the third indication information includes at least one of an identifier (which may be, for example, the second identifier or the third identifier) of the terminal device, an identifier list of all relay devices between the terminal device and the base station, and a hop quantity list.

Optionally, in the L2 architecture, the third indication information in this application may be carried at at least one of an adaptation layer, an RLC layer, a MAC layer, and a PHY layer. For the L2-L3 hybrid architecture, the third indication information may be carried at at least one of an RRC layer, a PDCP layer, an adaptation layer, an RLC layer, a MAC layer, and a PHY layer. In the hybrid protocol stack architecture, if the third indication information is carried at the adaptation layer, the adaptation layer may also be added to a control plane architecture in the hybrid protocol stack architecture. Similarly, the adaptation layer is added below a control plane, for example, the PDCP layer, of the L2 architecture.

S 119. The first relay device receives the fourth message sent by the base station.

S 120. The first device sends the paging PO and the second identifier of the terminal device to the third relay device according to the third indication information.

In an implementation, step S 120 in this application may be implemented in the following manner: If the first relay device determines that the third relay device indicated by the third indication information is not the first relay device, the first relay device sends the paging PO and the second identifier of the terminal device to the third relay device. In addition, when the first relay device determines that the third relay device is not a next-hop relay device of the first relay device, the first relay device may send the paging PO to the third relay device by using a relay device between the third relay device and the first relay device, and forward the second identifier of the terminal device to the third relay device. In this case, the first relay device further needs to send the identifier of the third relay device to the relay device between the third relay device and the first relay device. S121. The third relay device pages, in the paging PO, the terminal device indicated by the second identifier of the terminal device.

Specifically, at least one of the paging occasion PO, the TAI, the identifier of the relay device, the second identifier of the terminal device, the discontinuous reception period specific to the terminal device, and the cell-specific discontinuous reception period in the foregoing embodiment may be transmitted by the base station by using an SRB or a DRB between the first relay device and the third relay device, or transmitted in a new SRB or DRB. This is not limited in this embodiment of this application.

Optionally, when the base station is transmitted by using the SRB (or the DRB) between the first relay device and the third relay device, for the L2 architecture, at least one of the PO, the TAI, an RN identifier, the second identifier of the terminal device, the discontinuous reception period specific to the terminal device, and the cell-specific discontinuous reception period is added to the adaptation layer.

In the hybrid protocol stack architecture, at least one of the PO, the TAI, the RN identifier, the second identifier of the terminal device, the discontinuous reception period specific to the terminal device, and the cell-specific discontinuous reception period is added to the adaptation layer, the RRC layer, or the PDCP layer. In the hybrid protocol stack architecture, if a parameter is carried at the adaptation layer, the adaptation layer may also be added to the control plane architecture in the hybrid protocol stack architecture. Similarly, the adaptation layer is added below a control plane, for example, the PDCP layer, of the L2 architecture.

Case 3: A difference from case 1 lies in that the base station sends the fourth message to all next-hop relay devices of the base station. For example, in the architecture shown in FIG. 6, the base station sends the fourth message to both the RN 301 and the RN 302. In this case, the first relay device in step S1141 is any one of the next-hop relay devices of the base station. Therefore, for paging of the terminal device by the first relay device, refer to case 1. Details are not described herein again in this application.

It may be understood that when the base station does not know a TA in which each of the next-hop relay devices of the base station is located, the next-hop relay device (for example, the first relay device) of the base station may know a TA in which a next hop of the next-hop relay device is located (for example, the first relay device knows a TA in which the second relay device is located). In this case, the first relay device may instruct, in a manner of the PO, the second identifier of the terminal device, and the TAI, the next-hop relay device to page the terminal device, or may instruct, in a manner of S 1141, the next-hop relay device to page the terminal device.

In addition, the next-hop relay device (for example, the first relay device) of the base station may not know the TA of the next hop of the next-hop relay device (for example, the first relay device does not know the TA in which the second relay device is located), and in this case, the first relay device may send, to all the next-hop relay devices of the base station, instruction information used to instruct to page the terminal device in the TA in the paging PO, to instruct all the next-hop relay devices of the base station to page the terminal device.

It should be noted that, in the L2 architecture, when the first relay device is used as a relay to connect to the base station by using a Un interface, there is no RRC layer or PDCP layer. Therefore, in the L2 architecture, the first relay device can only receive and forward a paging message sent by the base station for the terminal device. Specifically, the paging occasion of the terminal device, the identifier of the third relay device, and the TAI may all be carried at an adaptation layer in a protocol stack that is of the base station and that is peer to the first relay device, and are transmitted to the first relay device by using an SRB or a DRB between the base station and the first relay device. When the first relay device forwards at least one of the paging occasion PO, the TAI, and the identifier of the third relay device (or the second identifier of the paged terminal device, the second identifier of the terminal device, the discontinuous reception period specific to the second identifier of the terminal device, the cell-specific discontinuous reception period, and the TAI) to the next-hop relay device of the first relay device, the first relay device may transmit, by using an SRB or a DRB between the first relay device and the next-hop relay device of the first relay device, the at least one of the paging occasion PO, the TAI, and the identifier of the third relay device (or the second identifier of the paged terminal device, the second identifier of the terminal device, the discontinuous reception period specific to the terminal device, the cell-specific discontinuous reception period, and the TAI), and adds the at least one of the paging occasion PO, the TAI, and the identifier of the third relay device (or the second identifier of the paged terminal device, the second identifier of the terminal device, the discontinuous reception period specific to the terminal device, the cell-specific discontinuous reception period, and the TAI) to an adaptation layer in a protocol stack that is peer to the next-hop device.

It should be further noted that in the hybrid protocol stack architecture, because the first relay device has an RRC layer and a PDCP layer when the first relay device is used a relay to connect to the base station by using the Un interface, a difference from the L2 architecture is that when the paging message is transmitted between the base station and the relay device, the paging occasion of the terminal device, the identifier of the third relay device (or the second identifier of the paged terminal device, the second identifier of the terminal device, the discontinuous reception period specific to the terminal device, the cell-specific discontinuous reception period, or the TAI) may be carried at an adaptation layer in a protocol stack that is of the base station and that is peer to the first relay device, or may be carried at an RRC protocol layer or a PDCP protocol layer that is of the base station and that is peer to the first relay device, for example, carried in an RRC message, and transmitted to the first relay device by using an SRB or a DRB between the base station and the first relay device.

It should be further noted that if the paging message is transmitted by using the SRB (for example, the RRC message), and the system information is also transmitted by using the SRB, or the paging message and the system information are transmitted by using a same DRB, for the L2 architecture, the base station needs to add an indication to the adaptation layer to indicate whether the SRB or the DRB is used to transmit the paging message or the system information, and for the hybrid protocol stack architecture, the base station may add an indication to at least one of the adaptation layer, the PDCP layer, and the RRC layer to indicate whether the SRB or the DRB is used to transmit the paging message or the system information.

It should be noted that a process in which the base station pages the terminal device by using a plurality of hops of relay devices between the base station and the terminal device is described in steps S114 to S121. In an actual process, steps S114 to S121 may be separately performed, or may be implemented after steps S101 to S104 (in other words, steps S101 to S104 and S114 to S121 may be used as an embodiment), or may be implemented after S101 to S113 (in other words, steps S101 to S 113 and S114 to S121 may be used as an embodiment), or may be implemented after steps S105 to S110 are separately implemented (in other words, steps S105 to S110 and S114 to S121 may be used as an embodiment), or may be implemented after steps S111 to S113 are separately performed (in other words, steps S111 to S113 and S114 to S121 may be used as an embodiment). This application is described only by using an example in which steps S114 to S121 are performed after steps S101 to S113 (as shown in FIG. 16A to FIG. 16E). In an actual process, when the process in which the base station pages the terminal device based on the plurality of hops of relay devices in a multi-hop relay scenario is separately implemented, the terminal device and the plurality of relay devices between the terminal device and the base station have accessed the base station in a manner such as S101 to S104 by using the first relay device, or access the base station in another manner by using the first relay device. In a scenario in which the base station pages the terminal device by using the plurality of hops of relay devices, processes in which the terminal device and the plurality of relay devices between the terminal device and the base station access the base station are not limited in this application.

In an actual process, there may be a plurality of radio bearers such as SRBs or DRBs between the first relay device and the base station, between the first relay device and the second relay device, and between the second relay device and the terminal device.

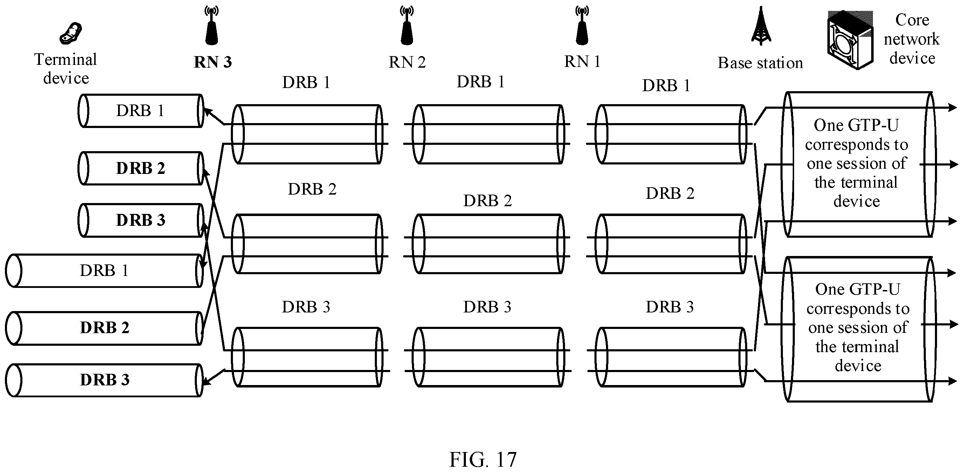

As shown in FIG. 17, for example, a radio bearer is a DRB. For example, DRBs between the RN 1 and the base station include a DRB 1, a DRB 2, and a DRB 3, and DRBs between the RN 1 and the RN 2 include a DRB 1, a DRB 2, and a DRB 3. Therefore, in a downlink transmission (in other words, data or information sent by the base station to the terminal device) process, when sending signaling or service data to the terminal device, the base station also needs to map information obtained from an NG to a specified downlink radio bearer (to be specific, a radio bearer used when the base station sends the signaling or the data to the terminal device or the next-hop relay device of the base station, or a radio bearer used when a relay device sends signaling or data to a next-hop relay device of the relay device). In addition, when forwarding data or signaling (for example, an RRC message or a paging message) of the base station to the terminal device, each relay device also needs to determine a downlink radio bearer on which the data or the signaling is to be mapped. In an uplink transmission (in other words, data or signaling sent by the terminal device to the base station) process, the terminal device also needs to determine an uplink radio bearer (to be specific, a radio bearer used when the terminal device sends the signaling or the data to the base station) to which the data or the signaling is to be mapped. In a process of forwarding data or signaling of the terminal device to the base station, each relay device also needs to determine an uplink radio bearer to which the data or the signaling is to be mapped. Therefore, in an implementation provided in this application, the method provided in this application further includes the following step:
S 122. The first relay device determines at least one association relationship from the following association relationships: an association relationship between a radio bearer between the first relay device and the base station and a radio bearer between the first relay device and the second relay device, an association relationship between service information and the radio bearer between the first relay device and the second relay device, and an association relationship between the service information and the radio bearer between the first relay device and the base station, where the at least one association relationship is used by the first relay device to determine a specified radio bearer for transmitting a target data packet.

The at least one association relationship may be generated by the base station and then sent to the first relay device, or the at least one association relationship is generated by a previous-hop relay device of the first relay device and then sent to the first relay device.

In a possible implementation, if the at least one association relationship is generated by the base station, the association relationship may be directly sent to the first relay device by using an RRC message of the base station.

Optionally, the RRC message includes one piece of eighth indication information. The eighth indication information includes at least one of the identifier of the first relay device and a quantity of hops from the first relay device to the base station, and the eighth indication information is used to indicate that the association relationship is used for the first relay device.

Optionally, the eighth indication information may be an identifier of the first relay device, a quantity of hops from the first relay device to the base station, or a quantity of hops from the first relay device to the base station and an identifier of the first relay device. The identifier of the first relay device is used to identify the first relay device. In other words, in this scenario, the identifier of the first relay device is unique on a base station to which the first relay device belongs. In other words, if a plurality of relay devices are included between the first relay device and the base station, all the relay devices can uniquely identify the identifier of the first relay device.

Optionally, the eighth indication information may be a list of a group of relay device identifiers. Specifically, if a plurality of relay devices are included between the first relay device and the base station, the eighth indication information is an identifier list of all the relay devices, a hop quantity list, or an identifier list of the relay devices and a hop quantity list. For example, the first relay device is the RN 3, and there are two relay devices, namely, the RN 2 and the RN 1, between the first relay device and the base station. In this case, the eighth indication information is an identifier list, and includes an identifier of the RN 1, an identifier of the RN 2, and an identifier of the RN 3; or the eighth indication information is an identifier list and a hop quantity list, and includes an identifier of the RN 1 (a first hop), an identifier of the RN 2 (a second hop), and an identifier of the RN 3 (a third hop), where the identifier of the RN 1 is optional.

In another possible implementation, if the at least one association relationship is generated by the previous-hop relay device of the first relay device (this case is applicable to a scenario in which a previous hop of the first relay device is not a base station but a relay device), in a case of the hybrid protocol stack architecture, the association relationship may be directly sent by the previous-hop relay device of the first relay device to the first relay device by using an RRC message; and in a case of the L2 architecture, the previous-hop relay device of the first relay device may add the at least one association relationship to the adaptation layer and send the at least one association relationship to the first relay device, or the previous-hop relay device of the first relay device may first send the at least one association relationship to the base station, the base station sends the at least one association relationship to the previous-hop relay device of the first relay device by using an RRC message, and the previous-hop relay device of the first relay device forwards the at least one association relationship to the first relay device. Optionally, the RRC message includes one piece of eighth indication information, the eighth indication information includes at least one of an identifier of the first relay device and a quantity of hops from the first relay device to the base station, and the eighth indication information is used to indicate that the association relationship is used for the first relay device. For example, when the first relay device is not a next-hop relay device of the base station, for example, the first relay device is the RN 3 in FIG. 17, the at least one association relationship in the first relay device may be generated by the RN 2.

Optionally, in the L2 architecture, the eighth indication information in this application may be carried at at least one of an adaptation layer, an RLC layer, a MAC layer, and a PHY layer. For the hybrid protocol stack architecture, the eighth indication information may be carried at at least one of an RRC layer, a PDCP layer, an adaptation layer, an RLC layer, a MAC layer, and a PHY layer. In the hybrid protocol stack architecture, if the eighth indication information is carried at the adaptation layer, the adaptation layer may also be added to a control plane architecture in the hybrid protocol stack architecture. For example, refer to addition of the adaptation layer below a control plane, for example, the PDCP layer, of the L2 architecture.

For example, as shown in FIG. 17, the RN 1 determines an association relationship between a DRB 1 between the RN 1 and the base station and a DRB 2 between the RN 1 and the RN 2.

For example, downlink data transmission is used as an example. When the RN 1 receives, on the DRB 1 between the RN 1 and the base station, downlink data sent by the base station, the RN 1 may select the DRB 2 from a plurality of DRBs between the RN 1 and the RN 2 based on the association relationship, to transmit the downlink data sent by the base station. It may be understood that, only that a radio bearer is a DRB is used as an example in this application. In an actual process, the radio bearer may alternatively be an SRB, but the SRB is used to transmit control information or signaling. In addition, for a process in which the RN 2 and the RN 3 select the DRB to transmit data, refer to the foregoing process in which the RN 1 selects the DRB. Details are not described herein again in this application.

Specifically, for uplink data transmission, for a process in which the terminal device selects a DRB to transmit uplink data to the RN 3, a process in which the RN 3 selects a DRB to transmit uplink data to the RN 2, a process in which the RN selects a DRB to transmit uplink data to the RN 1, and a process in which the RN 1 selects a DRB to transmit data to the base station, refer to the foregoing process in which the RN 1 selects the DRB during downlink data transmission. Details are not described herein again in this application.

It may be understood that in this application, an uplink means a data packet or signaling sent by the terminal device to the base station, and a downlink means a data packet or signaling sent by the base station to the terminal device.

A data transmission process, performed through data bearer mapping of each relay device, of a downlink data packet transmitted by a core network to the base station is described in detail below with reference to downlink data packet transmission.

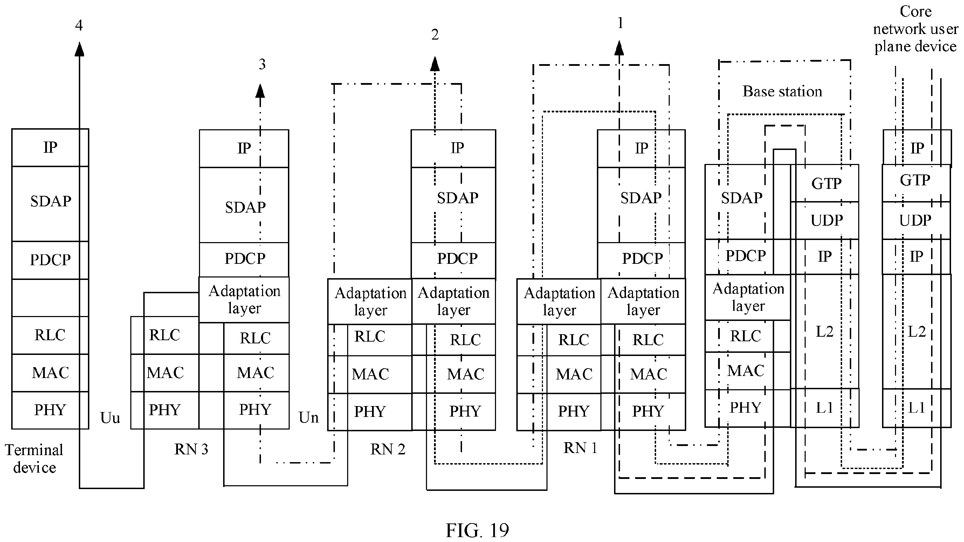

As shown in FIG. 17, a core network device sends a service of the terminal device from a new-generation core (New Generation Core, NGC) to the base station by using a GTP tunnel of one session of each terminal device. The base station extracts the service of the terminal device from a GTP tunnel of an NG interface (an interface between the base station and the NGC), and learns a type of the transmitted service of the terminal device based on a QoS flow identifier (QoS flow ID) of the terminal device that is carried in a GTP tunnel header field of the NG interface. In a protocol stack architecture shown in FIG. 19, after the base station processes the service of the terminal device at an SDAP layer, a PDCP layer, and an adaptation layer, in other words, after the base station processes the service of the terminal device based on an association relationship between a session ID or a Qos flow ID of the service of terminal device and a radio bearer identifier, the base station maps, for transmission, the service of the terminal device to a DRB that is in a plurality of DRBs between the base station and the RN 1 and that is indicated by a DRB ID associated with the service of the terminal device.

Specifically, the base station adds the DRB ID to the adaptation layer. Optionally, the base station may add the session ID, the Qos flow ID, specific quality of service (Quality of Service, Qos) information, and a quality of service classification identifier (QoS Classification Identifier, QCI) to the adaptation layer, and after receiving a downlink data packet of the terminal device from the base station, the RN 1 parses the adaptation layer, and reads information related to the service of the terminal device.

It should be noted that if an explicit configuration manner is used for uplink data packet transmission, the base station needs to send an association relationship (for example, an association relationship between the Qos flow ID and the DRB ID) between service information (for example, the session ID and the Qos flow ID) of the terminal device and a radio bearer to a next-hop relay device, for example, the RN 1 and each hop of relay device need to send the association relationship between the service information of the terminal device and the radio bearer to respective next-hop relay devices. The association relationship may be carried in an RRC message between the base station and the RN 1.

Specifically, the RN 1 reads the service information of the terminal device and the identifier of the terminal device from the adaptation layer, and learns the type of the transmitted service of the terminal device based on the Qos flow ID and the session ID of the terminal device that are carried in the service information.

In this application, the relay device may have a capability of determining a radio bearer mapping relationship, or may not have a capability of determining a radio bearer mapping relationship. Therefore, in one aspect, the relay device does not have the capability of determining a radio bearer mapping relationship, and after obtaining the service information of the terminal device, the RN 1 maps a Qos flow to a first DRB between the RN 1 and the RN 2 based on the Qos information. The first DRB is any one of a plurality of DRBs between the RN 1 and the RN 2.

It should be noted that when the relay device can determine the bearer mapping relationship, the RN 1 may still determine the first DRB based on at least one association relationship configured by the base station. In this case, the first DRB is determined by the RN 1 by receiving an identifier of a data radio bearer of a downlink data packet and the at least one association relationship configured by the base station. For example, the RN 1 receives the downlink data packet on a DRB 1 between the base station and the RN 1, and there is an association relationship between the DRB 1 between the base station and the RN 1 and a DRB 2 between the RN 1 and the RN 2, and therefore the first DRB determined by the RN 1 may be the DRB 2 between the RN 1 and the RN 2.

In another aspect, when the relay device does not have the capability of determining a bearer mapping relationship, the RN 1 may determine a DRB based on identification information (for example, a DRB ID) of a radio bearer that is used in previous-hop transmission and that is carried at an adaptation layer, of the base station, peer to a protocol stack of the RN 1, and then the RN 1 randomly selects one DRB from a plurality of DRBs between the RN 1 and the RN 2, maps the service of the terminal device to the randomly selected DRB, and transmits the service to the RN 2.

In addition, in still another aspect, when the relay device does not have the capability of determining a bearer mapping relationship, if identification information of a radio bearer carried at an adaptation layer that is of the base station and that is peer to a protocol stack of the RN 1 indicates an identifier of a DRB between the base station and the RN 1, the RN 1 may determine, with reference to an association relationship configured by the base station, a DRB that is between the RN 1 and the RN 2 and to which the DRB is mapped, in other words, determine a DRB that is between the RN 1 and the RN 2 and that is in an association relationship with the DRB indicated by the identifier of the DRB.

Specifically, for downlink data packet transmission, the RN 3 extracts a service of the terminal device from the adaptation layer, and learns a type of the transmitted service of the terminal device based on a Qos flow ID and a session ID identifier of the terminal device and an identifier of the terminal device that are carried at the adaptation layer. When the relay device has the capability of determining a mapping relationship, the RN 3 maps a Qos flow to any DRB between the RN 3 and the terminal device based on QoS information.

After the foregoing steps, the RN 1 transmits a downlink data packet to the RN 2. A radio bearer mapping process between the RN 2 and the RN 3 is similar to a radio bearer mapping process between the RN 1 and the RN 2 and a radio bearer mapping process between the RN 2 and the RN 3. For details, refer to the radio bearer mapping process between the RN 1 and the RN 2. Details are not described herein again in this application.

It may be understood that, by using steps similar to the foregoing steps, the RN 2 transmits the downlink data packet to the RN 3. If the relay device does not determine a mapping relationship, the RN 3 maps, based on the DRB ID carried at the adaptation layer, the downlink data packet to a DRB that is between the RN 3 and the terminal device and that is indicated by DRB ID information. Specifically, the RN 3 may randomly perform mapping, or may perform mapping based on an association relationship configured by the base station or a previous-hop relay device of the RN 3.

It should be noted that if the explicit configuration manner is used in the uplink, a previous-hop relay device of each relay device further needs to send a mapping relationship between the service information of the terminal device and the radio bearer to a respective next-hop relay device. For example, for the terminal device, the RN 3 needs to send a mapping relationship between the Qos flow ID and the DRB ID to the terminal device. The mapping relationship may be generated by the RN 3 and then notified to the base station, and then the base station sends the mapping relationship to the terminal device by using an RRC message (for a specific process of sending the RRC message, refer to the foregoing signaling forwarding manner, in other words, a signaling forwarding manner on a signaling plane in the L2 architecture and the control plane in the L2-L3 hybrid protocol stack architecture, and details are not described herein), or the mapping relationship is directly preconfigured by the base station on the terminal device by using an RRC message. This is not limited herein.

A bearer mapping process of an uplink data packet (in other words, a data packet sent by the terminal device to the base station) from the terminal device to the base station in the L2 architecture is described below.

Solution 1: Mapping between a Uu interface (an interface between the terminal device and the RN 3) and an interface between the RN 3 and the RN 2, in other words, mapping between a data radio bearer between the terminal device and the RN 3 and a data radio bearer between the RN 3 and the RN 2, is described in an explicit configuration manner.

The terminal device maps, based on a mapping relationship that is between service information of the terminal device and data radio bearer information (which may be, for example, a Qos flow ID and a DRB ID) and that is configured by the base station or the RN 3, a service of the terminal device to a DRB that is between the terminal device and the RN 3 and that is determined by the DRB ID, and send the service of the terminal device to the RN 3.

After receiving the service sent by the terminal device, the RN 3 maps the service to a first DRB between the RN 3 and the RN 2 and transmits the service to the RN 2.

Specifically, a process in which the RN 3 determines the first DRB is as follows:
When the relay device can determine a mapping relationship:
In one aspect, the RN 3 selects first DRB mapping between the RN 3 and the RN 2 based on a logical channel priority (logical channel priority) corresponding to a DRB of a Uu interface, and maps, to the first DRB, an uplink data packet sent by the terminal device.

In another aspect, the RN 3 selects first DRB mapping between the RN 3 and the RN 2 based on service information of the terminal device, such as, a Qos flow ID in a Qos parameter. The Qos flow ID needs to identify Qos flow ID information below a PDCP layer when the terminal device sends an uplink data packet. Specifically, the terminal device may add an adaptation layer below the PDCP layer, and add the service information, namely, the Qos flow ID information, of the terminal device to the adaptation layer. In this case, an adaptation layer also needs to be added to a layer that is of the RN 3 and that is peer to the terminal device, to parse the Qos flow ID information.

When the relay device has a capability of determining a mapping relationship, to be specific, a radio bearer mapping relationship of a relay device can be configured by the base station or a previous-hop relay device and an operation, administration and maintenance system (Operation, Administration and Maintenance, OAM):

In one aspect, the RN 3 selects one DRB from a plurality of DRBs between the RN 3 and the RN 2 as the first DRB based on a DRB mapping relationship configured by the base station for the RN 3 (the mapping relationship is between a DRB between the terminal device and the RN 3 and a DRB between the RN 3 and the RN 2).

In another aspect, the RN 3 selects one DRB from a plurality of DRBs between the RN 3 and the RN 2 as the first DRB based on a mapping relationship that is between service information and a DRB and that is configured by the base station for the RN 3 (to be specific, a mapping relationship between a Qos flow between the terminal device and the RN 3 and a DRB between the RN 3 and the RN 2) and a service of the terminal device.

Herein, the RN 3 first needs to obtain service information of the terminal device, for example, a Qos flow ID, and when the terminal device sends an uplink data packet, the terminal device adds Qos flow ID information to a PDCP layer. Specifically, the terminal device may add an adaptation layer below the PDCP layer, and adds the service information of the terminal device such as the Qos flow ID to the adaptation layer. In this case, an adaptation layer also needs to be added to a layer that is of the RN 3 and that is peer to the terminal device, to parse the Qos flow ID information. In still another aspect, for a specific process of configuring the mapping relationship by the OAM system for the RN 3, refer to the process of configuring the association relationship by the base station for the RN 3. Details are not described herein again in this application.

It should be noted that for a radio bearer mapping process between the RN 3 and the RN 2 and a radio bearer mapping process between the RN 2 and the RN 1, or a radio bearer mapping process between the RN 2 and the RN 1 and a radio bearer mapping process between the RN 1 and the base station, refer to the radio bearer mapping process between the RN 3 and the RN 2 Details are not described herein again in this application.

Solution 2: An implicit configuration (e.g. reflective mapping) manner is used to describe a radio bearer mapping process between a Uu interface and both the RN 3 and the RN 2, in other words, mapping between a data radio bearer between the terminal device and the RN 3 and a data radio bearer between the RN 3 and the RN 2: When the terminal device receives, by using a relay device, a downlink data packet sent by the base station, if the terminal device determines that the downlink data packet is received on a second DRB (a DRB between the RN 3 and the terminal device), when transmitting the uplink data packet, the terminal device maps the uplink data packet to the second DRB and transmits the uplink data packet to the RN 3. In this implementation, optionally, the base station may further be required to add a Qos flow ID identifier to an SDAP layer when sending a downlink data packet to the terminal device, so that the terminal device receives the downlink data packet and obtains Qos information of the terminal device through parsing, to determine, during uplink transmission, a DRB bearer used for uplink transmission.

It may be understood that, in an uplink transmission process, each relay may alternatively forward a service of the terminal device based on a DRB used by the base station to perform downlink transmission for the terminal device. In other words, a DRB used when a previous-hop relay device of a relay device performs downlink transmission for the relay device is the same as a DRB used when the relay device performs uplink transmission for the previous-hop relay device of the relay device.

For example, if a DRB 1 is used to carry data when the base station performs downlink transmission with the RN 1, when the RN 1 performs uplink transmission with the base station, the DRB 1 can still be used to carry uplink data sent to the base station; and if a DRB 2 is used to carry data when the RN 1 performs downlink transmission with the RN 2, when the RN 2 performs uplink transmission with the RN 1, a DRB 3 can still be used to carry uplink data sent to the RN 1.

It should be noted that the radio bearer mapping relationship is described above by using a radio bearer between relay devices, a radio bearer between the base station and the relay device, and a radio bearer between the terminal device and a previous-hop relay device as examples. In an actual process, the radio bearer between the relay devices, the radio bearer between the base station and the relay device, and the radio bearer between the terminal device and the previous-hop relay device may alternatively be SRBs. For an SRB mapping process between the relay devices, an SRB mapping process between the base station and the relay device, and an SRB mapping process between the terminal device and the previous-hop relay device, refer to the DRB mapping process, but during SRB mapping, in an implicit configuration process, an SRB used by the relay device to send uplink information or uplink signaling to the base station is determined based on an SRB used by the base station to send downlink information or downlink signaling to the relay device. The following describes how signaling is transmitted in a process in which the terminal device communicates with the base station by using a plurality of hops of relay devices. Specifically, how various transmission messages (for example, an RRC message) between the terminal device and the base station are sequentially transmitted to the base station by using various relay devices or how a paging message and system information that are sent by the base station to the terminal device are sequentially transmitted to the terminal device by using various relay devices is described. The RRC message may be an RRC connection setup message, an RRC connection reconfiguration message, or another existing RRC message. This is not limited in this application. In the following descriptions, for example, an RRC message sent by the terminal device to the base station or sent by the base station to the terminal device is carried on an SRB between the RN 1, the RN 2, and the RN 3 for transmission.

In a downlink signaling (signaling sent by the base station to the terminal device) transmission process, a downlink RRC message is used as an example of downlink signaling below in this application. It may be understood that transmission processes of various messages such as the system information and the paging message that are sent by the base station to the terminal device in the foregoing embodiments may be used as downlink signaling, and the transmission processes are similar to a transmission process of the downlink RRC message. Details are not described again subsequently in this application.

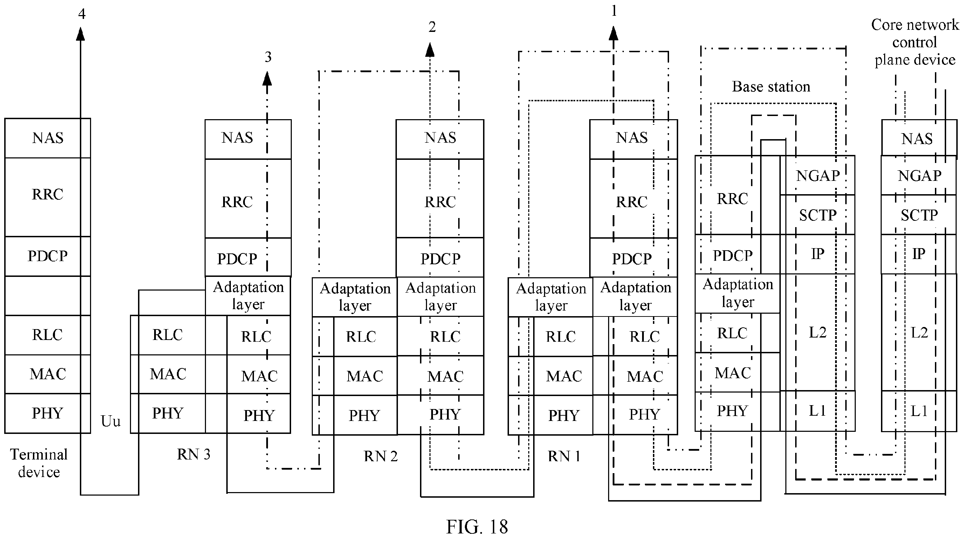

As shown in FIG. 18, transmission of a downlink RRC message on the control plane in the L2 architecture is used as an example. The transmission is shown by a line identified by 4 in FIG. 18. Specifically, after a downlink RRC message of the base station is sent to a PDCP layer, a PDCP PDU is generated, and then an adaptation layer packet header is added to an adaptation layer, where identification information of the terminal device (such as, an ID of the terminal device, a CRNTI of the terminal device, or another identifier that can identify the terminal device, which is not limited in this embodiment of this application), signaling radio bearer information (for example, an SRB 0 or an SRB 1), and indication information (for example, an identifier of the relay device, an identifier list of the relay device, a quantity of hops from the relay device to the base station, or other identification information that can identify the relay device, which is not limited in this embodiment of this application) are added to the adaptation layer packet header. After processing is separately performed at an RLC layer, a MAC layer, and a PHY layer of the base station, a downlink signaling frame is obtained. The base station transfers the obtained downlink signaling frame to a PHY layer in a protocol stack that is of the RN 1 and that is peer to the base station. After receiving the downlink signaling frame, the RN 1 separately processes the downlink signaling frame at the PHY layer, a MAC layer, an RLC layer, and an adaptation layer of the RN 1 that correspond to the base station, identifies related information (such as the foregoing indication information and radio bearer information) from the adaptation layer, identifies a next-hop forwarding node of the signaling message according to the indication information, maps the downlink signaling frame to an entity at an adaptation layer or an RLC layer corresponding to an SRB between the RN 1 and the RN 2 (for example, the signaling radio bearer information indicates an SRB 1, and that the signaling radio bearer information indicates the SRB 1 is used as an example below) based on the signaling radio bearer information, and transfers, to a PHY layer of the RN 2, a downlink signaling frame obtained after separately performing processing at an adaptation layer, an RLC layer, a MAC layer, and a PHY layer of the RN 1 that are peer to the RN 2. After separately processing, at the PHY layer, a MAC layer, an RLC layer, and an adaptation layer of the RN 2 that are peer to the RN 1, the downlink signaling frame processed by the RN 1, the RN 2 identifies related information (such as indication information and bearer information) from the adaptation layer, identifies a next-hop forwarding node of the signaling message according to the indication information, maps the downlink signaling frame to an entity at an adaptation layer or an RLC layer corresponding to an SRB 1 between the RN 2 and the RN 3, and transfers, to a PHY layer of the RN 3, a downlink signaling frame obtained after separately performing processing at an adaptation layer, an RLC layer, a MAC layer, and a PHY layer of the RN 2 that are peer to the RN 3. After receiving the downlink signaling frame sent by the RN 2, the RN 3 separately processes the downlink signaling frame at the PHY layer, a MAC layer, an RLC layer, and an adaptation layer of the RN 3 that are peer to the RN 2, identifies, from indication information at the adaptation layer, that a target node of the signaling message is the terminal device, in other words, maps the downlink signaling frame to an entity at an RLC layer corresponding to an SRB 1 between the RN 3 and the terminal device, and transfers, to a PHY layer of the terminal device, a downlink signaling frame obtained after separately performing processing at an RLC layer, a MAC layer, and a PHY layer of the RN 3 that are peer to the terminal device. After receiving the downlink signaling frame sent by the RN 3, the terminal device separately processes the downlink signaling frame at the PHY layer, a MAC layer, and an RLC layer, sends a corresponding downlink signaling frame (downlink RRC message) to a PDCP entity corresponding to the terminal device, and then sends the downlink signaling frame to a corresponding RRC entity. Then, the RRC entity of the terminal device completes RRC configuration.

Optionally, if the RRC message is an RRC message encrypted by using a PDCP, after a corresponding signaling frame (RRC connection request message) is sent to the PDCP entity corresponding to the terminal device, the PDCP entity first parses a PDCP PDU by using a decryption key corresponding to the terminal device, and then sends the PDCP PDU to the corresponding RRC entity.

An RRC message is still used as an example in an uplink signaling (in other words, signaling sent by the terminal device to the base station) transmission process, that is, an inverse process of the process shown by the line identified by 4 in FIG. 18.

After an uplink RRC message of the terminal device is sent to a PDCP layer, a PDCP PDU is generated, and an uplink signaling frame is obtained after the PDCP PDU is separately processed at an RLC layer, a MAC layer, and a PHY layer of the terminal device. The terminal device transfers the uplink signaling frame to a PHY layer of the RN 3. After receiving the uplink signaling frame, the RN 3 separately processes the uplink signaling frame at the PHY layer, a MAC layer, and an RLC layer of the RN 3 that are peer to the terminal device, and adds an adaptation packet header, where identification information of the terminal device, indication information (such as, an identifier of the relay device, an identifier list of the relay device, a quantity of hops, or an identifier of the base station, where the adaptation packet header may alternatively have no indication information, and if the adaptation packet header has no indication information, a relay device that receives uplink signaling forwards the uplink RRC message to the base station), an SRB identifier (an SRB 0 or an SRB 1, where the SRB 1 is used as an example for description herein, the SRB identifier is optional, and if no SRB is indicated, an SRB is randomly selected or the SRB 1 is directly selected for a subsequent hop; this is not described herein in this embodiment of this application), and identification information of the RN 3 are added to the adaptation packet header; and then, the RN 3 maps the uplink signaling frame to an entity at an adaptation layer or an RLC layer corresponding to an SRB 1 between the RN 3 and the RN 2, and transfers, to a PHY layer of the RN 2, an uplink signaling frame obtained after separately performing processing at an RLC layer, a MAC layer, and a PHY layer of the RN 3 that are peer to the RN 2. After receiving the uplink signaling frame, the RN 2 separately processes the uplink signaling frame at the PHY layer, a MAC layer, an RLC layer, and an adaptation layer of the RN 2 that are peer to the RN 3, identifies an identifier of the terminal device and the SRB identifier at the adaptation layer, maps the identifier of the terminal device and the SRB identifier to an entity at an adaptation layer or an RLC layer corresponding to an SRB 1 between the RN 2 and the RN 1, and transfers, to a PHY layer of the node RN 1, an uplink signaling frame obtained after separately performing processing at an RLC layer, a MAC layer, and a PHY layer of the RN 2 that are peer to the RN 1. After receiving the uplink signaling frame, the node RN 1 separately processes the uplink signaling frame at the PHY layer, a MAC layer, an RLC layer, and an adaptation layer of the RN 1 that are peer to the RN 2, identifies the identifier of the terminal device and the SRB identifier at the adaptation layer, maps the identifier of the terminal device and the SRB identifier to an entity at an adaptation layer or an RLC layer corresponding to an SRB 1 between the RN 1 and the base station, and transfers, to a PHY layer of the base station, an uplink signaling frame obtained after separately performing processing at an RLC layer, a MAC layer, and a PHY layer of the RN 1 that are peer to the base station.

After receiving the uplink signaling frame, the base station separately processes the uplink signaling frame at the PHY layer, a MAC layer, an RLC layer, and an adaptation layer, identifies the identifier of the terminal device (the ID of the terminal device or the CRNTI of the terminal device) by reading the adaptation layer, sends a corresponding uplink signaling frame to a corresponding PDCP entity, and then sends the corresponding uplink signaling frame to a corresponding RRC entity. Optionally, if the RRC message is another RRC message encrypted by using a PDCP, such as, an RRC connection reconfiguration complete message, after a corresponding data frame is sent to the PDCP entity corresponding to the terminal device, the PDCP entity first parses a PDCP PDU by using a decryption key corresponding to the terminal device, and then sends the PDCP PDU to the corresponding RRC entity.

In addition, transmission process of an uplink RRC message shown in FIG. 18 may alternatively be transmitted on a DRB between the RN 3 and the RN 2, between the RN 2 and the RN 1, or between the RN 1 and the base station. A difference from the description of the radio bearer mapping relationship by using an example in which the radio bearer between the relay devices, the radio bearer between the base station and the relay device, and the radio bearer between the terminal device and the previous-hop relay device are DRBs lies in that the RRC message is transmitted by being mapped to a DRB between the RN 2 and the RN 1 and a DRB between the RN 1 and the base station, in other words, the RRC message is transmitted in a form of data. This is similar to the following data packet transmission process on a user plane. Details are not described herein.

Specifically, when the RN 1, the RN 2, and the RN 3 perform access as terminal devices, a transmission process of a downlink RRC message sent by the base station to the RN 1, the RN 2, and the RN 3 is similar to the process in which the base station sends the downlink RRC message to the terminal device, but a quantity of forwarding hops is different. For details, refer to the foregoing process in which the base station sends the downlink RRC message to the terminal device. Details are not described herein again in this application. For example, in FIG. 18, a line identified by 2 represents an RRC message transmission process between the base station and the RN 2, a line identified by 1 represents an RRC message transmission process between the base station and the RN 1, and a line identified by 3 represents an RRC message transmission process between the base station and the RN 3.

Specifically, when the RN 1, the RN 2, and the RN 3 perform access as terminal devices, for a process in which each RN sends an uplink RRC message to the base station, refer to the foregoing process in which the terminal device sends the uplink RRC message to the base station, but a quantity of forwarding hops is different. Details are not described herein again in this application. For example, a process in which the RN 3 sends an uplink RRC message to the base station may be an inverse process of the line 3 identified in FIG. 18, a process in which the RN 2 sends an uplink RRC message to the base station may be an inverse process of the line 2 identified in FIG. 18, and a process in which the RN 1 sends an uplink RRC message to the base station may be an inverse process of the line 1 identified in FIG. 18.

The following describes, with reference to FIG. 19, a process in which data between the terminal device and the base station is transmitted by using user planes of the RN 3, the RN 2, and the RN 1 in a user plane architecture of the L2 protocol stack.

For transmission of a downlink data packet:
As shown in a line identified by 4 in FIG. 19, after a downlink data packet of the base station is processed at an SDAP layer (service type information (a QoS flow ID and a session ID) is added to a packet header) and a PDCP layer, a PDCP PDU is generated. Then, an adaptation layer packet header is added, and an identifier of the terminal device and bearer information (DRB ID) are added to the adaptation layer packet header, and a data frame obtained after processing is separately processed at an RLC layer, a MAC layer, and a PHY layer of the base station is transferred to a PHY layer of the RN 1.

Optionally, service type information (a QoS flow ID and a session ID identifier) of the terminal device and indication information (such as an identifier of the relay device, an identifier list of the relay device, a quantity of hops, and an identifier of the base station) may also be added to the adaptation layer. It should be noted that the adaptation layer may alternatively have no indication information. If the adaptation layer does not have the indication information, a relay device that receives uplink signaling forwards the uplink signaling to the base station by default during uplink transmission.

After receiving the data frame sent by the base station, the RN 1 separately processes the data frame at the PHY layer, a MAC layer, an RLC layer, and an adaptation layer of the RN 1 that are peer to the base station, identifies the terminal device, the service type information, and the bearer information from the adaptation layer, identifies, according to indication information at the adaptation layer, a next-hop relay node to which the data frame needs to be forwarded, and then maps a service of the terminal device to a DRB corresponding to the RN 1 and the RN 2 for transmission, in other words, maps the service to an entity at an adaptation layer or an RLC layer corresponding to a DRB between the RN 1 and the RN 2, and transfers, to a PHY layer of the RN 2, a data frame obtained after separately performing processing at an adaptation layer, an RLC layer, a MAC layer, and a PHY layer of the RN 1 that are peer to the RN 2.

After receiving the data frame, the RN 2 separately processes the data frame at the PHY layer, a MAC layer, an RLC layer, and an adaptation layer of the RN 2 that are peer to the RN 1, identifies the terminal device, the service type information, and the bearer information from the adaptation layer, identifies, according to indication information at the adaptation layer, a next-hop relay node to which the data frame needs to be forwarded, and then maps the service of the terminal device to a DRB corresponding to the RN 2 and the RN 3 for transmission, in other words, maps the service to an entity at an adaptation layer or an RLC layer corresponding to a DRB between the RN 2 and the RN 3, and transfers, to a PHY layer of the RN 3, a data frame obtained after separately performing processing at an adaptation layer, an RLC layer, a MAC layer, and a PHY layer of the RN 2 that are peer to the RN 3.

After receiving the data frame, the RN 3 separately processes the data frame at the PHY layer, a MAC layer, an RLC layer, and an adaptation layer of the RN 3 that are peer to the RN 2, identifies the terminal device, the service type information, and the bearer information from the adaptation layer, identifies a target terminal device according to indication information at the adaptation layer, and then maps the service of the terminal device to a DRB corresponding to the RN 3 and the terminal device for transmission, in other words, maps the service to an entity at an RLC layer corresponding to a DRB between the RN 3 and the terminal device, and transfers, to a PHY layer of the terminal device, a data frame obtained after separately performing processing at an adaptation layer, an RLC layer, a MAC layer, and a PHY layer of the RN 3 that are peer to the terminal device.

After receiving the data frame, the terminal device separately processes the data frame at the PHY layer, a MAC layer, and an RLC layer, then maps the service of the terminal device to a PDCP entity corresponding to the terminal device, and then sends the data frame to a corresponding SDAP entity.

Optionally, if an implicit configuration manner is used in an uplink, a bearer mapping relationship between a Uu interface and a Un interface of the terminal device is consistent with a received mapping relationship, and the received mapping relationship is also used for transmission of an uplink data packet. Otherwise, if an explicit configuration manner is used in the uplink, the base station needs to send a mapping relationship between a DRB and a session ID and a QoS flow ID of the terminal device to the terminal device before data transmission, and the terminal device performs bearer mapping for uplink data transmission based on the mapping relationship and a QoS requirement.

For details of transmission of the uplink data packet, in other words, a reverse process of the line identified by 4 in FIG. 19, refer to the foregoing transmission process of the downlink data packet. Details are not described herein again in this application.

A difference from the transmission process of the downlink data packet lies in that, in a transmission process of the uplink data packet of the terminal device, when a mapping relationship determined by the relay device is used for uplink data packet bearer mapping, the terminal device adds an adaptation layer to indicate service information of the terminal device. To be specific, after the uplink data packet of the terminal device is processed by using an SDAP and a PDCP, a PDCP PDU is generated, and an adaptation layer packet header is then added, where identification information, service type information, and the like of the terminal device are added to the adaptation layer packet header. Then, the uplink data packet is transferred to a PHY layer of the RN 3 after processing is separately performed at an RLC layer, a MAC layer, and a PHY layer of the terminal device. After separately performing processing at a PHY layer, a MAC layer, an RLC layer, and an adaptation layer, the RN 3 identifies the service information of the terminal device from the adaptation layer, and then maps a Qos flow ID in the service information to a DRB between the RN 3 and the RN 2 for transmission.

Specifically, when the RN 1, the RN 2, and the RN 3 perform access as terminal devices, a transmission process of a downlink data packet sent by the base station to the RN 1, the RN 2, and the RN 3 is similar to the process in which the base station sends the downlink data packet to the terminal device, but a quantity of forwarding hops is different. For details, refer to the foregoing process in which the base station sends the downlink data packet to the terminal device. Details are not described herein again in this application.

In addition, in FIG. 19, a line identified by 2 represents a downlink data packet transmission process between the base station and the RN 2, a line identified by 1 represents a downlink data packet transmission process between the base station and the RN 1, and a line identified by 3 represents a downlink data packet transmission process between the base station and the RN 3.

Specifically, when the RN 1, the RN 2, and the RN 3 perform access as terminal devices, for a process in which each RN sends an uplink data packet to the base station, also refer to the process in which the terminal device sends the uplink data packet to the base station. Specifically, a process in which the RN 3 sends an uplink data packet to the base station may be a reverse process of the line identified by 3 in FIG. 19, a process in which the RN 2 sends an uplink data packet to the base station may be a reverse process of the line identified by 2 in FIG. 19, and a process in which the RN 3 sends an uplink data packet to the base station may be a reverse process of the line identified by 1 in FIG. 19. Details are not described herein in this application.

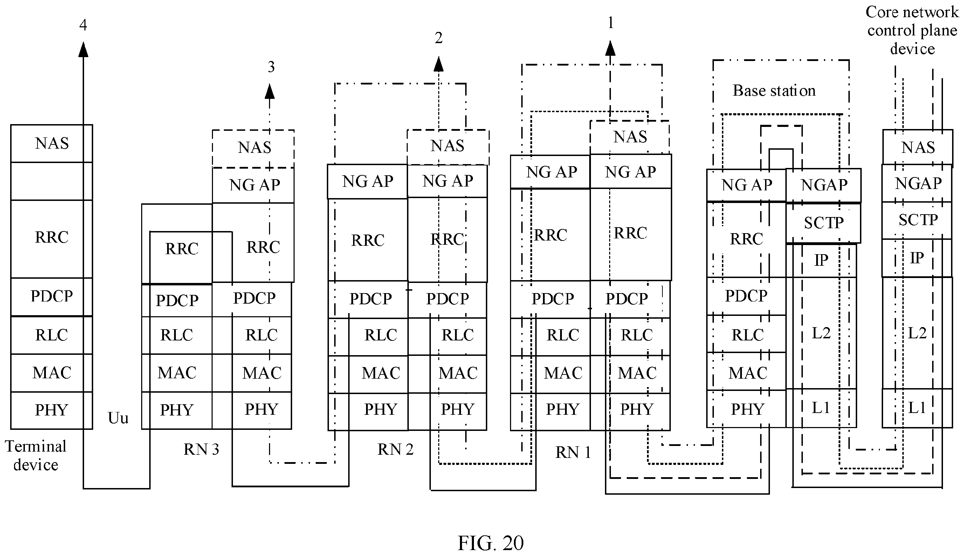

In addition, FIG. 20 is a schematic diagram of uplink signaling transmission on a control plane in the L2-L3 hybrid protocol stack architecture. Specifically, for uplink signaling transmission on the control plane, refer to the foregoing uplink signaling transmission process in the L2 architecture in FIG. 18. Details are not described herein again in this application. Specifically, for a downlink signaling transmission process in the hybrid protocol stack architecture, refer to the foregoing downlink signaling transmission process in the L2 architecture in FIG. 18. Details are not described herein again in this application.

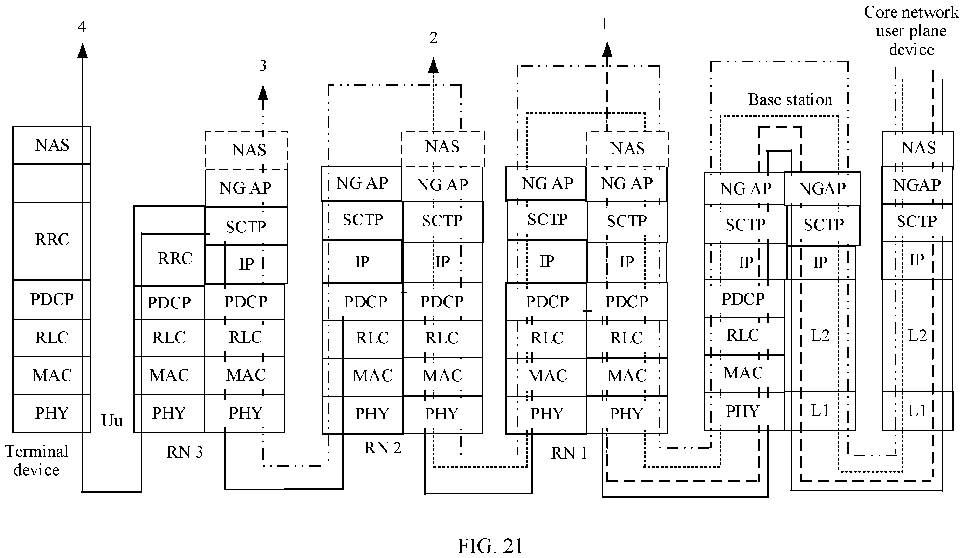

FIG. 21 shows a transmission process on a user plane in the L2-L3 hybrid protocol stack architecture. Because the user plane in the L2 architecture is used for the user plane in the L2-L3 hybrid protocol stack architecture, for both uplink transmission and downlink transmission on the user plane, refer to the uplink transmission process and the downlink transmission process on the user plane in the L2 architecture described in the foregoing embodiment. Details are not described herein again in this application.

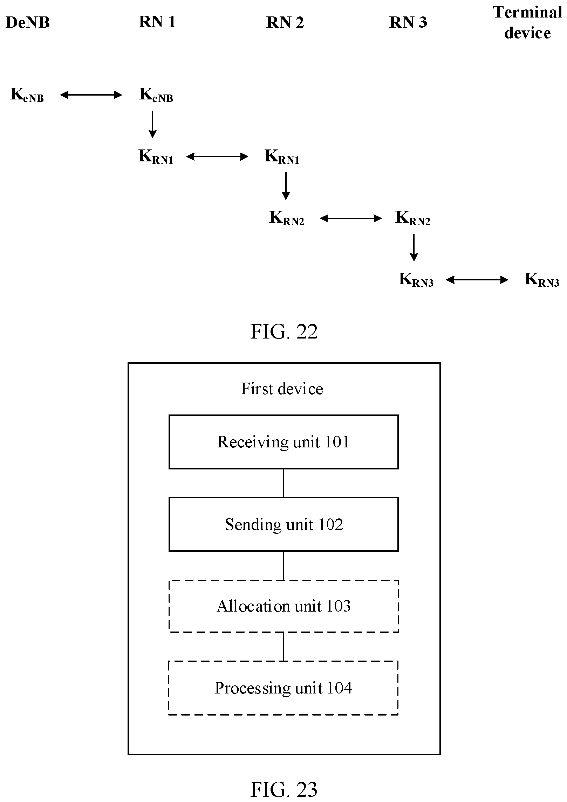

It should be noted that a process of selecting a radio bearer in a process of forwarding data or signaling of the base station to the terminal device between a plurality of hops of relay devices or in a process of forwarding data or signaling of the terminal device to the base station between relay devices is described in the foregoing embodiment. It may be understood that, in an actual process, this embodiment may be separately implemented, in other words, this embodiment may not be implemented after steps S101 to S104, or may not be performed after a process in which the base station configures resource configuration information for a newly accessed relay device by using each accessed relay device, or may not be performed after a process in which the base station pages the terminal device by using each accessed relay device. When a process of selecting a radio bearer by a plurality of hops of relay device is separately implemented, the plurality of relay devices have accessed the base station, and may access the base station in the manner described in steps S101 to S104, or may access the base station in another manner. This is not limited in this application. In the hybrid protocol stack architecture, in other words, when the control plane is L3 and the user plane is L2, signaling encryption on the control plane is between relay devices, and data encryption on the user plane is end-to-end between the base station and the terminal device. Therefore, as shown in FIG. 22, after the RN 3 obtains a KRN 3, the terminal device also derives the KRN 3, and a used encryption algorithm may be directly determined by the RN 3. Therefore, for an architecture in which the control plane is L3, control plane signaling between the RN 3 and the terminal device can be directly encrypted by using the KRN 3. However, for data encryption on the user plane, the base station does not know an encryption algorithm used by the KRN 3 and the RN 3, and therefore cannot perform end-to-end data encryption. Therefore, the following describes how the base station learns an end-to-end encryption key and encryption algorithm on a data plane. Therefore, in a possible implementation, the method provided in this application further includes the following steps.

S123. The first relay device selects an encryption algorithm for the terminal device.

S124. The first relay device sends a sixth message to the base station, and sends an identifier of the encryption algorithm to the terminal device, where the sixth message includes the identifier of the encryption algorithm and a third identifier of the terminal device, and the encryption algorithm is used to encrypt data transmitted between the base station and the terminal device.

The third identifier of the terminal device may be a same identifier as the second identifier of the terminal device, or when the target device is the terminal device, the third identifier may be the same as the first identifier.

Specifically, the first relay device may select one encryption algorithm for the terminal device from a plurality of preconfigured encryption algorithms.

Specifically, the sixth message may be sent by using an RRC message between the first relay device and the base station, or may be sent by using another new message. This is not limited in this application.

Specifically, the encryption key of the first relay device is sent by a core network to the first relay device by using the base station. In this process, the base station may obtain the encryption key of the first relay device through parsing. After the base station obtains the encryption key and the encryption algorithm, end-to-end encryption of data between the base station and the terminal device can be implemented.

In another possible implementation of this application, the method provided in this application further includes the following step.

S125. The first relay device receives fifth indication information and the encryption algorithm that are sent by the base station, where the fifth indication information is used to instruct to send the identifier of the encryption algorithm to the terminal device.

Specifically, the fifth indication information is similar to the indication information in other embodiments of this application, and details are not described herein again.

Specifically, the encryption algorithm may be an identifier of the encryption algorithm, or may be other identification information that can indicate the encryption algorithm. This is not limited in this embodiment of this application.

Specifically, in the L2 architecture, the third indication information may be carried at at least one of an adaptation layer, an RLC layer, a MAC layer, and a PHY layer, and in the L2-L3 hybrid architecture, the third indication information may be carried at at least one of an RRC layer, a PDCP layer, an adaptation layer, an RLC layer, a MAC layer, and a PHY layer. In the hybrid protocol stack architecture, if the third indication information is carried at the adaptation layer, the adaptation layer is added to a control plane architecture in the hybrid protocol stack architecture. Similarly, the adaptation layer is added below a control plane, for example, the PDCP layer, of the L2 architecture.

S 126. The first relay device sends the identifier of the encryption algorithm to the terminal device according to the fifth indication information, where the encryption algorithm is used to encrypt data transmitted between the base station and the terminal device.

Specifically, the encryption key of the first relay device is sent by a core network to the first relay device by using the base station. In this process, the base station may obtain the encryption key of the first relay device through parsing. After the base station obtains the encryption key and the encryption algorithm, end-to-end encryption of data between the base station and the terminal device can be implemented.

In addition, the method provided in this application further includes the following step.

S 127. The first relay device receives a seventh message sent by the base station, where the seventh message includes sixth indication information and an encryption key configured for the second relay device or the terminal device, and the sixth indication information is used to instruct to send the encryption key to the second relay device or the terminal device.

Specifically, the fifth indication information is similar to the indication information in other embodiments of this application, and details are not described herein again in this application.

Specifically, for the L2 architecture, the third indication information may be carried at at least one of an adaptation layer, an RLC layer, a MAC layer, and a PHY layer, and for the L2-L3 hybrid architecture, the third indication information may be carried at at least one of an RRC layer, a PDCP layer, an adaptation layer, an RLC layer, a MAC layer, and a PHY layer. In the hybrid protocol stack architecture, if the third indication information is carried at the adaptation layer, the adaptation layer is added to a control plane architecture in the hybrid protocol stack architecture. Similarly, the adaptation layer is added below a control plane, for example, the PDCP layer, of the L2 architecture.

S 128. When determining that a device indicated by the seventh indication information is not the first relay device, the first relay device sends the encryption key to the second relay device or the terminal device.

It may be understood that when the first relay device forwards the encryption key to the second relay device or the terminal device, the first relay device may forward the encryption key by using a plurality of relay devices between the first relay device and the terminal device, or by using a plurality of relay devices between the first relay device and the second relay device. For a specific forwarding process, refer to the foregoing embodiment. This is not limited in this application.

It may be understood that, in this application, only that the encryption algorithm is selected for the terminal device is used as an example. An implementation process of selecting an encryption algorithm for the next-hop relay setting of the first relay device or another relay device is also applicable to the foregoing process of selecting the encryption algorithm for the terminal device. In this case, all indication information related to the terminal device is replaced with indication information related to the relay device. Details are not described herein in this application.

It should be noted that steps S125 and S126 and steps S123 and S124 are two different implementations in which the first relay device selects the encryption algorithm for the terminal device. It may be understood that, in an actual process, steps S125 and S126 and steps S123 and S124 may be separately implemented, in other words, when steps S125 and S126 and steps S123 and S124 are separately implemented, steps S101 to S104 may be not performed, or may not be performed after a process in which the base station configures resource configuration information for a newly accessed relay device by using each accessed relay device, or may not be performed after a process in which the base station pages the terminal device by using each accessed relay device or a process in which a plurality of hops of relay devices select a radio bearer. When steps S125 and S126 and steps S123 and S124 are separately performed, the terminal device and the plurality of relay devices have accessed the base station, and may access the base station in the manner described in steps S101 to S104, or may access the base station in another manner. This is not limited in this application. This application is described only by using an example in which steps S125 and S126 and steps S123 and S124 are implemented after steps S101 to S104, S101 to S110, or S101 to S121. This does not limit the solutions of this application.

It should be noted that all the implementation scenarios involved in this application, such as a scenario in which the base station enables, by using the first relay device, another relay device to access the base station, a scenario in which the base station allocates a first identifier for an accessed relay device and forwards an RRC radio connection request, a scenario of configurating the resource configuration information, a scenario in which the base station pages the terminal device, a scenario in which the base station selects a radio bearer, and a scenario of an encryption process, may be separately implemented. Certainly, any two or more implementation scenarios in the plurality of implementation scenarios may also be combined. This is not limited in this application.

Scenarios or processes to which the method provided in this application is applicable include but are not limited to the following: a process in which a relay accesses the base station as a terminal device in the L2 architecture and the L2-L3 hybrid protocol stack architecture, a process in which a relay is used as a relay station to forward signaling or data of the base station/terminal device, a radio resource allocation process and a paging process in a multi-hop scenario, and the like.

It should be noted that, in this application, indication information such as the first indication information, the second indication information, and the third indication information may be added to RRC signaling. Because the L2 architecture has an adaptation layer, the foregoing types of indication information may also be added to the adaptation layer. Therefore, when the hybrid protocol stack architecture also has an adaptation layer, the foregoing types of indication information may also be added to the adaptation layer.

The solutions provided in the embodiments of this application are mainly described from a perspective of interaction between network elements. It may be understood that, to implement the foregoing functions, each network element such as a first device includes corresponding hardware structures and/or software modules for performing the functions. A person of ordinary skill in the art should easily be aware that, in combination with the examples described in the embodiments disclosed in this specification, unit and algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the first device based on the foregoing method embodiment. For example, each function module may be divided based on each function, or two or more functions may be integrated in one processing module. The integrated module may be implemented in a form of hardware, or may be implemented in a form of a software functional module. It should be noted that, in this embodiment of this application, module division is an example, and is merely a logical function division. In actual implementation, another division manner may be used. Descriptions are provided below by using an example in which each function module is obtained through division by using corresponding functions.

When an integrated unit is used, FIG. 23 is a possible schematic structural diagram of the first device in the foregoing embodiment. The first device includes a receiving unit 101 and a sending unit 102. The receiving unit 101 is configured to support the first device in performing steps S103, S112, S113, S119, S127, and S129 in the foregoing embodiment. The sending unit 102 is configured to support the first device in performing steps S104, S106, S108, S110, S116, S120, S124, S126, and S128 in the foregoing embodiment. In addition, the first device provided in this application further includes: an allocation unit 103, where the allocation unit 103 is configured to support the first device in performing S103 in the foregoing embodiment, and a processing unit, configured to: determine, according to first indication information, whether the target device in step S104 is the first relay device, perform S115, determine whether there is a candidate device that is in next-hop relay devices of the first relay device and that belongs to the TA, and perform S117 (S1171 and S1172), S122, and S123, and/or another process of the technology described in this specification. All related content of the steps in the foregoing method embodiments may be cited in function descriptions of the corresponding function modules. Details are not described herein again.

Based on implementation performed by using hardware, the receiving unit 101 in this application may be a receiver of the first device, and the sending unit 102 may be a transmitter of the first device. The transmitter may generally be integrated with the receiver of the first device as a transceiver. Specifically, the transceiver may also be referred to as a communications interface. The allocation unit 103 and the processing unit 104 may be integrated into a processor of the first device.

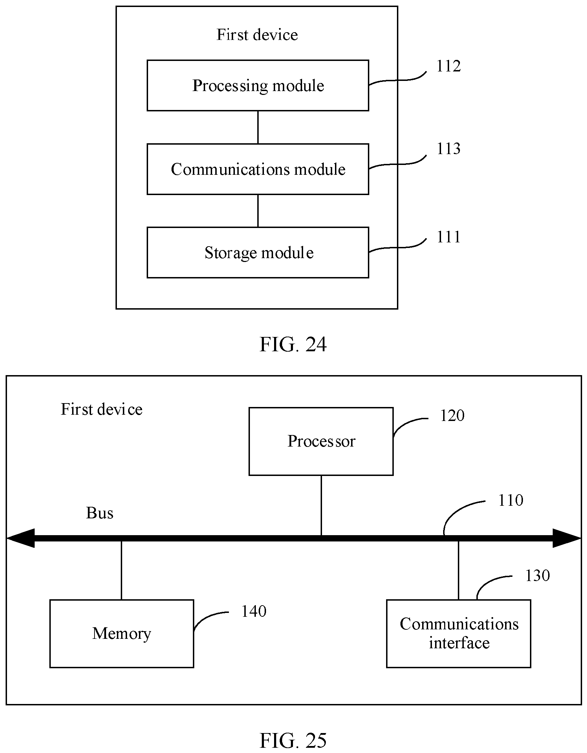

When an integrated unit is used, FIG. 24 is a possible schematic diagram of a logical structure of the first device in the foregoing embodiment. The first device includes a processing module 112 and a communications module 113. The processing module 112 is configured to control and manage actions of the first device. For example, the processing module 112 is configured to support the first device in performing step S103 in the foregoing embodiment, determining, according to the first indication information, whether the target device in step S104 is the first relay device, performing S115, determining whether there is a candidate device that is in next-hop relay devices of the first relay device and that belongs to the TA, and performing S 117 (which may be specifically S1171 and S1172), S122, and S123. The communications module 113 is configured to support the first device in performing S103, S 112, S113, S119, S127, S129, S104, S106, S108, S110, S116, S120, S124, S126, and S128 in the foregoing embodiment, and/or is configured to perform another process performed by the first device in the technology described in this specification. The first device may further include a storage module 111, configured to store program code and data of the first device.

The processing module 112 may be a processor or a controller, for example, the processing module may be a central processing unit, a general-purpose processor, a digital signal processor, an application-specific integrated circuit, a field programmable gate array or another programmable logical device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communications module 113 may be a transceiver, a transceiver circuit, a communications interface, or the like. The storage module 111 may be a memory.

When the processing module 112 is a processor 120, the communication module 113 is a communications interface 130 or a transceiver, and the storage module 111 is a memory 140, the first device in this application may be a device shown in FIG. 25.

The communications interface 130, the processor 120, and the memory 140 are connected to each other by using a bus 110. The bus 110 may be a PCI bus, an EISA bus, or the like. The bus may be classified into an address bus, a data bus, a control bus, and the like. For ease of representation, only one thick line is used to represent the bus in FIG. 25, but this does not mean that there is only one bus or only one type of bus. The memory 140 is configured to store program code and data of the first device. The communications interface 130 is configured to support the first device in communicating with another device (such as, a second relay device, a base station, or a terminal device), and the processor 120 is configured to support the first device in executing the program code and the data stored in the memory 140 to implement the information transmission method provided in this application.

According to still another aspect, a computer readable storage medium is provided. The computer readable storage medium stores an instruction. When the computer readable storage medium runs on a first device, the first device performs step S103 in the embodiment, determines, according to first indication information, whether the target device in step S104 is the first relay device, performs S115, determines whether there is a candidate device that is in next-hop relay devices of the first relay device and that belongs to the TA, and performs S117 (which may be specifically S1171 and S1172), S122, and S123. The communications module 113 is configured to support the first device in performing S103, S112, S113, S119, S127, S129, S104, S106, S108, S110, S116, S120, S124, S126, and S128 in the foregoing embodiment, and/or is configured to perform another process performed by the first device in the technology described in this specification. According to another aspect, a computer program product including an instruction is provided. The computer program product stores the instruction. When the instruction runs on a first device, the first device performs step S103 in the embodiment, determines, according to first indication information, whether the target device in step S104 is the first relay device, performs S115, determines whether there is a candidate device that is in next-hop relay device of the first relay device and that belongs to the TA, and performs S117 (which may be specifically S1171 and S1172), S122, and S123. The communications module 113 is configured to support the first device in performing S103, S112, S113, S119, S127, S129, S104, S106, S108, S110, S116, S120, S124, S126, and S128 in the foregoing embodiment, and/or is configured to perform another process performed by the first device in the technology described in this specification.

In addition, an embodiment of this application provides a communications system, including a base station, at least one user equipment, and at least one first device shown in any one of FIG. 23 to FIG. 25. The base station is configured to perform steps performed by the base station in the foregoing embodiments, for example, sending and receiving related information of the first device and the core network device. The terminal device is configured to perform steps performed by the terminal device in the foregoing embodiments, for example, a related operation of receiving information sent by the first device. The first device is configured to perform steps performed by the first device in the foregoing embodiments.

A person of ordinary skill in the art may be aware that, in combination with the examples described in the embodiments disclosed in this specification, units and algorithm steps may be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method for a multi-hop network architecture, comprising:
receiving (S102,S103), by a first device, a first message that is sent by a base station, wherein the first message comprises first indication information and system information, the first indication information is used to indicate whether the first device broadcasts the system information, and the first device is a first relay node, RN, of the multi-hop network architecture;
broadcasting (S104), by the first device, the system information if the first device determines, according to the first indication information, that the system information needs to be broadcast;
allocating (S105), by the first device, a first identifier of a target device to the target device in a random access process of the target device, wherein the first identifier is used to identify the target device in a cell accessed in the random access process of the target device, and the target device is a device that receives the system information;
sending (S106), by the first device, the first identifier to the base station, and forwarding a second message sent by the target device, wherein the second message is used to request to set up a radio resource control RRC connection between the base station and the target device;
receiving (S111,S112), by the first device, a third message sent by the base station, wherein the third message comprises resource configuration information and second indication information, and the second indication information is used to determine the target device to which the resource configuration information is to be transmitted; and
sending (S113), by the first device, the resource configuration information to the target device if the first device determines, according to the second indication information, that the target device is not the first device, wherein the resource configuration information comprises first resource configuration information and second resource configuration information, wherein the first configuration information is used to configure at least one of a packet data convergence protocol, PDCP, layer and a service data adaptation protocol, SDAP, layer of the target device, and the second configuration information is used to configure at least one of a radio link control, RLC, layer, a media access control, MAC, layer, and a physical, PHY, layer of the target device; wherein
the first resource configuration information is generated by the base station, and the second resource configuration information is generated by the base station or the first device.

2. The information transmission method according to claim 1, wherein the target device is a terminal device, and the method further comprises:
receiving (S114), by the first device, a fourth message sent by the base station, wherein the fourth message is used to instruct to page the terminal device in a tracking area, TA, in a paging occasion, PO; and
if the first device determines that the first device belongs to the TA, paging, by the first device, the terminal device in the TA in the paging occasion PO; or
if the first device determines that there is a candidate device that is in next-hop devices of the first device and that belongs to the TA, sending, by the first device, a fifth message to the candidate device, wherein the fifth message is used to instruct to page the terminal device in the TA in the PO.

3. The information transmission method according to claim 2, wherein
the fourth message carries at least the paging PO; and before the paging, by the first device, the terminal device in the TA in the paging occasion PO, the method further comprises: determining, by the first device, the paging PO from the fourth message; or
the fourth message comprises a second identifier of the terminal device, a discontinuous reception period specific to the terminal device, and a cell-specific discontinuous reception period; and before the paging, by the first device, the terminal device in the TA in the paging occasion PO, the method further comprises: determining, by the first device, the paging PO based on the second identifier, the discontinuous reception period specific to the terminal device, and the cell-specific discontinuous reception period.

4. The information transmission method according to claim 1, wherein the target device is a terminal device, and the method further comprises:
receiving (S118, S119), by the first device, a fourth message sent by the base station, wherein the fourth message comprises a paging PO, a second identifier of the terminal device, and third indication information, and the third indication information is used to instruct to send the paging PO and the second identifier of the terminal device to the target device; and
sending (S120), by the first device, the paging PO and the second identifier of the terminal device to the target device according to the third indication information.

5. The information transmission method according to any one of claims 1 to 4, wherein a signaling radio bearer SRB between the first device and the base station carries fourth indication information, and the fourth indication information is used to indicate whether the system information or the fourth message is transmitted on the SRB in a current transmission time unit.

6. The information transmission method according to any one of claims 1 to 5, wherein the method further comprises:
determining (S122), by the first device, at least one association relationship from the following association relationships: an association relationship between a radio bearer between the first device and the base station and a radio bearer between the first device and the target device, an association relationship between service information and the radio bearer between the first device and the target device, and an association relationship between the service information and the radio bearer between the first device and the base station.

7. The information transmission method according to claim 6, wherein the at least one association relationship is generated by the base station and then sent to the first device, or the at least one association relationship is generated by a previous-hop relay device of the first device and then sent to the first device.

8. The information transmission method according to any one of claims 1 to 7, wherein the target device is a terminal device, and the method further comprises:
selecting (S123), by the first device, an encryption algorithm for the target device; and
sending (S124), by the first device, a sixth message to the base station, and sending an identifier of the encryption algorithm to the target device, wherein the sixth message comprises the identifier of the encryption algorithm and a third identifier of the target device, and the encryption algorithm is used to encrypt data transmitted between the base station and the target device.

9. The information transmission method according to any one of claims 1 to 7, wherein the target device is a terminal device, and the method further comprises:
receiving (S125), by the first device, fifth indication information and an encryption algorithm that are sent by the base station, wherein the fifth indication information is to instruct to send an identifier of the encryption algorithm to the target device; and
sending (S126), by the first device, the identifier of the encryption algorithm to the target device according to the fifth indication information, wherein the encryption algorithm is used to encrypt data transmitted between the base station and the target device.

10. An first device, which is configured to perform the method according to any one of claims 1 to 9.

11. A computer-readable storage medium, wherein the computer-readable storage medium stores an instruction; and when the instruction is executed by a processor of the first device, causes the first device to perform information transmission method according to any one of claims 1 to 9.

## Patentansprüche

1. Informationsübertragungsverfahren für eine Multi-Hop-Netzwerkarchitektur, umfassend:
Empfangen (S102, S103) einer durch eine Basisstation gesendeten ersten Nachricht durch eine erste Vorrichtung, wobei die erste Nachricht erste Angabeinformationen und Systeminformationen umfasst, die ersten Angabeinformationen dazu verwendet werden, anzugeben, ob die erste Vorrichtung die Systeminformationen rundsendet, und die erste Vorrichtung ein erster Weiterleitungsknoten, RN, der Multi-Hop-Netzwerkarchitektur ist;
Rundsenden (S104) der Systeminformationen durch die erste Vorrichtung, wenn die erste Vorrichtung gemäß den ersten Angabeinformationen bestimmt, dass die Systeminformationen rundgesendet werden müssen;
Zuordnen (S105) einer ersten Kennung einer Zielvorrichtung durch die erste Vorrichtung an die Zielvorrichtung in einem Direktzugriffsprozess der Zielvorrichtung, wobei die erste Kennung dazu verwendet wird, die Zielvorrichtung in einer Zelle zu identifizieren, auf die in dem Direktzugriffsprozess der Zielvorrichtung zugegriffen wird, und die Zielvorrichtung eine Vorrichtung ist, die die Systeminformationen empfängt;
Senden (S106) der ersten Kennung durch die erste Vorrichtung an die Basisstation und Weiterleiten einer durch die Zielvorrichtung gesendeten zweiten Nachricht, wobei die zweite Nachricht dazu verwendet wird, den Aufbau einer Funkressourcensteuerungs-, RRC-, Verbindung zwischen der Basisstation und der Zielvorrichtung anzufordern;
Empfangen (S111, S112) einer durch die Basisstation gesendeten dritten Nachricht durch die erste Vorrichtung, wobei die dritte Nachricht Ressourcenkonfigurationsinformationen und zweite Angabeinformationen umfasst und die zweiten Angabeinformationen dazu verwendet werden, die Zielvorrichtung zu bestimmen, an die die Ressourcenkonfigurationsinformationen zu übertragen sind; und
Senden (S113) der Ressourcenkonfigurationsinformationen durch die erste Vorrichtung an die Zielvorrichtung, wenn die erste Vorrichtung gemäß den zweiten Angabeinformationen bestimmt, dass die Zielvorrichtung nicht die erste Vorrichtung ist, wobei die Ressourcenkonfigurationsinformationen erste Ressourcenkonfigurationsinformationen und zweite Ressourcenkonfigurationsinformationen umfassen, wobei die ersten Konfigurationsinformationen dazu verwendet werden, mindestens eine von einer Paketdatenkonvergenzprotokoll-, PDCP-, Schicht und einer Dienstdatenanpassungsprotokoll-, SDAP-, Schicht der Zielvorrichtung zu konfigurieren, und die zweiten Konfigurationsinformationen dazu verwendet werden, mindestens eine von einer Funkverbindungssteuerungs-, RLC-, Schicht, einer Medienzugriffssteuerungs-, MAC-, Schicht und einer physikalischen, PHY-, Schicht der Zielvorrichtung zu konfigurieren; wobei
die ersten Ressourcenkonfigurationsinformationen durch die Basisstation erzeugt und die zweiten Ressourcenkonfigurationsinformationen durch die Basisstation oder die erste Vorrichtung erzeugt werden.

2. Informationsübertragungsverfahren gemäß Anspruch 1, wobei die Zielvorrichtung eine Endgerätevorrichtung ist und das Verfahren ferner umfasst:
Empfangen (S114) einer durch die Basisstation gesendeten vierten Nachricht durch die erste Vorrichtung, wobei die vierte Nachricht dazu verwendet wird, die Endgerätevorrichtung in einem Verfolgungsbereich, TA, in einer Funkrufgelegenheit, PO, anzurufen; und
wenn die erste Vorrichtung bestimmt, dass die erste Vorrichtung zu dem TA gehört, Anrufen der Endgerätevorrichtung in dem TA in der Funkrufgelegenheit, PO, durch die erste Vorrichtung; oder
wenn die erste Vorrichtung bestimmt, dass eine Kandidatenvorrichtung vorhanden ist, die sich in Next-Hop-Vorrichtungen der ersten Vorrichtung befindet und zu dem TA gehört, Senden einer fünften Nachricht durch die erste Vorrichtung an die Kandidatenvorrichtung, wobei die fünfte Nachricht dazu verwendet wird, anzuweisen, die Endgerätevorrichtung in dem TA in der PO anzurufen.

3. Informationsübertragungsverfahren gemäß Anspruch 2, wobei
die vierte Nachricht mindestens die Funkrufgelegenheit, PO, trägt; und vor dem Anrufen der Endgerätevorrichtung in dem TA in der Funkrufgelegenheit, PO, durch die erste Vorrichtung das Verfahren ferner umfasst: Bestimmen der Funkrufgelegenheit, PO, aus der vierten Nachricht durch die erste Vorrichtung; oder die vierte Nachricht eine zweite Kennung der Endgerätevorrichtung, eine für die Endgerätevorrichtung spezifische diskontinuierliche Empfangszeitspanne und eine zellenspezifische diskontinuierliche Empfangszeitspanne umfasst; und vor dem Anrufen der Endgerätevorrichtung in dem TA in der Funkrufgelegenheit, PO, durch die erste Vorrichtung das Verfahren ferner umfasst: Bestimmen der Funkrufgelegenheit, PO, durch die erste Vorrichtung basierend auf der zweiten Kennung, der für die Endgerätevorrichtung spezifischen diskontinuierlichen Empfangszeitspanne und der zellenspezifischen diskontinuierlichen Empfangszeitspanne.

4. Informationsübertragungsverfahren gemäß Anspruch 1, wobei die Zielvorrichtung eine Endgerätevorrichtung ist und das Verfahren ferner umfasst:
Empfangen (S118, S119) einer durch die Basisstation gesendeten vierten Nachricht durch die erste Vorrichtung, wobei die vierte Nachricht eine Funkrufgelegenheit, PO,
eine zweite Kennung der Endgerätevorrichtung und dritte Angabeinformationen umfasst und die dritten Angabeinformationen dazu verwendet werden, anzuweisen, die Funkrufgelegenheit, PO, und die zweite Kennung der Endgerätevorrichtung an die Zielvorrichtung zu senden; und
Senden (S120) der Funkrufgelegenheit, PO, und der zweiten Kennung der Endgerätevorrichtung durch die erste Vorrichtung an die Zielvorrichtung gemäß den dritten Angabeinformationen.

5. Informationsübertragungsverfahren gemäß einem der Ansprüche 1 bis 4, wobei ein Signalisierungsfunkträger, SRB, zwischen der ersten Vorrichtung und der Basisstation vierte Angabeinformationen trägt und die vierten Angabeinformationen dazu verwendet werden, anzugeben, ob die Systeminformationen oder die vierte Nachricht auf dem SRB in einer aktuellen Übertragungszeiteinheit übertragen werden.

6. Informationsübertragungsverfahren gemäß einem der Ansprüche 1 bis 5, wobei das Verfahren ferner umfasst:
Bestimmen (S122), durch die erste Vorrichtung, mindestens einer Zuordnungsbeziehung aus den folgenden Zuordnungsbeziehungen: einer Zuordnungsbeziehung zwischen einem Funkträger zwischen der ersten Vorrichtung und der Basisstation und einem Funkträger zwischen der ersten Vorrichtung und der Zielvorrichtung, einer Zuordnungsbeziehung zwischen Dienstinformationen und dem Funkträger zwischen der ersten Vorrichtung und der Zielvorrichtung, und einer Zuordnungsbeziehung zwischen den Dienstinformationen und dem Funkträger zwischen der ersten Vorrichtung und der Basisstation.

7. Informationsübertragungsverfahren gemäß Anspruch 6, wobei die mindestens eine Zuordnungsbeziehung durch die Basisstation erzeugt und dann an die erste Vorrichtung gesendet wird, oder die mindestens eine Zuordnungsbeziehung durch eine der ersten Vorrichtung vorgelagerte Weiterleitungsvorrichtung erzeugt und dann an die erste Vorrichtung gesendet wird.

8. Informationsübertragungsverfahren gemäß einem der Ansprüche 1 bis 7, wobei die Zielvorrichtung eine Endgerätevorrichtung ist und das Verfahren ferner umfasst:
Auswählen (S123) eines Verschlüsselungsalgorithmus für die Zielvorrichtung durch die erste Vorrichtung; und
Senden (S124) einer sechsten Nachricht an die Basisstation durch die erste Vorrichtung und Senden einer Kennung des Verschlüsselungsalgorithmus an die Zielvorrichtung, wobei die sechste Nachricht die Kennung des Verschlüsselungsalgorithmus und eine dritte Kennung der Zielvorrichtung umfasst und der Verschlüsselungsalgorithmus zum Verschlüsseln von zwischen der Basisstation und der Zielvorrichtung übertragenen Daten verwendet wird.

9. Informationsübertragungsverfahren gemäß einem der Ansprüche 1 bis 7, wobei die Zielvorrichtung eine Endgerätevorrichtung ist und das Verfahren ferner umfasst:
Empfangen (S125) von fünften Angabeinformationen und eines Verschlüsselungsalgorithmus, die durch die Basisstation gesendet werden, durch die erste Vorrichtung, wobei die fünften Angabeinformationen dazu verwendet werden, anzuweisen, eine Kennung des Verschlüsselungsalgorithmus an die Zielvorrichtung zu senden; und
Senden (S126) der Kennung des Verschlüsselungsalgorithmus durch die erste Vorrichtung an die Zielvorrichtung gemäß den fünften Angabeinformationen, wobei der Verschlüsselungsalgorithmus zum Verschlüsseln von zwischen der Basisstation und der Zielvorrichtung übertragenen Daten verwendet wird.

10. Erste Vorrichtung, die dazu konfiguriert ist, das Verfahren gemäß einem der Ansprüche 1 bis 9 durchzuführen.

11. Computerlesbares Speichermedium, wobei das computerlesbare Speichermedium eine Anweisung speichert; und wenn die Anweisung durch einen Prozessor der ersten Vorrichtung ausgeführt wird, die erste Vorrichtung veranlasst, das Informationsübertragungsverfahren gemäß einem der Ansprüche 1 bis 9 durchzuführen.

## Revendications

1. Procédé de transmission d'informations pour une architecture de réseau à sauts multiples, comprenant :
la réception (S102, S103), par un premier dispositif, d'un premier message qui est envoyé par une station de base, dans lequel le premier message comprend des premières informations d'indication et des informations de système, les premières informations d'indication sont utilisées pour indiquer si le premier dispositif diffuse les informations de système, et le premier dispositif est un premier noeud relais, RN, de l'architecture de réseau à sauts multiples ;
la diffusion (S104), par le premier dispositif, des informations de système si le premier dispositif détermine, selon les premières informations d'indication, que les informations de système doivent être diffusées ;
l'attribution (S105), par le premier dispositif, d'un premier identifiant d'un dispositif cible au dispositif cible dans un processus d'accès aléatoire du dispositif cible, dans lequel le premier identifiant est utilisé pour identifier le dispositif cible dans une cellule à laquelle l'accès est obtenu dans le processus d'accès aléatoire du dispositif cible, et le dispositif cible est un dispositif qui reçoit les informations de système ;
l'envoi (S106), par le premier dispositif, du premier identifiant, à la station de base, et le réacheminement d'un deuxième message envoyé par le dispositif cible, dans lequel le deuxième message est utilisé pour demander d'établir une connexion de contrôle de ressource radio, RRC, entre la station de base et le dispositif cible ;
la réception (5111, 5112), par le premier dispositif, d'un troisième message envoyé par la station de base, dans lequel le troisième message comprend des informations de configuration de ressource et des deuxièmes informations d'indication, et les deuxièmes informations d'indication sont utilisées pour déterminer le dispositif cible auquel les informations de configuration de ressource doivent être transmises ; et
l'envoi (S113), par le premier dispositif, des informations de configuration de ressource au dispositif cible si le premier dispositif détermine, selon les deuxièmes informations d'indication, que le dispositif cible n'est pas le premier dispositif, dans lequel les informations de configuration de ressource comprennent des premières informations de configuration de ressource et des secondes informations de configuration de ressource, dans lequel les premières informations de configuration sont utilisées pour configurer au moins une d'une couche de protocole de convergence de données par paquets, PDCP, et d'une couche de protocole d'adaptation de données de service, SDAP, du dispositif cible, et les secondes informations de configuration sont utilisées pour configurer au moins une d'une couche de contrôle de liaison radio, RLC, d'une couche de contrôle d'accès au support, MAC, et d'une couche physique, PHY, du dispositif cible ; dans lequel
les premières informations de configuration de ressource sont générées par la station de base, et les secondes informations de configuration de ressource sont générées par la station de base ou le premier dispositif.

2. Procédé de transmission d'informations selon la revendication 1, dans lequel le dispositif cible est un dispositif de terminal, et le procédé comprend en outre :
la réception (S114), par le premier dispositif, d'un quatrième message envoyé par la station de base, dans lequel le quatrième message est utilisé pour donner l'instruction d'envoyer un appel de radiomessagerie au dispositif de terminal dans une zone de suivi, TA, dans une occasion de radiomessagerie, PO ; et
si le premier dispositif détermine que le premier dispositif appartient à la TA, la radiomessagerie, par le premier dispositif, du dispositif de terminal dans la TA dans l'occasion de radiomessagerie PO ; ou
si le premier dispositif détermine qu'il y a un dispositif candidat qui est dans des dispositifs de saut suivant du premier dispositif et qui appartient à la TA, l'envoi, par le premier dispositif, d'un cinquième message, au dispositif candidat, dans lequel le cinquième message est utilisé pour donner l'instruction d'envoyer un appel de radiomessagerie au dispositif de terminal dans la TA dans la PO.

3. Procédé de transmission d'informations selon la revendication 2, dans lequel
le quatrième message porte au moins la PO de radiomessagerie ; et avant la radiomessagerie, par le premier dispositif, le dispositif de terminal dans la TA dans l'occasion de radiomessagerie PO, le procédé comprend en outre : la détermination, par le premier dispositif, de la PO de radiomessagerie à partir du quatrième message ; ou
le quatrième message comprend un deuxième identifiant du dispositif de terminal, une période de réception discontinue spécifique au dispositif de terminal, et une période de réception discontinue spécifique de cellule ; et avant la radiomessagerie, par le premier dispositif, du dispositif de terminal dans la TA dans l'occasion de radiomessagerie PO, le procédé comprend en outre : la détermination, par le premier dispositif, de la PO de radiomessagerie sur la base du deuxième identifiant, de la période de réception discontinue spécifique au dispositif de terminal, et de la période de réception discontinue spécifique de cellule.

4. Procédé de transmission d'informations selon la revendication 1, dans lequel le dispositif cible est un dispositif de terminal, et le procédé comprend en outre :
la réception (S118, S119), par le premier dispositif, d'un quatrième message envoyé par la station de base, dans lequel le quatrième message comprend une PO de radiomessagerie, un deuxième identifiant du dispositif de terminal, et des troisièmes informations d'indication, et les troisièmes informations d'indication sont utilisées pour donner l'instruction d'envoyer la PO de radiomessagerie et le deuxième identifiant du dispositif de terminal au dispositif cible ; et
l'envoi (S120), par le premier dispositif, de la PO de radiomessagerie et du deuxième identifiant du dispositif de terminal au dispositif cible selon les troisièmes informations d'indication.

5. Procédé de transmission d'informations selon l'une quelconque des revendications 1 à 4, dans lequel une porteuse radio de signalisation, SRB, entre le premier dispositif et la station de base porte des quatrièmes informations d'indication, et les quatrièmes informations d'indication sont utilisées pour indiquer si les informations de système ou le quatrième message sont transmis sur la SRB dans une unité de temps de transmission actuelle.

6. Procédé de transmission d'informations selon l'une quelconque des revendications 1 à 5, dans lequel le procédé comprend en outre :
la détermination (S122), par le premier dispositif, d'au moins une relation d'association à partir des relations d'association suivantes : une relation d'association entre une porteuse radio entre le premier dispositif et la station de base et une porteuse radio entre le premier dispositif et le dispositif cible, une relation d'association entre des informations de service et la porteuse radio entre le premier dispositif et le dispositif cible, et une relation d'association entre les informations de service et la porteuse radio entre le premier dispositif et la station de base.

7. Procédé de transmission d'informations selon la revendication 6, dans lequel l'au moins une relation d'association est générée par la station de base et puis envoyée au premier dispositif, ou l'au moins une relation d'association est générée par un dispositif relais de saut précédent du premier dispositif et puis envoyée au premier dispositif.

8. Procédé de transmission d'informations selon l'une quelconque des revendications 1 à 7, dans lequel le dispositif cible est un dispositif de terminal, et le procédé comprend en outre :
la sélection (S123), par le premier dispositif, d'un algorithme de chiffrement pour le dispositif cible ; et
l'envoi (S124), par le premier dispositif, d'un sixième message à la station de base, et l'envoi d'un identifiant de l'algorithme de chiffrement au dispositif cible, dans lequel le sixième message comprend l'identifiant de l'algorithme de chiffrement et un troisième identifiant du dispositif cible, et l'algorithme de chiffrement est utilisé pour chiffrer des données transmises entre la station de base et le dispositif cible.

9. Procédé de transmission d'informations selon l'une quelconque des revendications 1 à 7, dans lequel le dispositif cible est un dispositif de terminal, et le procédé comprend en outre :
la réception (S125), par le premier dispositif, de cinquièmes informations d'indication et d'un algorithme de chiffrement qui sont envoyés par la station de base, dans lequel les cinquièmes informations d'indication sont destinées à donner l'instruction d'envoyer un identifiant de l'algorithme de chiffrement au dispositif cible ; et
l'envoi (S126), par le premier dispositif, de l'identifiant de l'algorithme de chiffrement au dispositif cible selon les cinquième informations d'indication, dans lequel l'algorithme de chiffrement est utilisé pour chiffrer des données transmises entre la station de base et le dispositif cible.

10. Premier dispositif, qui est configuré pour réaliser le procédé selon l'une quelconque des revendications 1 à 9.

11. Support de stockage lisible par ordinateur, dans lequel le support de stockage lisible par ordinateur stocke une instruction ; et, lorsque l'instruction est exécutée par un processeur du premier dispositif, elle fait en sorte que le premier dispositif réalise le procédé de transmission d'informations selon l'une quelconque des revendications 1 à 9.
